# EUROPEAN PATENT APPLICATION

(11) **EP 4 657 236 A1**
(43) Date of publication of application: **03.12.2025**
(21) Application number: 24774108.5
(22) Date of filing: 19.03.2024
(51) Int. Cl.: G06F 3/14

(54) **SCREEN SPLITTING METHOD AND RELATED APPARATUS**

(30) Priority: 21.03.2023 CN 202310312187
(71) Applicant: Huawei Technologies Co., Ltd., Shenzhen, Guangdong 518129 (CN)
(72) Inventor: ZHANG, Yanan, Shenzhen, Guangdong 518129 (CN); LI, Wei, Shenzhen, Guangdong 518129 (CN); ZHANG, Wei, Shenzhen, Guangdong 518129 (CN); LIU, Wenang, Shenzhen, Guangdong 518129 (CN)
(74) Representative: Gill Jennings & Every LLP
(86) International application number: PCT/CN2024/082456
(87) International publication number: WO 2024/193543

(57) **Abstract**

This application discloses a screen splitting method and a related apparatus. After receiving a screen splitting operation of a user for a first application, an electronic device determines a to-be-executed split-screen mode based on a display form of a core element on an interface of the first application and/or a device form, displays an icon or the interface of the first application in a first area, and displays one or more application icons (including an icon of a second application) in a second area. The electronic device receives an operation of the user for the icon of the second application, and in response to the operation, splits a display into a third area and a fourth area based on the to-be-executed split-screen mode, displays the interface of the first application in the third area, and displays an interface of the second application in the fourth area. In this way, the electronic device may select, based on a display form of a core element on an interface during triggering of screen splitting, a split-screen mode corresponding to the device form or the display interface, to display interfaces of two or more applications in a split-screen manner. This improves screen splitting efficiency.

## Description

This application claims priority to Chinese Patent Application No. 202310312187.8, filed with the China National Intellectual Property Administration on March 21, 2023 and entitled "SCREEN SPLITTING METHOD AND RELATED APPARATUS", which is incorporated herein by reference in its entirety.

### TECHNICAL FIELD

This application relates to the field of electronic technologies, and in particular, to a screen splitting method and a related apparatus.

### BACKGROUND

With continuous development of electronic technologies, electronic devices are more closely related to daily life. When using an electronic device, a user often requires a display to simultaneously display interfaces of a plurality of applications in a split-screen manner, so that the user simultaneously uses different services provided by the plurality of applications.

When the user requires the display to simultaneously display the interfaces of the plurality of applications, the user needs to first trigger screen splitting, and then select a required split-screen mode. Then, the user further needs to select the plurality of applications that need to be displayed in the split-screen manner, so that the interfaces of the plurality of applications can be simultaneously displayed on the display. As a result, operation steps of the user are complex and efficiency is low.

Although the interfaces of the plurality of applications can be displayed in the split-screen manner in the foregoing manner, the operation steps of the user are complex and the efficiency is low.

### SUMMARY

This application provides a screen splitting method and a related apparatus, so that interfaces of a plurality of applications can be displayed in a split-screen manner in a matched split-screen mode based on a display form of a core element on an interface, to simplify an operation step and implement matching between a split-screen mode and a scenario.

According to a first aspect, this application provides a screen splitting method, applied to an electronic device. The method includes: displaying a first interface of a first application; receiving a first operation of a user for the first interface; in response to the first operation, displaying information about the first application in a first area of a display, and displaying icons of a plurality of applications in a second area of the display, where the icons of the plurality of applications include an icon of a second application, and the information about the first application includes any one or more of the following: the first interface, a partial picture of the first interface, an icon of the first application, and a name of the first application; receiving a second operation of the user for the icon of the second application; and in response to the second operation, displaying a second interface of the first application in a third area of the display, and display a third interface of the second application in a fourth area of the display. If the first interface includes a first element, and a display form of the first element is horizontal display, the third area and the fourth area are arranged on the display in a top-down manner. The first element includes any one or more of the following: a video, a game, a conference, a slide, image shooting (for example, a viewfinder frame on an image shooting interface), a video call (for example, a video display window in a video call interface).

In this way, when a core element is displayed, and a display form of the core element is the horizontal display, the electronic device 100 may quickly display an interface of the first application and an interface of the second application in an up-down split-screen mode. This not only improves screen splitting efficiency, but also may use an appropriate split-screen mode based on the display form of the core element.

In a possible implementation, when a display interface does not include the first element, content in the first area and content in the second area may be displayed in a default manner of a system, and/or content in the third area and content in the fourth area may be displayed in a default manner. In another possible implementation, regardless of whether a display interface includes the first element, content in the first area and content in the second area are displayed based on a device form of the electronic device, and/or content in the third area and content in the fourth area are displayed based on the device form of the electronic device.

In a possible implementation, a basis for determining that the display form of the first element is the horizontal display is any one of the following: an aspect ratio (a ratio of a horizontal length to a vertical length) of the first element is greater than a preset value, the first application is an application in a plurality of preset applications (which may also be referred to as a "first list"), black borders or blank areas are displayed on an upper side and a lower side of the first element, or the first interface invokes a landscape interface for display.

In a possible implementation, the method further includes: if the first interface includes the first element, and the display form of the first element is the horizontal display, the first area is located on an upper part or a lower part of the display.

In a possible implementation, the method further includes: if the first interface includes the first element, and the display form of the first element is the horizontal display, displaying an up-down split-screen mode control on the display in response to the first operation.

In a possible implementation, the method further includes: if the first interface includes the first element, and the display form of the first element is the horizontal display, displaying an application small window on the display in response to the first operation, where the first interface is displayed in the application small window, and the application small window moves along a track of the first operation on the display.

In a possible implementation, the method further includes: when it is detected that a distance between the application small window and the up-down split-screen mode control is less than a preset distance, displaying a split-screen touch target in a fifth area of the display, where the fifth area is an upper-half area of the display.

In this way, that a to-be-executed split-screen mode is the up-down split-screen mode may be indicated to the user by displaying the up-down split-screen mode control. Alternatively, a to-be-executed split-screen mode may be indicated to the user by using a display location of the split-screen touch target.

In a possible implementation, the method further includes: if the first interface includes the first element, and the display form of the first element is the vertical display, the third area and the fourth area are horizontally arranged on the display.

In a possible implementation, the method further includes: determining the display form of the first element included in the first interface, and displaying the third area and the fourth area based on the display form. Specifically, when the display form of the first element is the vertical display, the third area and the fourth area are horizontally arranged on the display. When the display form of the first element is the horizontal display, the third area and the fourth area are vertically arranged on the display.

In this way, when the core element is displayed, and the display form of the core element is the vertical display, the electronic device 100 may quickly display the interface of the first application and the interface of the second application in a left-right split-screen mode. This not only improves screen splitting efficiency, but also may use an appropriate split-screen mode based on the display form of the core element.

In a possible implementation, a determining basis for determining that the display form of the first element is the vertical display is any one of the following: the aspect ratio (the ratio of the horizontal length to the vertical length) of the first element is less than the preset value, the first application is an application in a plurality of preset applications (which may also be referred to as a "second list"), black borders or blank areas are displayed on a left side and a right side of the first element, or the first interface invokes a portrait interface for display.

In a possible implementation, the method further includes: if the first interface includes the first element, and the display form of the first element is the vertical display, the first area is located on a left part or a right part of the display.

In a possible implementation, the method further includes: if the first interface includes the first element, and the display form of the first element is the vertical display, displaying a left-right split-screen mode control on the display in response to the first operation.

In a possible implementation, the method further includes: if the first interface includes the first element, and the display form of the first element is the vertical display, displaying an application small window on the display in response to the first operation, where the first interface is displayed in the application small window, and the application small window moves along the track of the first operation on the display.

In a possible implementation, the method further includes: when it is detected that a distance between the application small window and the left-right split-screen mode control is less than the preset distance, displaying a split-screen touch target in a sixth area of the display, where the sixth area is a left-half area of the display.

In this way, that the to-be-executed split-screen mode is the left-right split-screen mode may be indicated to the user by displaying the left-right split-screen mode control. Alternatively, the to-be-executed split-screen mode may be indicated to the user by using a display location of the split-screen touch target.

In a possible implementation, the method further includes: if the third area and the fourth area are vertically arranged on the display, the first application is an interactive application, and the second application is a browsing application, the third area and the fourth area are vertically arranged on the display, and the third area is below the fourth area.

In a possible implementation, the method further includes: if the third area and the fourth area are vertically arranged on the display, the first application is a browsing application, and the second application is an interactive application, the third area and the fourth area are vertically arranged on the display, and the third area is above the fourth area.

In a possible implementation, the method further includes: if the third area and the fourth area are vertically arranged on the display, and a type of the first application is the same as a type of the second application, the third area and the fourth area are vertically arranged on the display, and the third area is above the fourth area.

In this way, display locations of interfaces of different applications during split-screen display may be determined based on the type of the first application and the type of the second application. A type of an application may be determined based on a quantity of times of interaction between the user and the application in unit time.

In a possible implementation, the method further includes: if the first area is located on the upper part or the lower part of the display, and the second application does not support up-down screen splitting, the third area and the fourth area are horizontally arranged on the display.

In a possible implementation, the method further includes: if the first area is located on the upper part or the lower part of the display, and the second application does not support up-down screen splitting, the third area is an entire area of the display, and the fourth area is an area in which a floating window is located.

In a possible implementation, the method further includes: if the first area is located on the left part or the right part of the display, and the second application does not support left-right screen splitting, the third area and the fourth area are vertically arranged on the display.

In a possible implementation, the method further includes: if the first area is located on the left part or the right part of the display, and the second application does not support left-right screen splitting, the third area is the entire area of the display, and the fourth area is the area in which the floating window is located.

In this way, when the second application does not support the to-be-executed split-screen mode, the split-screen mode may be further re-determined.

In a possible implementation, the second interface is the same as the first interface.

In a possible implementation, the method further includes: if the first element on the first interface is not displayed in a full-screen mode, displaying the first element on the second interface in the third area in the full-screen mode.

Alternatively, the second interface may be different from the first interface. For example, when the first element on the first interface is not displayed on the first interface in a full-screen mode, after the screen splitting operation, the first element may alternatively be displayed on the second interface, and the first element is displayed on the second interface in the full-screen mode. The full-screen mode of the first element means that the first element occupies an entire area of one of split-screen windows, or may be understood as that the first element is displayed in a maximum display size in an area that can be occupied by the first element. For example, after screen splitting, a video playing window occupies an entire area of one of the split-screen windows in the split-screen mode, or it may be understood that after screen splitting, a video playing window is displayed in a maximum display size in one of the split-screen windows. For details about other elements such as a PPT, a conference, and a video call, refer to that of the video. In a possible implementation, the maximum display size of the first element on the second interface may be a size of the third area. For example, when the third area corresponding to the second interface is the entire area of the display, the maximum display size of the first element on the second interface may be a size of the display. When the third area corresponding to the second interface is the upper-half area of the display, the maximum display size of the first element on the second interface may be a size of the upper-half area. In another possible implementation, if an aspect ratio of the first element on the first interface and an aspect ratio of the first element on the second interface need to remain unchanged, on the second interface, the maximum display size of the first element may be that a horizontal edge is the same as a horizontal edge of the third area, and a vertical edge is slightly less than a vertical edge of the third area, or a vertical edge is the same as a vertical edge of the third area, and a horizontal edge is slightly less than a horizontal edge of the third area. In this case, black borders or blank areas may be displayed on an upper side and a lower side (or a left side and a right side) of the first element in the third area.

In a possible implementation, after displaying the second interface in the third area of the display, the method further includes: displaying a home screen in response to a third operation of the user, and displaying a first combination icon on the home screen; and in response to a fourth operation for the first combination icon, displaying a fourth interface of the first application in the third area of the display, and displaying a fifth interface of the second application in the fourth area of the display.

In this way, a split-screen interface of the first application and the second application may be quickly displayed by creating the combination icon.

In a possible implementation, the fourth interface is the same as the second interface, and the fifth interface is the same as the third interface.

In a possible implementation, the fourth interface is different from the second interface, and/or the fifth interface is different from the third interface.

In a possible implementation, after displaying the second interface of the first application in the third area of the display, the method further includes: when the device form of the electronic device changes from a first form to a second form, displaying the second interface in a seventh area of the display, and displaying the third interface in an eighth area of the display.

The device form of the electronic device may include one or more of a landscape form, a portrait form, and a folded form.

In a possible implementation, the method further includes: if the first device form is the landscape form, and the second device form is the portrait form, a location relationship between the third area and the fourth area of the display is the same as a location relationship between the seventh area and the eighth area of the display.

In a possible implementation, the method further includes: if the second device form is the folded form, a location relationship between the third area and the fourth area of the display is different from a location relationship between the seventh area and the eighth area of the display.

In a possible implementation, the method further includes: if the second device form is the folded form, the seventh area is the entire area of the display, and the eighth area is the area that is on the display and in which the floating window is located.

In this way, after the device form changes, a split-screen area may be re-determined based on a changed device form.

According to a second aspect, this application provides another screen splitting method, applied to an electronic device. The method includes: displaying a first interface of a first application in a first device form; receiving a first operation of a user for the first interface; in response to the first operation, displaying information about the first application in a first area of a display, and displaying icons of a plurality of applications in a second area of the display, where the icons of the plurality of applications include an icon of a second application, and the information about the first application includes any one or more of the following: the first interface, a partial picture of the first interface, an icon of the first application, and a name of the first application; receiving a second operation of the user for the icon of the second application; and in response to the second operation, displaying a second interface of the first application in a third area of the display, and display a third interface of the second application in a fourth area of the display. If the first device form is a landscape form, the third area and the fourth area are vertically arranged on the display.

In a possible implementation, the method further includes: if the first device form is a portrait form, the third area and the fourth area are horizontally arranged on the display.

In a possible implementation, the method further includes: if the first device form is a folded form, the third area and the fourth area are horizontally arranged on the display.

In a possible implementation, the method further includes: if the first device form is a folded form, the third area and the fourth area are vertically arranged on the display.

In a possible implementation, the method further includes: if the first device form is a folded form, and the electronic device in the first device form does not support up-down screen splitting or left-right screen splitting, the third area is an entire area of the display, and the fourth area is an area in which a floating window is located.

In this way, an interface of the first application and an interface of the second application may be displayed based on the device form by using a split-screen mode that matches the device form.

In a possible implementation, the method in the second aspect may be combined with any one of the possible implementations of the first aspect.

According to a third aspect, this application provides an electronic device, including one or more processors, one or more displays, and one or more memories. The one or more memories are coupled to the one or more processors. The one or more memories are configured to store computer program code, and the computer program code includes computer instructions. When the one or more processors execute the computer instructions, the electronic device is enabled to perform the screen splitting method according to any one of the possible implementations of the foregoing aspects.

In a possible implementation, the electronic device may be an electronic device having a curved screen, a foldable screen, or a scroll screen.

According to a fourth aspect, an embodiment of this application provides a computer storage medium, including computer instructions. When the computer instructions are run on an electronic device, a communication apparatus is enabled to perform the screen splitting method according to any one of the possible implementations of the foregoing aspects.

According to a fifth aspect, an embodiment of this application provides a computer program product (or referred to as a computer program). When the computer program product is run on a computer, the computer is enabled to perform the screen splitting method according to any one of the possible implementations of the foregoing aspects.

For beneficial effect of the third aspect to the fifth aspect, refer to the beneficial effect of the first aspect and the second aspect.

### BRIEF DESCRIPTION OF DRAWINGS

FIG. 1A is a diagram of a structure of an electronic device 100 according to an embodiment of this application;
FIG. 1B to FIG. 1F are diagrams of device forms according to an embodiment of this application;
FIG. 1G is a diagram of a horizontal direction and a vertical direction according to an embodiment of this application;
FIG. 2A to FIG. 2I are diagrams of interfaces in a screen splitting method in a landscape display scenario according to an embodiment of this application;
FIG. 3A to FIG. 3E are diagrams of interfaces in a screen splitting method in a landscape immersive scenario according to an embodiment of this application;
FIG. 3F to FIG. 3J are diagrams of interfaces in a screen splitting method in a longitudinal immersive scenario according to an embodiment of this application;
FIG. 3K to FIG. 3M are diagrams of a group of interfaces on which a display size of a video on interfaces displayed before and after a screen splitting operation changes according to an embodiment of this application;
FIG. 3N to FIG. 3P are diagrams of a group of interfaces on which a display size of a slide on interfaces displayed before and after a screen splitting operation changes according to an embodiment of this application;
FIG. 3Q to FIG. 3S are diagrams of a group of interfaces on which a display size of a conference window on interfaces displayed before and after a screen splitting operation changes according to an embodiment of this application;
FIG. 4A to FIG. 4D are diagrams of interfaces for determining a screen splitting location based on a type of an application for which screen splitting is performed according to an embodiment of this application;
FIG. 5A to FIG. 5G are diagrams of interfaces for creating a combination icon according to an embodiment of this application;
FIG. 6A to FIG. 6I are diagrams of interfaces on which a split-screen mode changes after a device form changes according to an embodiment of this application;
FIG. 7A to FIG. 7D are diagrams of interfaces on which a split-screen mode changes after an operation for a control used to change an interface layout is received according to an embodiment of this application;
FIG. 8A to FIG. 8E are diagrams of interfaces on which three application interfaces are displayed in a split-screen manner according to an embodiment of this application;
FIG. 9A to FIG. 9G are diagrams of interfaces for determining a split-screen mode based on different screen splitting operations according to an embodiment of this application;
FIG. 10A and FIG. 10B are diagrams of interfaces for re-determining a split-screen mode based on an application for which screen splitting is performed according to an embodiment of this application;
FIG. 11 is a schematic flowchart of a screen splitting method according to an embodiment of this application; and
FIG. 12 is a diagram of functional modules of an electronic device 100 according to an embodiment of this application.

### DESCRIPTION OF EMBODIMENTS

The technical solutions according to embodiments of this application are clearly and completely described in the following with reference to the accompanying drawings. In the descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more than two.

The following terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

A term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language such as Java or an extensible markup language (extensible markup language, XML). Interface source code is parsed and rendered on an electronic device, and is finally presented as content that can be identified by the user. A frequently-used representation form of the user interface is a graphical user interface (graphic user interface, GUI), and is a user interface that is displayed in a graphical manner and that is related to a computer operation. The user interface may be a visual interface element like a text, an icon, a button, a menu, a tab, a text box, a dialog box, a status bar, a navigation bar, or a Widget that is displayed on a display of the electronic device.

The following describes a hardware architecture of an electronic device according to an embodiment of this application.

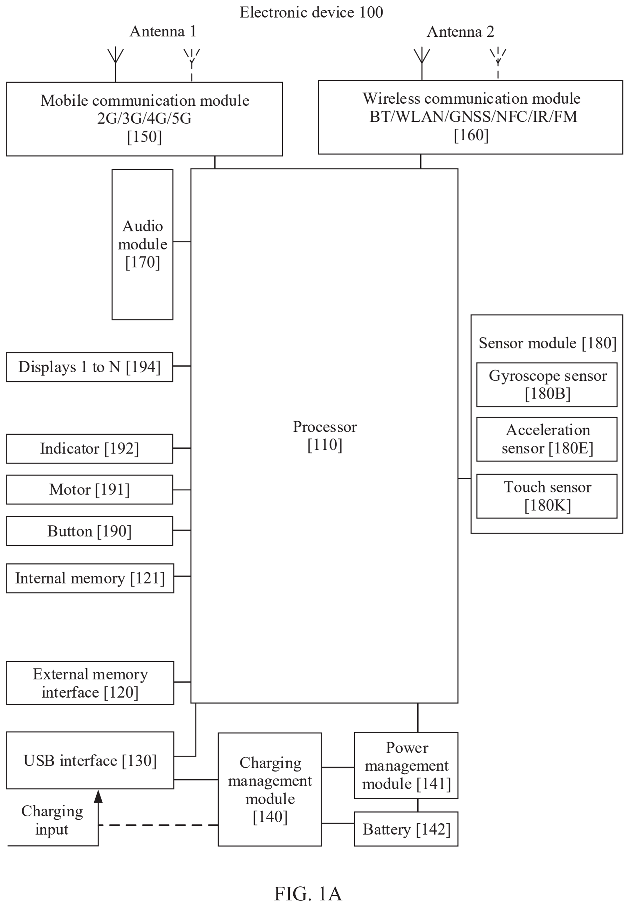

FIG. 1A is a diagram of a structure of an electronic device 100.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, or a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in this application.

It should be understood that a foldable electronic device is used as an example in most subsequent embodiments of this application. However, the solutions provided in this application may also be applied to a non-foldable electronic device.

The electronic device 100 may include a processor 110, an external memory interface 120, an internal memory 121, a universal serial bus (universal serial bus, USB) interface 130, a charging management module 140, a power management module 141, a battery 142, and a display 194. In some embodiments, the electronic device 100 may further include any one or more of the following: an antenna 1, an antenna 2, a mobile communication module 150, a wireless communication module 160, an audio module 170, a sensor module 180, a button 190, a motor 191, an indicator 192, and the like. The sensor module 180 may include a touch sensor 180K, a gyroscope sensor 180B, and an acceleration sensor 180E. Optionally, the sensor module 180 may further include one or more other sensors, for example, a pressure sensor, a barometric pressure sensor, a magnetic sensor, a distance sensor, an optical proximity sensor, a fingerprint sensor, a temperature sensor, an ambient light sensor, and a bone conduction sensor.

It may be understood that the structure shown in this embodiment of the present invention does not constitute a specific limitation on the electronic device 100. In other embodiments of this application, the electronic device 100 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU)/ Different processing units may be independent devices, or may be integrated into one or more processors.

The controller may generate an operation control signal based on instruction operation code and a time sequence signal, to complete control of instruction fetching and instruction execution.

A memory may further be disposed in the processor 110, and is configured to store instructions and data. In some embodiments, the memory in the processor 110 is a cache memory. The memory may store an instruction or data that has been used or cyclically used by the processor 110. If the processor 110 needs to use the instructions or the data again, the processor may directly invoke the instructions or the data from the memory. This avoids repeated access and reduces waiting time of the processor 110, so that system efficiency is improved.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives input of the battery 142 and/or the charging management module 140, and supplies power to modules such as the processor 110, the internal memory 121, and the display 194. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

In some other embodiments, a wireless communication function of the electronic device 100 may be implemented through the antenna 1, the antenna 2, the mobile communication module 150, the wireless communication module 160, the modem processor, the baseband processor, and the like. The antenna 1 and the antenna 2 are configured to send and receive an electromagnetic wave signal. The mobile communication module 150 may provide a wireless communication solution that is applied to the electronic device 100 and that includes 2G/3G/4G/5G or the like. The wireless communication module 160 may provide a wireless communication solution that is applied to the electronic device 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module.

The electronic device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute instructions to generate or change display information.

The display 194 is configured to display an image, a video, and the like. The display 194 includes a display panel. The display panel may be a liquid crystal display (liquid crystal display, LCD). The display panel may be further manufactured by using an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diodes, QLED), or the like. In some embodiments, the electronic device 100 may include one or N displays 194, where N is a positive integer greater than 1.

The internal memory 121 may include one or more random access memories (random access memory, RAM) and one or more nonvolatile memories (nonvolatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a 5th generation DDR SDRAM generally referred to as DDR5 SDRAM), or the like. The nonvolatile memory may include a magnetic disk storage device and a flash memory (flash memory).

The random access memory may be directly read and written by using the processor 110. The random access memory may be configured to store executable programs (such as machine instructions) in an operating system or another running program, and may be further configured to store data of a user, data of an application, and the like.

The nonvolatile memory may store an executable program, data of a user and an application, and the like, and may be loaded into the random access memory in advance, so that the processor 110 directly performs reading and writing.

The external memory interface 120 may be configured to connect to an external nonvolatile memory, to expand a storage capability of the electronic device 100. The external nonvolatile memory communicates with the processor 110 through the external memory interface 120, to implement a data storage function. For example, a file such as music or a video is stored on the external nonvolatile memory.

The audio module 170 may include any one or more of the following: a speaker, a receiver, a microphone, a headset jack, and the like. The electronic device 100 may implement an audio function by using the audio module 170 and the application processor, for example, music playing and recording.

The audio module 170 is configured to convert digital audio information into an analog audio signal output, and is also configured to convert an analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The gyroscope sensor 180B may be configured to determine a moving posture of the electronic device 100. In some embodiments, an angular velocity of the electronic device 100 around three axes (namely, axes x, y, and z) may be determined through the gyroscope sensor 180B.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application, for example, switching between a landscape mode and a portrait mode or a pedometer.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided on the display 194. In some other embodiments, the touch sensor 180K may also be disposed on a surface of the electronic device 100 at a location different from that of the display 194.

The button 190 includes a power button, a volume button, and the like. The button 190 may be a mechanical button, or may be a touch-sensitive button. The electronic device 100 may receive a key input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, a game) may also correspond to different vibration feedback effects. A touch vibration feedback effect may be further customized.

The indicator 192 may be an indicator light, and may indicate a charging status and a power change, or may indicate a message, a missed call, a notification, and the like.

The following describes a device form and a split-screen mode of the electronic device 100 provided in embodiments of this application.

In embodiments of this application, the device form of the electronic device 100 may include landscape display, portrait display, and the like. In some embodiments, when the electronic device 100 has a foldable display, the device form of the electronic device 100 may further include a folded state and an unfolded state.

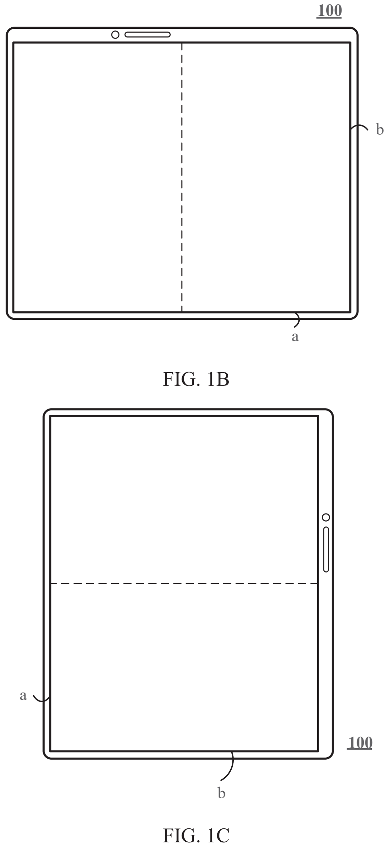

Landscape display (also referred to as a landscape form): If a horizontal length of the display of the electronic device 100 is greater than a vertical length, the device form of the electronic device 100 is the landscape display. For example, as shown in FIG. 1B, a size of a horizontal side a of the display of the electronic device 100 is greater than a size of a vertical side b, and the device form of the electronic device 100 is the landscape display.

Portrait display (also referred to as a portrait form): If a vertical length of the display of the electronic device 100 is greater than a horizontal length, for example, as shown in FIG. 1C, a size of a vertical side b of the electronic device 100 is greater than a size of a horizontal side a, and the device form of the electronic device 100 is the portrait display.

It should be noted that, if lengths of all sides of the display of the electronic device 100 are the same, when a front-facing camera is on an upper side, the device form of the electronic device 100 is the landscape display; or when a front-facing camera is on a side edge, the device form of the electronic device 100 is the portrait display.

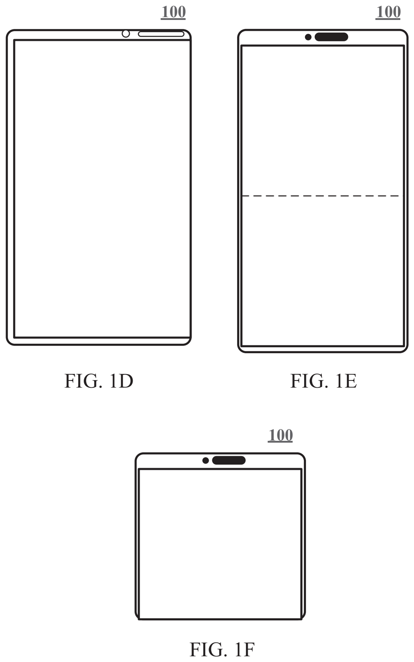

Folded state (also referred to as a folded form): In some embodiments, the display of the electronic device 100 is foldable. When the display of the electronic device 100 is in the folded state, the device form of the electronic device 100 is the folded state. In some embodiments, the electronic device 100 may be the electronic device that is shown in FIG. 1B and whose display can be folded left or right. In FIG. 1B, the display of the electronic device 100 is in the unfolded state. After the display of the electronic device 100 is folded left or right along a middle line, the device form of the electronic device 100 may be a folded state shown in FIG. 1D. In this case, the display of the electronic device 100 is in the folded state, and the device form of the electronic device 100 is the folded state. In some other embodiments, the electronic device 100 may alternatively be the electronic device that is shown in FIG. 1E and whose display can be folded up and down. In FIG. 1E, the display of the electronic device 100 is in the unfolded state, and the device form of the electronic device 100 is the unfolded state. After the display of the electronic device 100 is folded up and down along a middle line, the device form of the electronic device 100 may be a folded state shown in FIG. 1F.

The unfolded state corresponds to the folded state. If the display of the electronic device 100 is not in the folded state, the device form of the electronic device 100 is the unfolded state. Device forms of the electronic device 100 in the embodiments shown in FIG. 1B, FIG. 1C, and FIG. 1E are all the unfolded state.

It should be noted that a device in the two device forms: landscape display and portrait display, may be in an unfolded state or a folded state. For example, the device in the folded state shown in FIG. 1D is also in a portrait display form. The unfolded state is not necessarily a state in which the foldable screen is completely flattened, and may also be an intermediate state between the folded state and a flattened state of the foldable screen.

It may be understood that the electronic device 100 shown in FIG. 1B to FIG. 1F is a foldable device. In some embodiments, the electronic device 100 may alternatively be a non-foldable device. In this case, the device form of the electronic device 100 may include the landscape display and the portrait display.

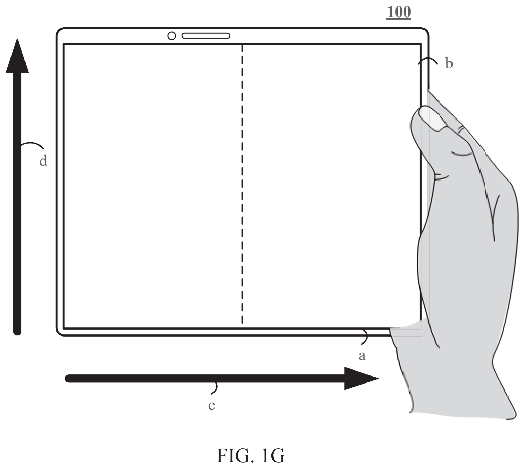

The following describes a horizontal direction and a vertical direction (longitudinal direction) in embodiments of this application with reference to FIG. 1G.

As shown in FIG. 1G, the handheld electronic device 100 is used as an example. A handheld direction (namely, a direction represented by an arrow d) is the vertical direction (which may also be referred to as the longitudinal direction) in this embodiment of this application, and a direction perpendicular to the handheld direction (namely, a direction represented by an arrow c) is a horizontal direction in this embodiment of this application. A horizontal side of the electronic device 100 is a side of the electronic device 100 in the horizontal, namely, the horizontal side a shown in FIG. 1G. A vertical side of the electronic device 100 is a side of the electronic device 100 in the vertical direction, namely, the vertical side b shown in FIG. 1G. It may be understood that, in the embodiment shown in FIG. 1G, the handheld electronic device 100 is merely used as an example to describe the horizontal direction and the vertical direction. For another case, refer to the example. This is not limited in this application.

In this embodiment of this application, a split-screen mode may include an up-down split-screen mode, a left-right split-screen mode, a full-screen and floating window mode, and the like.

Up-down split-screen mode: In the up-down split-screen mode, the display of the electronic device 100 may be split into an upper split-screen area and a lower split-screen area. The upper split-screen area is an upper area of the display, and the lower split-screen area is a lower area of the display. A size of the upper split-screen area may be the same as or different from a size of the lower split-screen area. If the electronic device 100 displays an interface of an application 1 and an interface of an application 2 in the up-down split-screen mode, the electronic device 100 may display the interface of one of the applications (for example, the application 1) in the upper split-screen area, and display the interface of the other application (for example, the application 2) in the lower split-screen area. Different interfaces of a same application may also be displayed in the upper split-screen area and the lower split-screen area. In addition, a same interface may also be displayed in the upper split-screen area and the lower split-screen area based on an operation of the user.

Left-right split-screen mode: In the left-right split-screen mode, the display of the electronic device 100 may be split into a left split-screen area and a right split-screen area. The left split-screen area is a left area of the display, and the lower split-screen area is a right area of the display. A size of the left split-screen area may be the same as or different from a size of the right split-screen area. If the electronic device 100 displays an interface of an application 1 and an interface of an application 2 in the left-right split-screen mode, the electronic device 100 may display the interface of one of the applications (for example, the application 1) in the left split-screen area, and display the interface of the other application (for example, the application 2) in the right split-screen area. Similar to that in the up-down split-screen mode, different interfaces of a same application or a same interface may be displayed in the left split-screen area and the right split-screen area.

Full-screen and floating window mode: In the full-screen and floating window mode, the display of the electronic device 100 may be split into a full-screen area and a floating window area. The full-screen area is an entire area of the display, the floating window area is an area in a floating window, and the floating window is displayed on the full-screen area in an overlay manner. If the electronic device 100 displays an interface of an application 1 and an interface of an application 2 in the full-screen and floating window mode, the electronic device 100 may display the interface of one of the applications (for example, the application 1) in the full-screen area, and display the interface of the other application (for example, the application 2) in the floating window area.

In some embodiments, the up-down split-screen mode, the left-right split-screen mode, or the full-screen and floating window mode may include two split-screen areas, or may include three or more split-screen areas. For example, the electronic device may be sequentially split into three areas from top to bottom, for respectively displaying different interface; or the electronic device may be sequentially split into three areas from left to right, for respectively displaying different interface.

In some other embodiments, if the electronic device 100 simultaneously displays interfaces of three or more applications in a split-screen manner, the split-screen mode may be specifically divided into a plurality of split-screen modes. For example, if the electronic device 100 simultaneously displays interfaces of three applications in the split-screen manner, the up-down split-screen mode may further include a one-upper area and two-lower area split-screen mode (namely, a 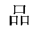 -shaped split-screen mode) and a two-upper area and one-lower area split-screen mode (namely, an inverted 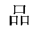 -shaped split-screen mode).

An embodiment of this application provides a screen splitting method. The electronic device 100 may receive a screen splitting operation (for example, an operation of sliding upward from a lower edge of a display, an operation of sliding upper leftward from a lower edge of a display, or an operation of sliding upper rightward from a lower edge of a display) of a user for an application 1, and determine, in response to the screen splitting operation, a to-be-executed split-screen mode (for example, an up-down split-screen mode, a left-right split-screen mode, or a full-screen floating window mode) based on a device form of the electronic device 100 and/or a display interface of the application 1. The electronic device 100 may determine a screen splitting waiting area and an icon display area of the display based on the to-be-executed split-screen mode, display information about the application 1 (for example, an interface of the application 1, a partial picture or element of the interface of the application 1, and an icon of the application 1 or a name of the application 1) in the screen splitting waiting area, and display one or more application icons in the icon display area, where the one or more application icons include an icon of an application 2. The electronic device 100 may receive an operation of the user for the icon of the application 2, and in response to the operation, divide the display into an area 1 and an area 2 based on the to-be-executed split-screen mode, display the interface of the application 1 in the area 1, and display the interface of the application 2 in the area 2. The device form includes: landscape display, portrait display, an unfolded state, a folded state, and the like. For specific descriptions of the device form, refer to the embodiments shown in FIG. 1B to FIG. 1F.

It should be understood that the application 1 and the application 2 may be a same application, or may be different applications.

According to the screen splitting method provided in this application, after receiving the screen splitting operation of the user, the electronic device 100 may select, based on the device form of the electronic device 100 during triggering of screen splitting or a display form of a display element on a display interface, a split-screen mode corresponding to the device form or the display form of the display element, to display interfaces of two or more applications on in a split-screen manner. In this way, an operation step of screen splitting can be simplified, screen splitting efficiency can be improved, and an appropriate split-screen mode can be determined based on a current device form or a display form of a display element.

The following describes, with reference to different application scenarios, the screen splitting method provided in embodiments of this application.

In some application scenarios, the electronic device 100 displays an interface 1 of the application 1, and the device form of the electronic device 100 is the landscape display. The electronic device 100 may receive the screen splitting operation (for example, the operation of sliding upward from the lower edge of the display) of the user, and in response to the screen splitting operation, determine, based on a mapping relationship between the landscape display and a split-screen mode, that the to-be-executed split-screen mode is the up-down split-screen mode, and display information about the application 1 (for example, the interface 1, a partial picture or element of the interface 1, and the icon of the application 1 or the name of the application) in the screen splitting waiting area based on the up-down split-screen mode, and displays, on the display, an icon or an interface of an application on which screen splitting can be performed.

In some embodiments, when the information about the application 1 is displayed in the screen splitting waiting area, one or more application icons are displayed in a partial area (which may be referred to as the icon display area) of the display, and the one or more application icons include the icon of the application 2. The electronic device 100 may receive an operation of the user for the icon of the application 2 in the icon display area, and in response to the operation, divide the display into an upper split-screen area and a lower split-screen area based on the up-down split-screen mode, display an interface of one split-screen application (for example, the application 1) in the upper split-screen area, and display an interface of another split-screen application (for example, the application 2) in the lower split-screen area.

In some other embodiments, when the information about the application 1 is displayed in the screen splitting waiting area, interfaces (or thumbnails of interfaces) of the one or more applications are displayed in the partial area of the display. The user may select, from the interfaces of the one or more applications, an interface of an application on which screen splitting is performed with the application 1, and then up-down screen splitting is performed based on a selection of the user.

It should be noted that, when the to-be-executed split-screen mode is the up-down split-screen mode, the screen splitting waiting area may be located on an upper part or a lower part of the display, when the to-be-executed split-screen mode is the left-right split-screen mode, the screen splitting waiting area may be located on a left part or a right part of the display, or the like. The screen splitting waiting area may be displayed on the icon display area in an overlay manner, or may be an area that is on the display and that does not overlap with the icon display area.

In some other embodiments, the application 1 and the application 2 may be directly displayed in the split-screen manner in response to an operation of sliding the application 1 upward by the user. The application 2 may be an application set by the user, an application started before the application 1, an application associated with the application 1, or the like.

In some embodiments, the electronic device 100 may determine, based on a device like a gyroscope or an acceleration sensor, whether the device form of the electronic device 100 is the landscape display.

In this way, when the electronic device 100 is in the landscape display, the electronic device 100 can quickly determine the up-down split-screen mode corresponding to the landscape display. This improves user experience and improves screen splitting efficiency.

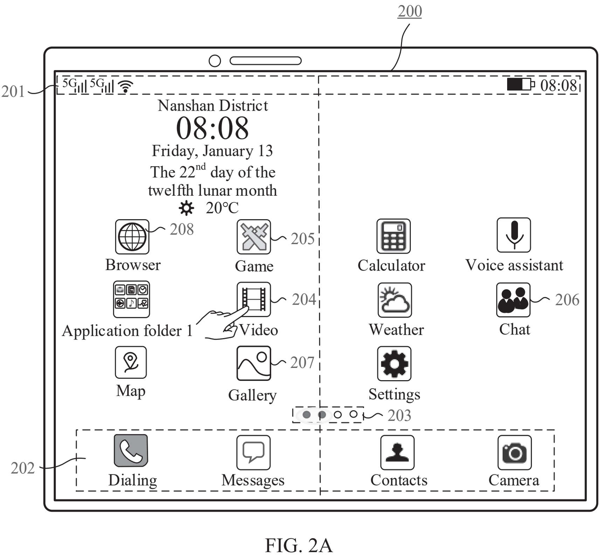

For example, as shown in FIG. 2A, the device form of the electronic device 100 is the landscape display. The electronic device 100 displays a home screen 200. A page on which application icons are placed is displayed on the home screen 200. The page includes a plurality of application icons (for example, a browser application icon 208, a game application icon 205, a weather application icon, a video application icon 204, a voice assistant application icon, a chat application icon 206, a map application icon, a gallery application icon 207, and a setting application icon). Optionally, a page indicator 203 is further displayed on a lower part of the page on which the application icons are placed, to indicate a total quantity of pages on the home screen and a location relationship between a currently displayed page and another page. For example, the home screen 200 may include four pages. Black dots in the page indicator are located at a first location and a second location from left, indicating that the currently displayed page includes the first two pages from left of the four pages. Optionally, a status bar 201 is further displayed on an upper part of the page on which the application icons are placed. The status bar 201 may include information such as a strength indicator of a communication signal, a battery level value, and time. Further optionally, there may be a dock (dock) area 202 below the page indicator. The dock area 202 may include one or more dock icons (for example, a dialing application icon, a messages application icon, a contacts application icon, and a camera application icon). The one or more dock icons in the dock area can remain displayed during page switching.

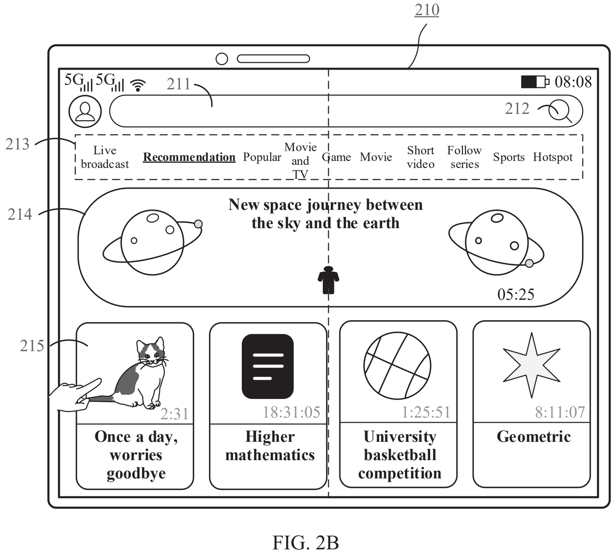

The electronic device 100 may receive an operation (for example, a tap operation) of the user for the video application icon 204, and display, in response to the tap operation, a video application interface 210 shown in FIG. 2B.

As shown in FIG. 2B, the video application interface 210 may include a search bar 211, a search control 212, an option bar 213, and one or more video playing controls (for example, a video playing control 214 and a video playing control 215). The search bar 211 may be used to display an input of the user for the search bar 211, and the search control 212 may be used to trigger the electronic device 100 to initiate searching for content displayed in the search bar 211 and display a search result. The option bar 213 may include one or more option controls, for example, a live broadcast option, a recommendation option, a popular option, a movie and TV option, a game option, a movie option, a short video option, a follow series option, a sports option, and a hotspot option. Each option control in the option bar 213 may be used to trigger the electronic device 100 to display, on the video application interface 210, one or more video playing controls corresponding to the option control. The video playing control 214 or the video playing control 215 may be used to trigger the electronic device 100 to play a video corresponding to the video playing control.

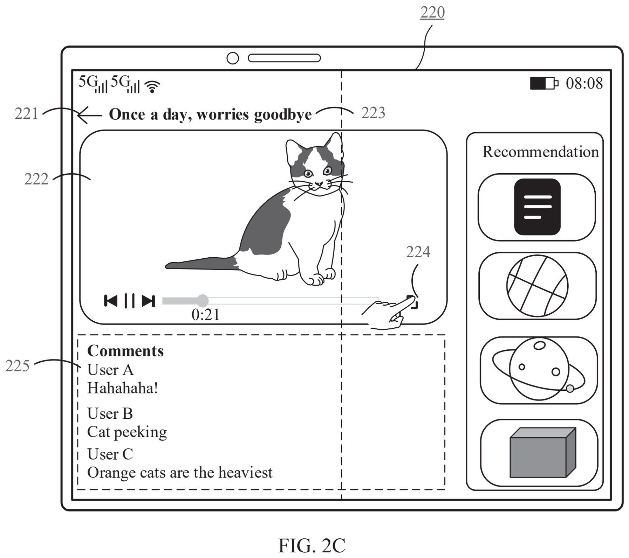

The electronic device 100 may receive an operation of the user for the video playing control 215, and display, in response to the operation, a video playing interface 220 shown in FIG. 2C.

As shown in FIG. 2C, the video playing interface 220 may include a back control 221, a video playing window 222, a video title 223, a full-screen control 224, and a comment area 225. The back control 221 may be used to trigger the electronic device 100 to display a previous interface, namely, the video application interface 210. A video being played or to be played may be displayed in the video playing window 222, an aspect ratio (namely, a ratio of a horizontal length to a vertical length) of the video is greater than a preset value, and the video is a horizontal video. The full-screen control 224 may be used to trigger the electronic device 100 to play the video in a full-screen playing mode. The comment area 225 may be used to display one or more comments. The video title 223 may indicate a title of the video played in the video playing window 222, for example, "Once a day, worries goodbye". It should be noted that, in this embodiment of this application, a display size of the video is the same as a size of the video playing window corresponding to the video.

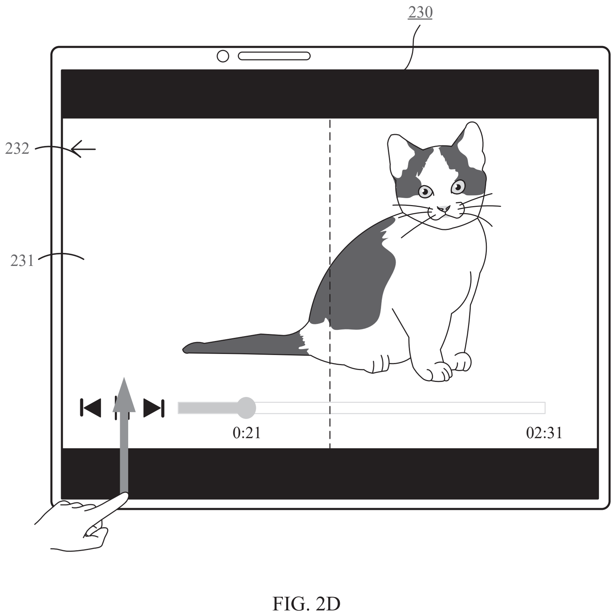

The electronic device 100 may receive an operation of the user for the full-screen control 224, and display, in response to the operation, a full-screen playing interface 230 shown in FIG. 2D.

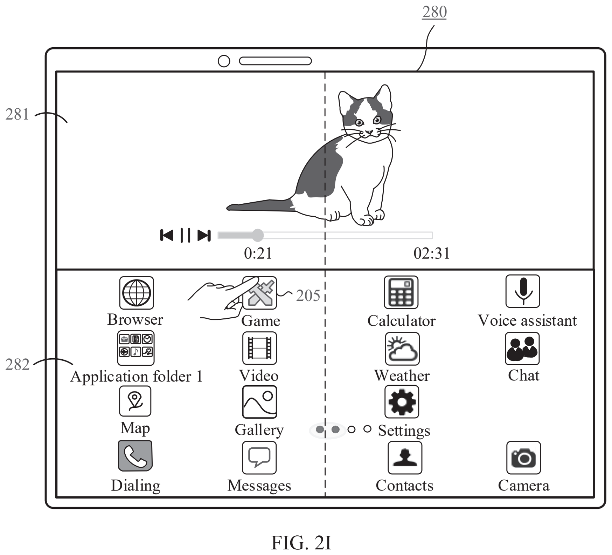

As shown in FIG. 2D, the device form of the electronic device 100 is the landscape display. The full-screen playing interface 230 may include a video playing window 231 and a full-screen exit control 232. After the video is switched from a non-full-screen playing mode to the full-screen playing mode, a display area of the video changes, and the display size of the video playing window also changes accordingly. An aspect ratio of the video playing window 231 may be the same as an aspect ratio of the video playing window 222 in the embodiment shown in FIG. 2C. A display size of the video playing window 231 may be a display size obtained by increasing the display size of the video playing window 222 by a specific ratio (for example, 1:2.3), and the display size of the video playing window 231 may be less than a size of the display of the electronic device 100. As shown in FIG. 2D, if a vertical size of the video playing window 231 is less than a vertical size of the display, on the full-screen playing interface 230, the electronic device 100 may display black borders on an upper side and a lower side of the video playing window 231. The full-screen exit control 232 may be used to trigger the electronic device 100 to switch from the full-screen playing interface 230 to the video playing interface 220 shown in FIG. 2C, that is, switch from the full-screen playing mode to the non-full-screen playing mode. In some other embodiments, for change logic of a video display size, refer to related descriptions after the embodiment shown in FIG. 2I. Details are not described herein.

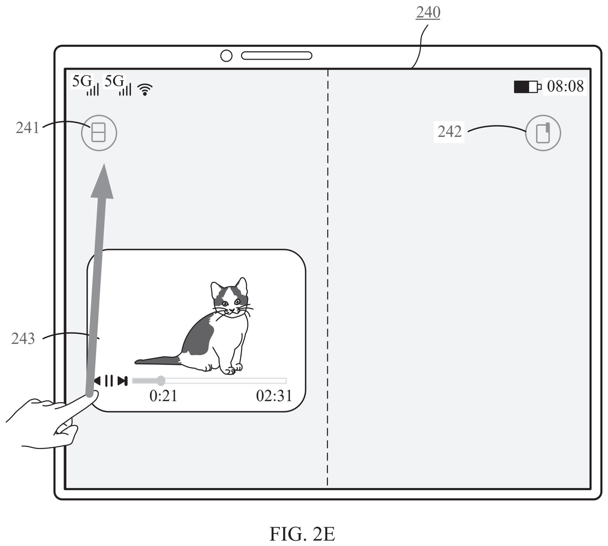

In some embodiments, the electronic device 100 may receive an operation of sliding upward from the lower edge of the display by the user, and in response to the operation, determine, based on a current device form (landscape display), that an executable split-screen mode includes the up-down split-screen mode and a full-screen and floating window mode, and display a split-screen mode selection interface 240 shown in FIG. 2E.

As shown in FIG. 2E, the split-screen mode selection interface 240 may include an application small window 243 and one or more split-screen mode controls, for example, an up-down split-screen mode control 241 and a full-screen and floating window mode control 242. The application small window 243 may move along a track of sliding upward from the lower edge of the display by the user, and the application small window 243 may further indicate that an application corresponding to the application small window 243 is a video application. In a process in which the application small window 243 moves along the user operation, a frame of image in a video may be displayed or the video application icon may be displayed in the application small window 243. In some other embodiments, a video being played may be displayed in the application small window 243. This is not limited in this application.

It should be noted that all split-screen modes corresponding to the one or more split-screen mode controls displayed on the split-screen mode selection interface 240 are **split-screen modes that can be executed by the electronic device 100 in the landscape display.** For example, in a landscape scenario, if the electronic device 100 may support the up-down split-screen mode and the full-screen and floating window mode, and does not support the left-right split-screen mode, as shown in FIG. 2E, on the split-screen mode selection interface 240, the up-down split-screen mode control 241 and the full-screen and floating window mode control 242 are displayed, and a left-right split-screen mode control is not displayed.

The one or more split-screen mode controls displayed on the split-screen mode selection interface 240 may be used to trigger the electronic device 100 to execute the split-screen modes corresponding to the split-screen mode controls. Specifically, the electronic device 100 may determine a to-be-executed split-screen mode based on whether a distance between the application small window 243 and a split-screen mode control is less than a preset distance. In some embodiments, the electronic device 100 may alternatively determine a to-be-executed split-screen mode based on a movement direction of the application small window 243.

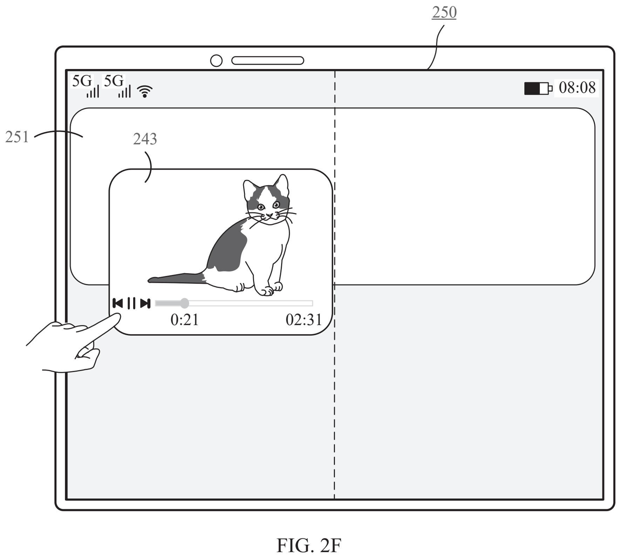

In a process in which the application small window 243 moves along the user operation, when the electronic device 100 detects that a distance between the application small window 243 and the up-down split-screen mode control 241 is less than the preset distance (for example, 5 cm), the electronic device 100 may display a split-screen mode display interface 250 shown in FIG. 2F.

As shown in FIG. 2F, the split-screen mode display interface 250 may include a split-screen touch target 251 and the application small window 243. The split-screen touch target 251 is an upper half area of the display, and the split-screen touch target 251 may indicate that the to-be-executed split-screen mode is the up-down split-screen mode. In some other embodiments, if a split-screen mode is different from that in the embodiment shown in FIG. 2F, a split-screen area may also be an area different from the split-screen touch target 251 shown in FIG. 2F. This is not limited in this application. For specific content on the application small window 243, refer to corresponding content in the embodiment shown in FIG. 2E. Details are not described herein again.

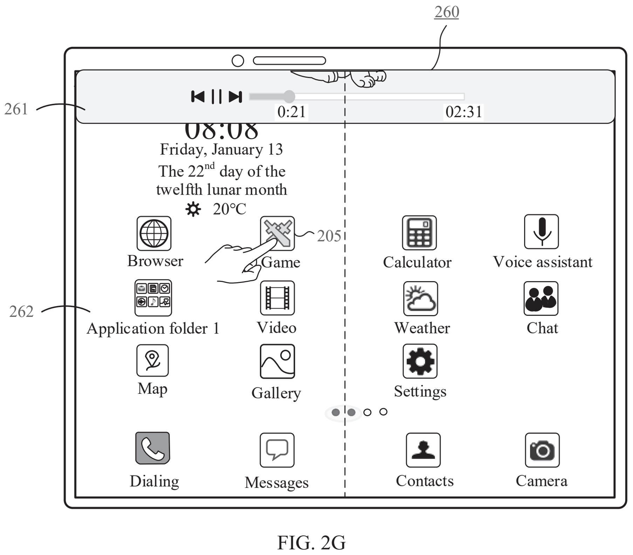

After the application small window 243 moves to the split-screen touch target 251 along a sliding operation of the user, in response to a release operation of the user, the electronic device 100 may display a to-be-split-screen interface 260 shown in FIG. 2G.

As shown in FIG. 2G, the to-be-split-screen interface 260 may include a screen splitting waiting area 261 and an icon display area 262. The screen splitting waiting area 261 may be displayed on the icon display area 262 in an overlay manner, and is located on the upper part or the lower part of the display, and indicates that the to-be-executed split-screen mode is the up-down split-screen mode. In some other embodiments, the display of the electronic device 100 may alternatively be divided, based on the to-be-executed split-screen mode, into a screen splitting waiting area 261 and an icon display area 262 that do not overlap each other. The screen splitting waiting area 261 may also be located on the upper part or the lower part of the display, and indicates that the to-be-executed split-screen mode is the up-down split-screen mode. The screen splitting waiting area 261 indicates, to the user, that a split-screen application includes a video application. Information about the video application may be displayed in the screen splitting waiting area 261. The information about the video application may include any one or more of the following: a name of the video application, an application icon, an entire picture or a partial picture of the full-screen playing interface 230 shown in FIG. 2D, and a partial element (for example, a title of a video) of the full-screen playing interface 230. For example, as shown in FIG. 2G, a partial picture of the video played on the full-screen playing interface 230 may be displayed in the screen splitting waiting area 261. The icon display area 262 may be used to display one or more application icons, including the game application icon 205 and the like. In some embodiments, the home screen 200 shown in FIG. 2A may be displayed in the icon display area 262.

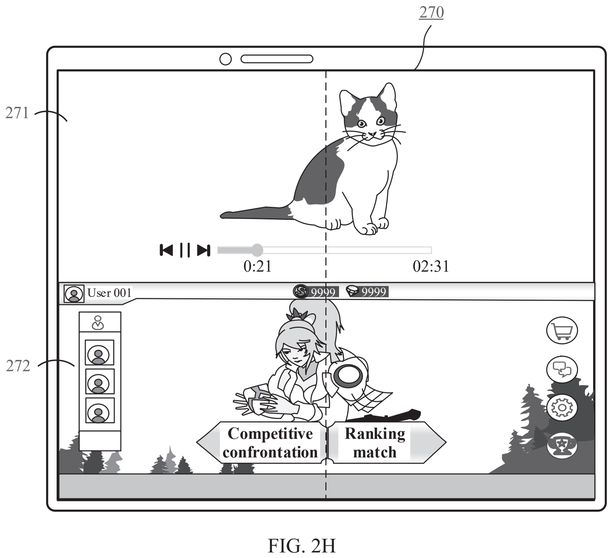

The electronic device 100 may receive an operation of the user for the game application icon 205 in the icon display area 262, and display, in response to the operation, an up-down split-screen interface 270 shown in FIG. 2H.

As shown in FIG. 2H, the up-down split-screen interface 270 may include an upper split-screen area 271 and a lower split-screen area 272, where the upper split-screen area 271 is an upper area of the display, and the lower split-screen area 272 is a lower area of the display. A display size of the upper split-screen area 271 may be the same as or different from a display size of the lower split-screen area 272. An interface of the video application, for example, the full-screen playing interface 230 shown in FIG. 2D, may be displayed in the upper split-screen area 271. An interface of a game application may be displayed in the lower split-screen area 272. An aspect ratio of the video displayed in the upper split-screen area 271 may be the same as the aspect ratio of the video in the embodiment shown in FIG. 2C, and a display size of a video playing window in the upper split-screen area 271 may be a display size obtained by increasing the display size of the video playing window 222 by a specific ratio (for example, 1:2.3). When the electronic device 100 displays the up-down split-screen interface 270, the user may watch a video by using the upper split-screen area 271, or may play a game by using the lower split-screen area 272.

In some embodiments, if the electronic device 100 determines, based on the mapping relationship between the landscape display and a split-screen mode, that the executable split-screen mode includes only the up-down split-screen mode, the electronic device 100 may alternatively display the split-screen mode display interface 250 shown in FIG. 2F, or display the to-be-split-screen interface 260 shown in FIG. 2G, or display a to-be-split-screen interface 280 shown in FIG. 2I.

In some other embodiments, after the application small window 243 moves to the split-screen touch target 251 along a sliding operation of the user, in response to a release operation of the user, the electronic device 100 may display the to-be-split-screen interface 280 shown in FIG. 2I.

As shown in FIG. 2I, the to-be-split-screen interface 280 may be divided, based on the to-be-executed split-screen mode (namely, the up-down split-screen mode), into an upper area and a lower area: a screen splitting waiting area 281 and an icon display area 282. The screen splitting waiting area 281 indicates, to the user, that the split-screen application includes the video application. An interface of the video application, for example, the full-screen playing interface 230, or other information of the video application may be displayed in the screen splitting waiting area 281. One or more application icons, for example, the game application icon 205, may be displayed in the icon display area 282. For other content in the icon display area 282, refer to related descriptions in the embodiment shown in FIG. 2G. The electronic device 100 may also receive an operation of the user for the game application icon 205 in the icon display area 282, and display, in response to the operation, the up-down split-screen interface 270 shown in FIG. 2H.

Compared with the to-be-split-screen interface 260 shown in FIG. 2G, on the to-be-split-screen interface 280, the screen splitting waiting area 281 occupies a larger proportion of the display, and the screen splitting waiting area 281 is more suitable for video playing. When the to-be-split-screen interface 280 shown in FIG. 2H is used, another application for screen splitting may be determined in the icon display area 282 without affecting a video service provided by the video application. It may be understood that the embodiment shown in FIG. 2I is merely an example. In this embodiment of this application, the video application may be replaced with another application. This is not limited in this application.

It should be noted that, in this embodiment of this application, if a size of the display area of the video changes (for example, before and after screen splitting, or before and after switching between the full-screen playing mode and the non-full-screen playing mode), the electronic device 100 may adjust the display size of the video based on a size of the changed display area, so that the display size of the video adapts to the size of the display area of the video. In some embodiments, before and after the display area of the video changes, the electronic device 100 may keep the aspect ratio of the video unchanged, increase or decrease the display size of the video, and display black borders (or blank areas) on a left side and a right side or upper and lower sides of the video, so that the display size of the video adapts to the display area. For example, when the video is a horizontal video (that is, the aspect ratio of the video is greater than the preset value), the electronic device 100 may display the black borders on the upper and lower sides of the video after the display area of the video changes. For another example, when the video is a vertical video (that is, the aspect ratio of the video is less than the preset value), the electronic device 100 may display the black borders on the left side and the right side of the video after the display area of the video changes. In some other embodiments, the electronic device 100 may alternatively dynamically adjust the aspect ratio of the video based on the size of the display area of the video. It may be understood that, in this embodiment of this application, for another element like a game picture, a slide (PPT), or a conference window, the electronic device 100 may adjust a display size of the element in a similar manner after a display area of the element changes. This is not limited in this application. In this application, in an embodiment in which the display size of the element changes accordingly before and after the display area of the element changes, for change logic of the display size of the element, refer to the descriptions herein. Details are not described below again.

It may be understood that the embodiment shown in FIG. 2A to FIG. 2I is merely an example. In this embodiment of this application, the device form may be another form, the application 1 may be an application other than the video application, and the split-screen mode may be another split-screen mode (for example, the left-right split-screen mode). This is not limited herein in this application.

According to the screen splitting method provided in embodiments of this application, a to-be-executed split-screen mode can be determined after a screen splitting operation is received, so that a screen splitting step can be simplified, and screen splitting efficiency can be improved. In addition, one or more executable split-screen modes can be further determined based on a scenario in which the electronic device 100 is currently located, so that an appropriate split-screen mode can be matched for the current scenario, and the user can be prevented from selecting a split-screen mode that cannot be executed in the current scenario. This reduces time consumption and improves efficiency.

In a screen splitting method described in the following embodiment, a device form of an electronic device is not considered, but a display form of content currently displayed by the electronic device is considered.

In some embodiments, if the electronic device 100 displays an interface of an application 1, and the interface of the application 1 includes any one of core elements such as a video, a conference, a game (game element), a slide (PPT), image shooting (for example, a viewfinder frame on an image shooting interface), and a video call (for example, a video display window in a video call interface), the electronic device 100 is in an immersive scenario.

It should be noted that the core elements may be considered as the elements such as the video, the game, or the PPT. In an operating system, these elements are usually carried by using a window. Therefore, the core elements may also be considered as the window carrying the elements.

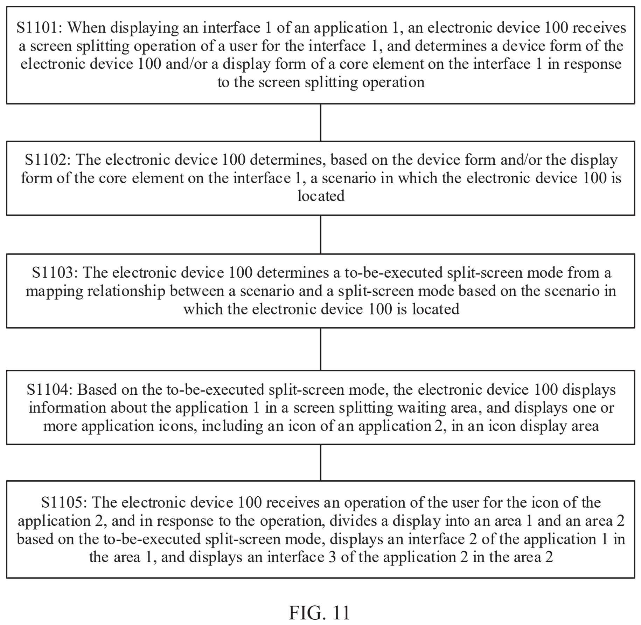

The immersive scenario includes a horizontal immersive scenario and a vertical immersive scenario. When a display form of a core element is horizontal display, the core element is a horizontal core element, and display content on the electronic device 100 is in the horizontal immersive scenario. When a display form of a core element is a vertical form, the core element is a vertical core element, and display content on the electronic device 100 is in the vertical immersive scenario. The display form of the core element may be determined based on an aspect ratio (namely, a ratio of a horizontal length to a vertical length) of the core element. For example, when the aspect ratio of the core element on the interface of the application 1 is greater than a preset value (for example, 1), the display form of the core element is the horizontal display. When the aspect ratio of the core element in the interface of the application 1 is less than a preset value, the display form of the core element is vertical display. In some other embodiments, the display form of the core element may alternatively be determined based on any one or more of a list of preset applications, an invoked landscape/portrait display interface, a location relationship between black borders on two sides of the core element and the core element, a location relationship between blank areas on the two sides of the core element and the core element, and the like. For a specific determining manner, refer to the following embodiment shown in FIG. 11. Details are not described herein.

It should be noted that the "immersive scenario" is merely a name for ease of description and understanding of the solution, and does not limit this application. For example, the "immersive scenario" may also be referred to as a "playing scenario" or a "watching scenario".

The following describes diagrams of interfaces of the screen splitting method in different immersive scenarios.

In some application scenarios, the electronic device 100 displays the interface 1 of the application 1, and the interface 1 includes a horizontal core element. The electronic device 100 may receive a screen splitting operation (for example, an operation of sliding upward from a lower edge of a display) of a user, and in response to the screen splitting operation, determine, based on the interface 1, that display content on the electronic device 100 is in a horizontal immersive scenario. The electronic device 100 may determine, based on a mapping relationship between the horizontal immersive scenario and a split-screen mode, that a to-be-executed split-screen mode is an up-down split-screen mode, display information about the application 1 (for example, an interface 1, a partial picture or element of the interface 1, and an icon of the application 1 or a name of the application) in a screen splitting waiting area and display one or more application icons in an icon display area based on the up-down split-screen mode, where the one or more application icons include an icon of an application 2. The electronic device 100 may receive an operation of the user for the icon of the application 2, and in response to the operation, display an interface of one split-screen application (for example, the application 1) in an upper split-screen area of the display, and display an interface of another split-screen application (for example, the application 2) in a lower split-screen area of the display.

In some other embodiments, also refer to the screen splitting method mentioned in the foregoing embodiment. For example, a plurality of application interfaces or interface thumbnails are displayed, or screen splitting is directly performed based on a default application. Details are not described herein again.

In this way, when a horizontal core element is displayed on the interface 1, the electronic device 100 can quickly determine that the to-be-executed split-screen mode is the up-down split-screen mode. This improves screen splitting efficiency.

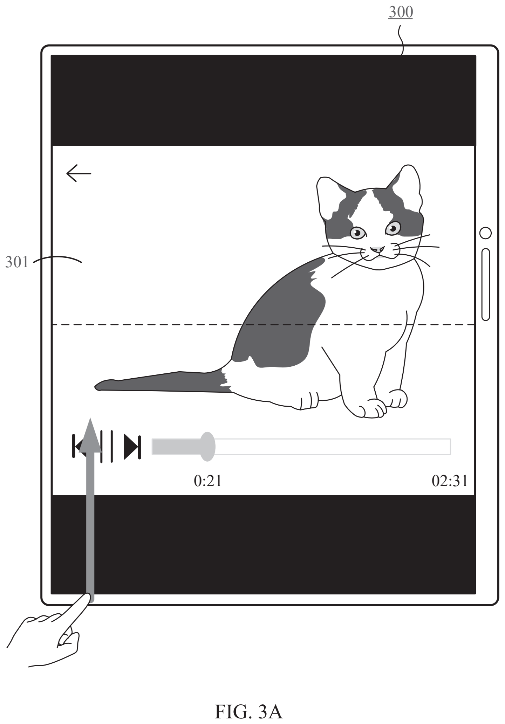

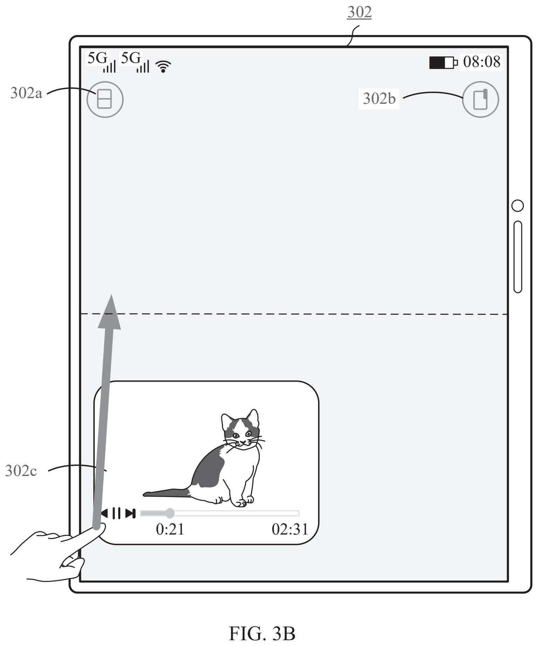

For example, as shown in FIG. 3A, the device form of the electronic device 100 is portrait display, the electronic device 100 displays a full-screen playing interface 300 of a video application, the full-screen playing interface 300 includes a video, and a display form of the video is a horizontal form. For other content on the full-screen playing interface 300, refer to related descriptions of the full-screen playing interface 230 shown in FIG. 2D. Details are not described herein again. In another embodiment, the device form of the electronic device 100 may alternatively be landscape display. The electronic device 100 may receive an operation of sliding upward from the lower edge of the display by the user, and in response to the operation, determine, based on a video on a full-screen playing interface 300, that a scenario of currently displayed content is the horizontal immersive scenario, and display a split-screen mode selection interface 302 shown in FIG. 3B. The split-screen mode selection interface 302 includes an up-down split-screen mode control.

As shown in FIG. 3B, the split-screen mode selection interface 302 may include an application small window 302c and one or more split-screen mode controls, including an up-down split-screen mode control 302a. In some embodiments, the one or more split-screen mode controls may further include a full-screen and floating window mode control 302b. The one or more split-screen mode controls may indicate, to the user, one or more split-screen modes that can be executed in the horizontal immersive scenario. For other content on the split-screen mode selection interface 302, refer to related descriptions in the embodiment shown in FIG. 2E. Details are not described herein again.

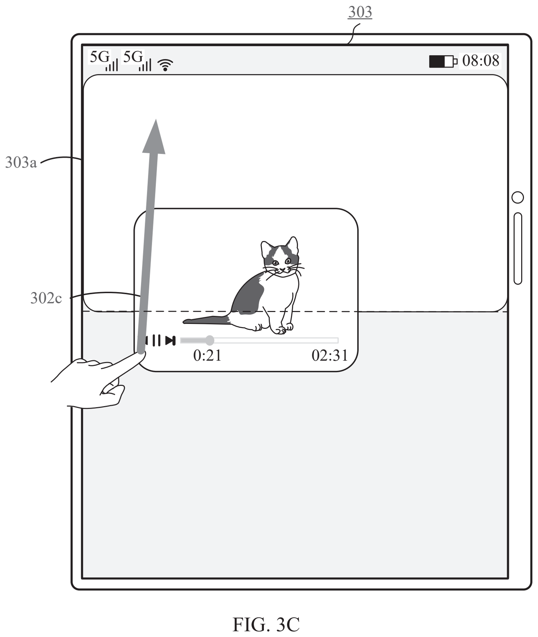

In a process in which the application small window 302c moves along a user operation, when the electronic device 100 detects that a distance between the application small window 302c and the up-down split-screen mode control 302a is less than a preset distance (for example, 5 cm) or detects that the application small window 302c and the up-down split-screen mode control 302a overlap, the electronic device 100 may display a split-screen mode display interface 303 shown in FIG. 3C.

Optionally, as shown in FIG. 3C, the split-screen mode display interface 303 may include a split-screen touch target 303a and the application small window 302c. The split-screen touch target 303a is an upper half area of the display, and the split-screen touch target 303a may indicate that the to-be-executed split-screen mode is the up-down split-screen mode. For specific content on the application small window 302c, refer to corresponding content in the embodiment shown in FIG. 3B. Details are not described herein again. In some other embodiments, the split-screen touch target may not be displayed.

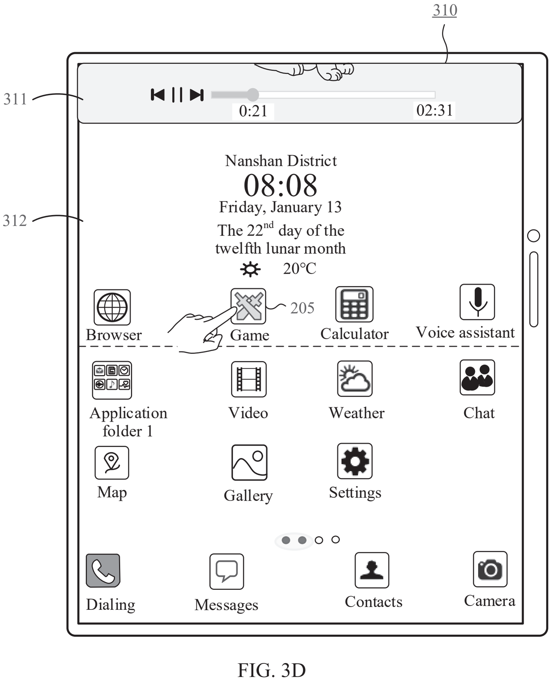

After the application small window 302c moves to the split-screen touch target 303a along a sliding operation of the user, in response to a release operation of the user, the electronic device 100 may display, based on the up-down split-screen mode, a to-be-split-screen interface 310 shown in FIG. 3D.

As shown in FIG. 3D, the to-be-split-screen interface 310 may include a screen splitting waiting area 311 and an icon display area 312. Information about the video application, for example, a partial picture of a video, may be displayed in the screen splitting waiting area. For specific content of the information about the video application, refer to related content in the embodiment shown in FIG. 2G. One or more application icons, for example, a game application icon 205, may be displayed in the icon display area 312. In some embodiments, the home screen 200 shown in FIG. 2A may be displayed in the icon display area 312. For a location relationship between the screen splitting waiting area 311 and the icon display area 312, refer to related descriptions in the foregoing embodiment.

In another embodiment, other application information on which screen splitting can be performed, for example, a list of started applications, an application interface thumbnail, and an application associated with the video application, may alternatively be displayed in the icon display area 312.

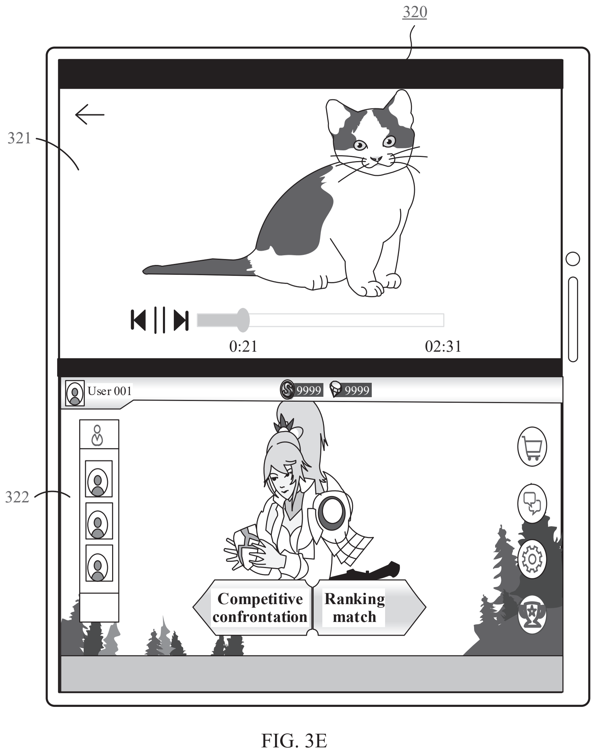

The electronic device 100 may receive an operation of the user for the game application icon 205, and in response to the operation, display, based on the up-down split-screen mode, an up-down split-screen interface 320 shown in FIG. 3E. The up-down split-screen interface 320 may be used to display an interface of the video application and an interface of the game application in a split-screen manner.

As shown in FIG. 3E, the up-down split-screen interface 320 may include an upper split-screen area 321 and a lower split-screen area 322. The upper split-screen area 321 is an upper area of the display in the portrait display, and the lower split-screen area 322 is a lower area of the display in the portrait display. A size of the upper split-screen area may be the same as or different from a size of the lower split-screen area. The interface of the video application, for example, the full-screen playing interface 300 displayed by the video application when a screen splitting operation is received, may be displayed in the upper split-screen area 321. The interface of the game application may be displayed in the lower split-screen area 322.

It may be understood that the embodiment shown in FIG. 3A to FIG. 3E is merely an example. In this embodiment of this application, the application 1 may be an application (for example, a conference application or a slide application) other than the video application, the application 2 may be an application other than the game application, and the device form of the electronic device 100 may alternatively be a landscape display form. This is not limited in this application.

In some other application scenarios, if the electronic device 100 displays the interface 1 of the application 1, and the interface of the application 1 includes a vertical core element, the electronic device 100 may receive a screen splitting operation (for example, an operation of sliding upward from a lower edge of a display) of a user, and in response to the screen splitting operation, determine, based on the interface 1, that display content on the electronic device 100 is in a vertical immersive scenario. The electronic device 100 may determine, based on a mapping relationship between the vertical immersive scenario and a split-screen mode, that a to-be-executed split-screen mode is a left-right split-screen mode, display information about the application 1 (for example, an interface 1, a partial picture or element of the interface 1, and an icon of the application 1 or a name of the application) in a screen splitting waiting area and display one or more application icons (including an icon of an application 2) in an icon display area based on the left-right split-screen mode. The electronic device 100 may receive an operation of the user for the icon of the application 2, and in response to the operation, display an interface of one split-screen application (for example, the application 1) in a left split-screen area and display an interface of another split-screen application (for example, the application 2) in a right split-screen area based on the left-right split-screen mode. For another implementation, refer to the foregoing descriptions. Details are not described herein again.

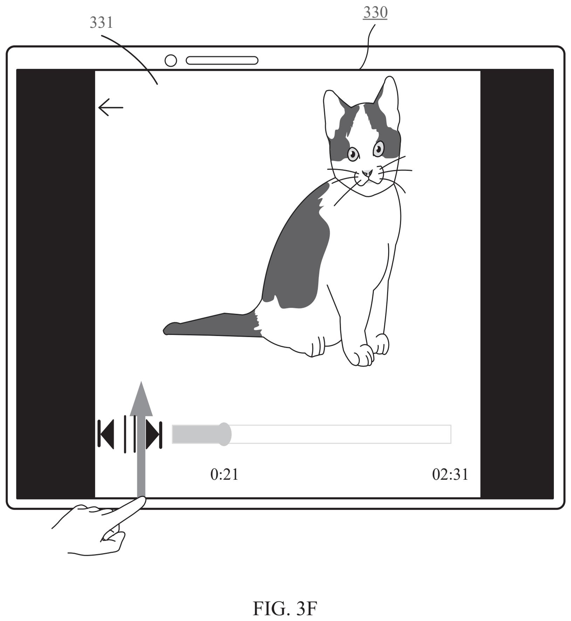

For example, as shown in FIG. 3F, the device form of the electronic device 100 is the landscape display, and the electronic device 100 displays a full-screen playing interface 330 of the video application. A video 331 is displayed on the full-screen playing interface 330, and the video 331 is a vertical video. For other content on the full-screen playing interface 330, refer to related descriptions of the full-screen playing interface 230 shown in FIG. 2D. Details are not described herein again.

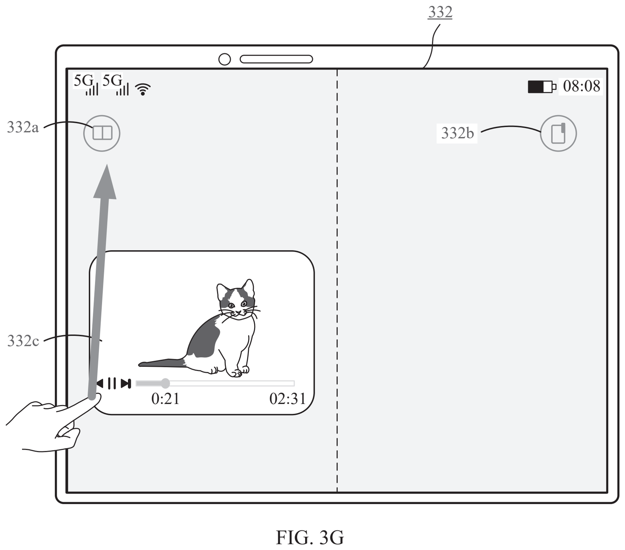

The electronic device 100 may receive an operation of sliding upward from the lower edge of the display by the user, and in response to the operation, determine, based on the vertical video on the full-screen playing interface 330, that a scenario of currently displayed content is the vertical immersive scenario, and display a split-screen mode selection interface 332 shown in FIG. 3G. The split-screen mode selection interface 302 includes a left-right split-screen mode control.

Optionally, as shown in FIG. 3G, the split-screen mode selection interface 332 may further include an application small window 332c and one or more split-screen mode controls, including a left-right split-screen mode control 332a. In some embodiments, the one or more split-screen mode controls may further include a full-screen and floating window mode control 332b. The one or more split-screen mode controls may indicate one or more split-screen modes that can be executed in the horizontal immersive scenario. For other content on the split-screen mode selection interface 332, refer to related descriptions in the embodiment shown in FIG. 2E. Details are not described herein again.

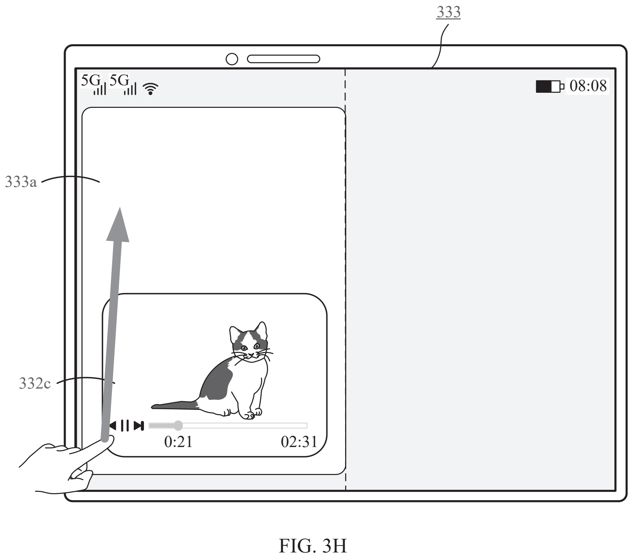

In a process in which the application small window 332c moves along a user operation, when the electronic device 100 detects that a distance between the application small window 332c and the left-right split-screen mode control 332a is less than a preset distance or the application small window 332c and the left-right split-screen mode control 332a overlap, the electronic device 100 may display a split-screen mode display interface 333 shown in FIG. 3H.

Optionally, as shown in FIG. 3H, the split-screen mode display interface 333 may include a split-screen touch target 333a and the application small window 332c. The split-screen touch target 333a is a left-half area of the display, and the split-screen touch target 333a may indicate that the to-be-executed split-screen mode is the left-right split-screen mode. For specific content on the application small window 332c, refer to corresponding content in the embodiment shown in FIG. 3G. Details are not described herein again.

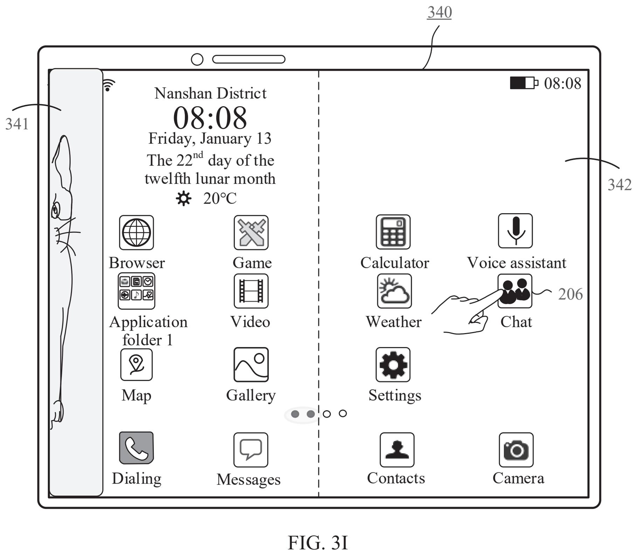

After the application small window 332c moves to the split-screen touch target 333a along a sliding operation of the user, in response to a release operation of the user, the electronic device 100 may display, based on the left-right split-screen modes, a to-be-split-screen interface 340 shown in FIG. 3I.

As shown in FIG. 3I, the to-be-split-screen interface 340 may include a screen splitting waiting area 341 and an icon display area 342, and the screen splitting waiting area 341 may be located on a left part or a right part of the display. The screen splitting waiting area 341 may be displayed on the icon display area 342 in an overlay manner. In some other embodiments, the screen splitting waiting area 341 and the icon display area 342 may alternatively be two areas that are on the display and that do not overlap with each other. For other specific descriptions of the screen splitting waiting area 341 and the icon display area 342, refer to related descriptions in the foregoing embodiment.

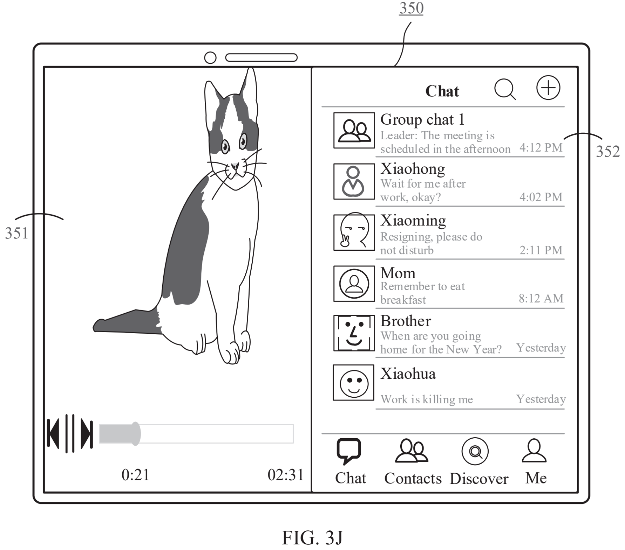

The electronic device 100 may receive an operation of the user for a chat application icon 206, and in response to the operation, display, based on the left-right split-screen mode, a left-right split-screen interface 350 shown in FIG. 3J. The left-right split-screen interface 350 may be used to simultaneously display an interface of the video application and an interface of a chat application in a split-screen manner.

As shown in FIG. 3J, the left-right split-screen interface 350 may include a left split-screen area 351 and a right split-screen area 352. The left split-screen area 351 is a left area of the display, and the right split-screen area 352 is a right area of the display. A size of the left split-screen area may be the same as or different from a size of the right split-screen area. The interface of the video application may be displayed in the left split-screen area 351. The interface may be the full-screen playing interface 330 shown in FIG. 3F. The interface of the chat application may be displayed in the right split-screen area 352.

It may be understood that the embodiment shown in FIG. 3F to FIG. 3J is merely an example. In this embodiment of this application, the application 1 may be an application (for example, a conference application or a slide application) other than the video application, the application 2 may be an application other than the chat application, and the device form of the electronic device 100 may alternatively be a portrait display form. This is not limited in this application.

In this application, the electronic device in a form of foldable screen is used as an example of a screen splitting scenario. It should be understood that an electronic device in a form of non-foldable screen may also implement screen splitting. A physical shape of the foldable screen in the accompanying drawings of this application is merely an example. This is not limited in this application.

In some embodiments, the electronic device 100 displays the interface 1 of the application 1, the interface 1 includes a core element, and the core element is not in a full-screen mode (for example, a full-screen playing mode of a video or a slide show mode of a PPT). In this case, after screen splitting, the electronic device may automatically set the core element that is not in the full-screen mode before screen splitting to the full-screen mode.

In some embodiments, a full-screen mode of an interface element in a split-screen mode means that the element occupies an entire area of one of split-screen windows, or may be understood as that the element is displayed in a maximum display size in an area that can be occupied by the element. For example, after screen splitting, a video playing window occupies an entire area of one of the split-screen windows in the split-screen mode, or it may be understood that after screen splitting, a video playing window is displayed in a maximum display size in one of the split-screen windows. For details about other elements such as a PPT, a conference, and a video call, refer to that of the video.

Specifically, in some embodiments, the electronic device 100 may receive a screen splitting operation (for example, an operation of sliding upward from a lower edge of a display) of a user, and in response to the screen splitting operation, determine a to-be-executed split-screen mode based on the interface 1 of the application 1, display information about the application 1 (for example, the interface 1, a partial picture or element of the interface 1, and an icon of the application 1 or a name of the application) in a screen splitting waiting area based on the to-be-executed split-screen mode, and display one or more application icons (including an icon of an application 2) in an icon display area. The electronic device 100 may receive an operation of the user for the icon of the application 2 in the icon display area, and in response to the operation, display an interface 2 of the application 1 in an area 1 and display an interface of the application 2 in an area 2 based on the to-be-executed split-screen mode. On the interface 2 in the area 1, the core element is in the full-screen mode.

In some embodiments, a maximum display size of the core element on the interface 2 may be a size of a display area corresponding to the application 1. For example, when the area 1 corresponding to the interface 2 is an entire area of the display, the maximum display size of the core element on the interface 2 may be a size of the display. When the area 1 corresponding to the interface 2 is an upper-half area of the display, the maximum display size of the core element on the interface 2 may be a size of the upper-half area.

In some embodiments, if the core element is considered as an element itself, and an aspect ratio of the core element on the interface 1 needs to be the same as an aspect ratio of the core element on the interface 2, the maximum display size of the core element on the interface 2 may be that a horizontal edge is the same as a horizontal edge of the area 1, and a vertical edge is slightly less than a vertical edge of the area 1, or a vertical edge is the same as a vertical edge of the area 1, and a horizontal edge is slightly less than a horizontal edge of the area 1. In this case, black borders or blank areas may be displayed on an upper side and a lower side (or a left side and a right side) of the core element in the area 1. For a maximum display size of the core element on the interface 1, refer to the foregoing content. Details are not described herein again. For example, if the core element is a video, after screen splitting, black borders may be added to a left side and a right side or an upper side and a lower side of the video based on a requirement on an aspect ratio of the video. In some other embodiments, if the core element is considered as a video playing window, the core element is still in a maximum size mode after screen splitting.

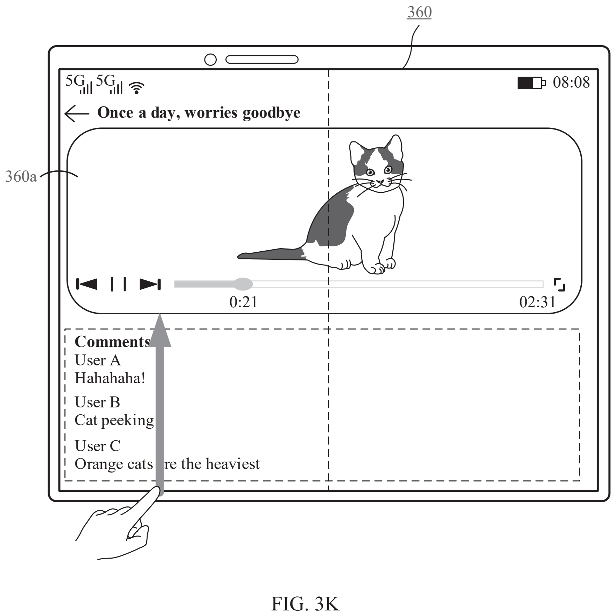

For example, as shown in FIG. 3K, the electronic device 100 displays a video playing interface 360 of a video application. The video playing interface 360 may include a video playing window 360a. A video that is being played or to be played may be displayed in the video playing window 360a, and a display form of the video is horizontal display. The video playing interface 360 may further include other content such as a comment area and a title. Details are not described herein again. On the video playing interface 360, the video is in a window playing mode instead of a full-screen playing mode.

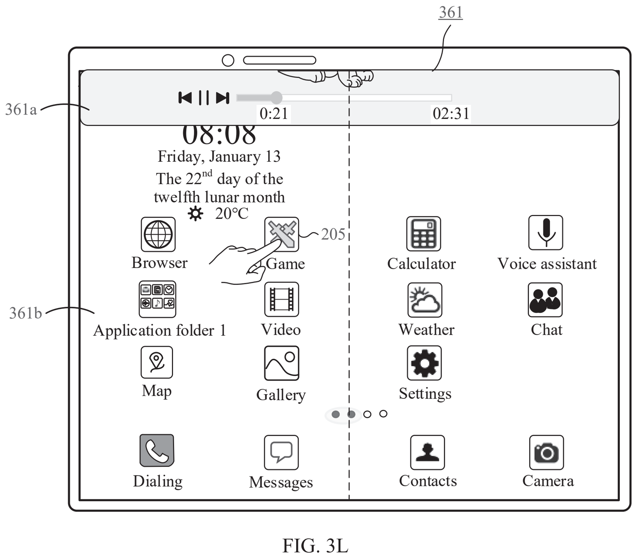

The electronic device 100 may receive an operation of sliding upward from the lower edge of the display by the user, and display a split-screen mode selection interface and/or a split-screen mode display interface in response to the operation. For specific content on the two interfaces, refer to the foregoing related embodiment. In some other embodiments, the electronic device 100 may alternatively respond to an operation of sliding upward from the lower edge of the display by the user, determine, based on the display form of the video, that the to-be-executed split-screen mode is an up-down split-screen mode, and display, based on the up-down split-screen mode, a to-be-split-screen interface 361 shown in FIG. 3L.

As shown in FIG. 3L, the to-be-split-screen interface 361 may include a screen splitting waiting area 361a and an icon display area 361b, and the screen splitting waiting area 361a may be located on an upper part or a lower part of the display. The icon display area 361b may occupy an entire area or a partial area of the display. The screen splitting waiting area 361a may be displayed on the icon display area 361b in an overlay manner. In some other embodiments, the screen splitting waiting area 341 and the icon display area 342 may alternatively be two areas that do not overlap with each other. For other specific descriptions of the screen splitting waiting area 361a and the icon display area 361b, refer to related descriptions in the foregoing embodiment.

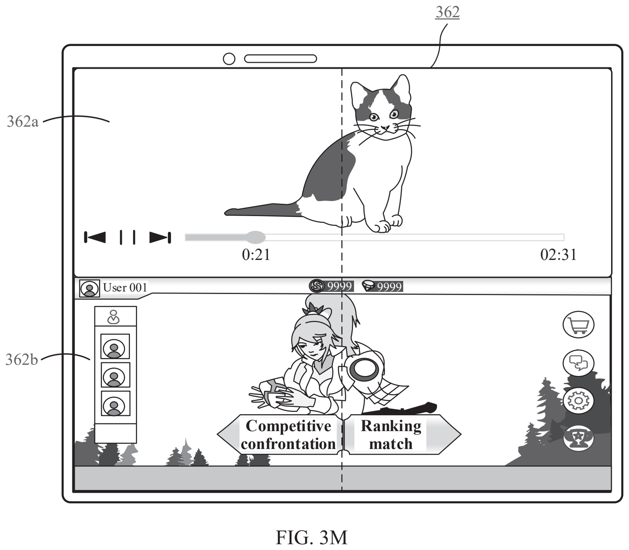

The electronic device 100 may receive an operation of the user for a game application icon 205, and in response to the operation, display, based on the up-down split-screen mode, an up-down split-screen interface 362 shown in FIG. 3M. The up-down split-screen interface 362 may be used to simultaneously display an interface of the video application and an interface of a game application in a split-screen manner.

As shown in FIG. 3M, the up-down split-screen interface 362 may include an upper split-screen area 362a and a lower split-screen area 362b. The upper split-screen area 362a is an upper area of the display, and the lower split-screen area 362b is a lower area of the display. A size of the upper split-screen area may be the same as or different from a size of the lower split-screen area. The interface of the video application may be displayed in the upper split-screen area 362a, and on the interface, the video is played in the full-screen mode. The interface of the game application may be displayed in the lower split-screen area 362b.

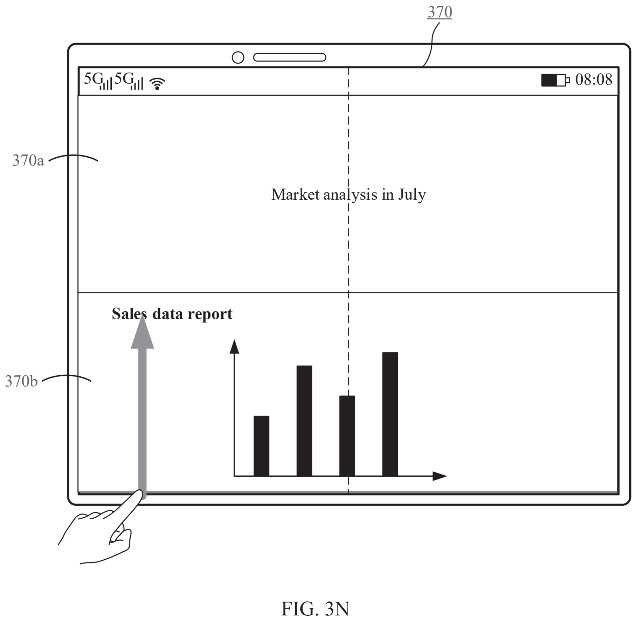

For another example, as shown in FIG. 3N, the electronic device 100 displays a slide browsing interface 370 used by a slide (PPT) application, and more than one page of PPT, including a PPT element 370a and a PPT element 370b, may be displayed on the slide browsing interface 370. A display form of the PPT element 370a and a display form of the PPT element 370b are both horizontal display, and are not displayed in the full-screen mode (for example, the slide show mode) on the slide browsing interface 370.

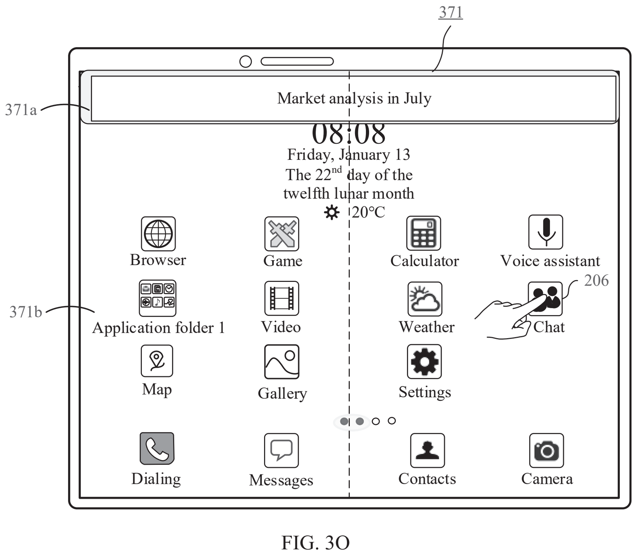

The electronic device 100 may receive an operation of sliding upward from the lower edge of the display by the user, and display a split-screen mode selection interface and/or a split-screen mode display interface in response to the operation. For specific content on the two interfaces, refer to the foregoing related embodiment. In some other embodiments, the electronic device 100 may alternatively respond to an operation of sliding upward from the lower edge of the display by the user, determine, based on the display form of the PPT element 370a, that the to-be-executed split-screen mode is an up-down split-screen mode, and display, based on the up-down split-screen mode, a to-be-split-screen interface 371 shown in FIG. 3O.

As shown in FIG. 3O, the to-be-split-screen interface 371 may include a screen splitting waiting area 371a and an icon display area 371b. An entire picture or a partial picture of the PPT element 370a may be displayed in the screen splitting waiting area 371a, and one or more application icons, including a chat application icon 206, may be displayed in the icon display area 371b. The screen splitting waiting area 371a may be located on an upper part or a lower part of the display, and the icon display area 371b may occupy an entire area or a partial area of the display. For a location relationship between the screen splitting waiting area 371a and the icon display area 371b, refer to related descriptions in the embodiment shown in FIG. 3L.

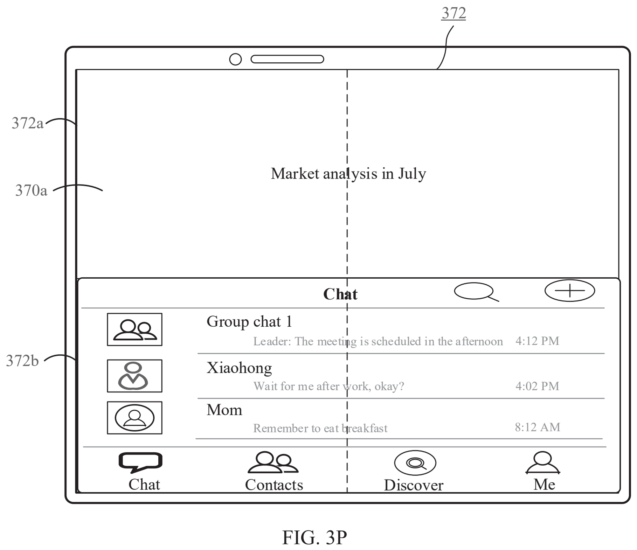

The electronic device 100 may receive an operation of the user for the chat application icon 206, and in response to the operation, display, based on the up-down split-screen mode, an up-down split-screen interface 372 shown in FIG. 3P. The up-down split-screen interface 372 may be used to simultaneously display an interface of a PPT application and an interface of a chat application in a split-screen manner.

As shown in FIG. 3P, the up-down split-screen interface 372 may include an upper split-screen area 372a and a lower split-screen area 372b. The upper split-screen area 372a is an upper area of the display, and the lower split-screen area 372b is a lower area of the display. A size of the upper split-screen area may be the same as or different from a size of the lower split-screen area. The interface of the PPT application may be displayed in the upper split-screen area 372a, and the interface includes the PPT element 370a. On the interface, the PPT element 370a is displayed in the full-screen mode. In addition, in the upper split-screen area 372a, the PPT is in a showing state, that is, the electronic device 100 may switch, in response to an operation of the user for the PPT element 370a, the PPT element displayed in the upper split-screen area 372a. The interface of the chat application may be displayed in the lower split-screen area 372b.

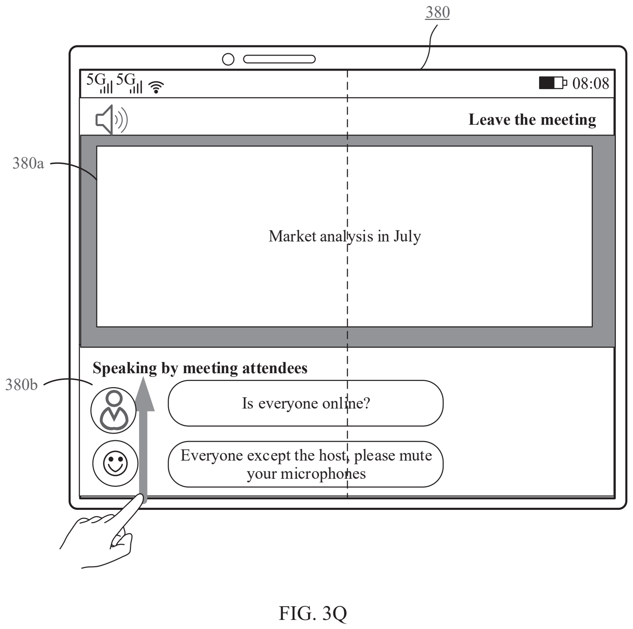

For another example, as shown in FIG. 3Q, the electronic device 100 displays a conference window interface 380 of a conference application, a conference window 380a may be displayed on the conference window interface 380, and the conference window is not displayed in the full-screen mode. Other content such as a member chat record 380b may further be displayed on the conference window interface 380. A display form of the conference window 380a is horizontal display.

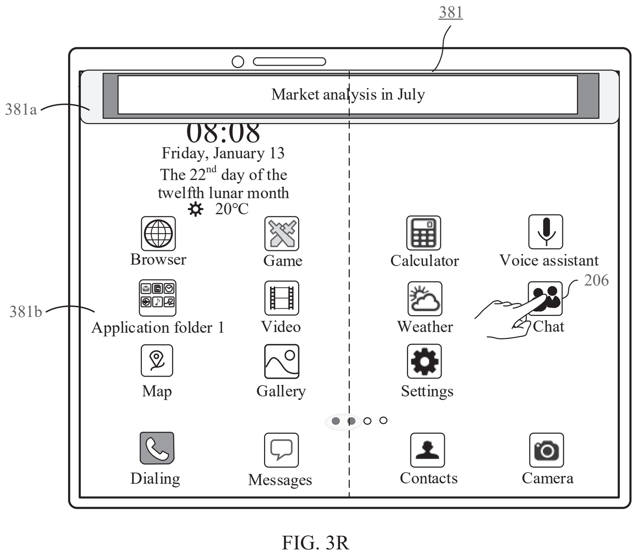

The electronic device 100 may receive an operation of sliding upward from the lower edge of the display by the user, and display a split-screen mode selection interface and a split-screen mode display interface in response to the operation. For specific content on the two interfaces, refer to the foregoing related embodiment. In some other embodiments, the electronic device 100 may alternatively respond to an operation of sliding upward from the lower edge of the display by the user, determine, based on the display form of the conference window 380a, that the to-be-executed split-screen mode is an up-down split-screen mode, and display, based on the up-down split-screen mode, a to-be-split-screen interface 381 shown in FIG. 3R.

As shown in FIG. 3R, the to-be-split-screen interface 381 may include a screen splitting waiting area 381a and an icon display area 381b. An entire picture or a partial picture of the conference window 380a may be displayed in the screen splitting waiting area 381a, and one or more application icons, including a chat application icon 206, may be displayed in the icon display area 371b. The screen splitting waiting area 381a may be located on an upper part or a lower part of the display, and the icon display area 381b may occupy an entire area or a partial area of the display. For a location relationship between the screen splitting waiting area 381a and the icon display area 381b, refer to related descriptions in the embodiment shown in FIG. 3L.

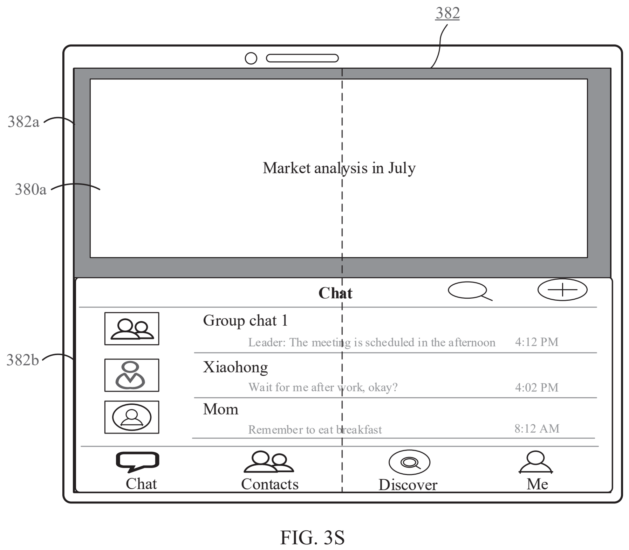

The electronic device 100 may receive an operation of the user for the chat application icon 206, and in response to the operation, display, based on the up-down split-screen mode, an up-down split-screen interface 382 shown in FIG. 3S. The up-down split-screen interface 382 may be used to simultaneously display an interface of a conference application and an interface of a chat application in a split-screen manner.

As shown in FIG. 3S, the up-down split-screen interface 382 may include an upper split-screen area 382a and a lower split-screen area 382b. The upper split-screen area 382a is an upper area of the display, and the lower split-screen area 382b is a lower area of the display. A size of the upper split-screen area may be the same as or different from a size of the lower split-screen area. The interface of the conference application may be displayed in the upper split-screen area 382a, the interface includes the conference window 380a, and on the interface, the conference window 380a is in the full-screen mode. The interface of the chat application may be displayed in the lower split-screen area 382b. Optionally, the conference window 380a may also be switched to the member chat record 380b in the conference.

It may be understood that the embodiment shown in FIG. 3K to FIG. 3M, the embodiment shown in FIG. 3N to FIG. 3P, and the embodiment shown in FIG. 3Q to FIG. 3S are merely examples for description. When the interface 1 of the application 1 includes a core element in a non-full-screen mode, in response to a screen splitting operation of the user, when displaying the interface of the application 1 and the interface of the application 2 in a split-screen manner, the electronic device 100 may display the core element in a full-screen mode in a split-screen area corresponding to the application 1. In this embodiment of this application, the device form may alternatively be a form other than the landscape display, a display form of the core element on the interface 1 of the application 1 may alternatively be vertical display, a split-screen mode may alternatively be another split-screen mode, and the application 1 and the application 2 may alternatively be other applications (for example, a conference application or a slide application). This is not limited herein in this application.

In some other embodiments, if the interface 1 of the application 1 includes a game picture, and the game picture is not in a full-screen mode, after receiving a screen splitting operation of the user for the interface 1, when displaying the interface of the application 1 in an area 1, the electronic device 100 may display the game picture in the area 1 in the full-screen mode. Specific step content may be similar to related descriptions in the embodiments shown in FIG. 3K to FIG. 3S. Details are not described herein again.

In some embodiments, the electronic device 100 may determine, based on a to-be-executed split-screen mode and a type of each of a plurality of split-screen applications, a location relationship (which is also referred to as a screen splitting location in this application) between interfaces of the plurality of split-screen applications during split-screen display.

In some embodiments, types of applications may include an interactive type and a browsing type, and a classification standard of a type of an application may be determined based on a frequency of interaction between the user and the application. For example, if a frequency of interaction between the user and an application is greater than a preset frequency (for example, 5 times/minute, or 10 times/minute), the application is an interactive application; or if a frequency of interaction between the user and an application is less than a preset frequency, the application is a browsing application. It should be noted that the to-be-executed split-screen mode may be determined in the manner described in the foregoing embodiment, or may be determined in another manner (for example, based on a screen splitting operation of the user). This is not limited in this application.

In some embodiments, a type of an application may be obtained based on information preset in a system. For example, a list of interactive applications is preset in the system. If an application is in the list, the application is determined as an interactive application. Alternatively, a type of an application may be determined by obtaining information about the application, for example, obtaining information such as a name and a provider of an application, and determining a type of the application based on the information. Alternatively, a type of an application may be determined by obtaining an element on an application interface. For example, if a chat window currently exists on an application interface, it is determined that the application is currently an interactive application; or if a video window exists on an interface that is of the same application and that is obtained through switching, it may be determined that the application is currently a browsing application.

In some embodiments, after receiving a screen splitting operation of the user for the interface 1 of the application 1, the electronic device 100 determines that the to-be-executed split-screen mode is an up-down split-screen mode, information about the application 1 (for example, the interface 1, a partial picture or element of the interface 1, and an icon of the application 1 or a name of the application) is displayed in a screen splitting waiting bar, an icon of an application 2 is displayed in an icon display area, and the application 1 and the application 2 are of a same type (both of the browsing type or both of the interactive type). The electronic device 100 may receive an operation of the user for the icon of the application 2, and in response to the operation, display the interface of the application 1 in an upper split-screen area of a display, and display an interface of the application 2 in a lower split-screen area of the display.

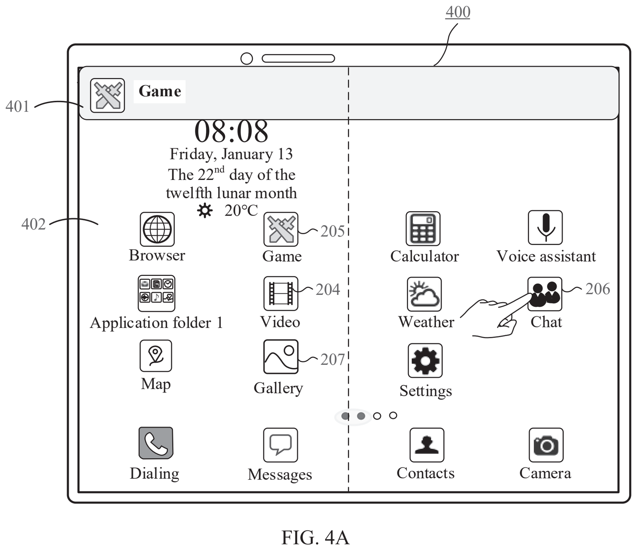

For example, as shown in FIG. 4A, the electronic device 100 displays a to-be-split-screen interface 400. The to-be-split-screen interface 400 may include a screen splitting waiting area 401 and an icon display area 402. Information about a game application, for example, an application icon of the game application, is displayed in the screen splitting waiting area 401, and indicates, to the user, that split-screen applications include the game application. One or more application icons, for example, a video application icon 204 and a chat application icon 206, are displayed in the icon display area 402. The screen splitting waiting area 401 is located in an upper area of the display, and indicates, to the user, that the to-be-executed split-screen mode is the up-down split-screen mode. For other content on the to-be-split-screen interface 400, refer to related descriptions in the embodiment shown in FIG. 2G. Details are not described herein again.

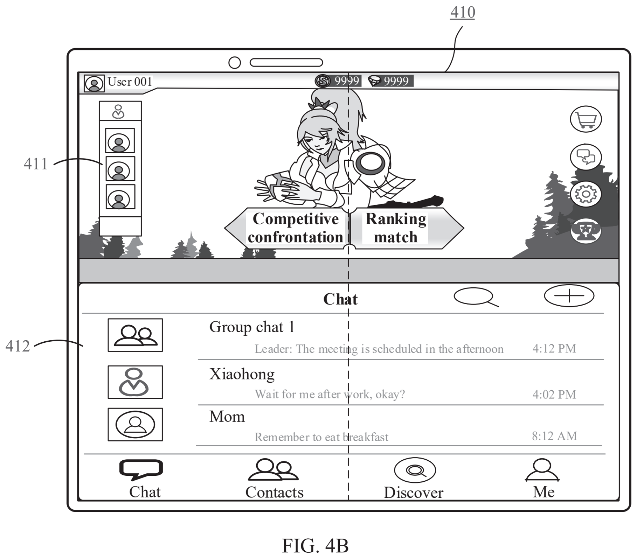

The electronic device 100 may receive an operation of the user for the chat application icon 206 in the icon display area 402, and in response to the operation, determine that the split-screen applications further include a chat application, and display, based on a type of the game application and a type of the chat application, an up-down split-screen interface 410 shown in FIG. 4B.

As shown in FIG. 4B, the up-down split-screen interface 410 may include an upper split-screen area 411 and a lower split-screen area 412, where the upper split-screen area 411 is an upper area of the display, and the lower split-screen area 412 is a lower area of the display. A display size of the upper split-screen area 411 may be the same as or different from a display size of the lower split-screen area 412. An interface of the game application is displayed in the upper split-screen area 411, and an interface of the chat application is displayed in the lower split-screen area 412.

It should be noted that, because both the game application and the chat application are interactive applications, the electronic device 100 may display, in the upper split-screen area 411 based on a determining order of the split-screen applications, an interface of an application that is first determined as a split-screen application (namely, the game application), and display, in the lower split-screen area 412, an interface of an application that is later determined as a split-screen application (namely, the chat application).

In some other embodiments, after receiving a screen splitting operation of the user for the interface 1 of the application 1, the electronic device 100 determines that the to-be-executed split-screen mode is an up-down split-screen mode, information about the application 1 (for example, the interface 1, a partial picture or element of the interface 1, and an icon of the application 1 or a name of the application) is displayed in a screen splitting waiting bar, an icon of an application 2 is displayed in an icon display area, the application 1 is an interactive application, and the application 2 is a browsing application. The electronic device 100 may receive an operation of the user for the icon of the application 2, and in response to the operation, display the interface of the application 1 in a lower split-screen area of a display, and display an interface of the application 2 in an upper split-screen area of the display.

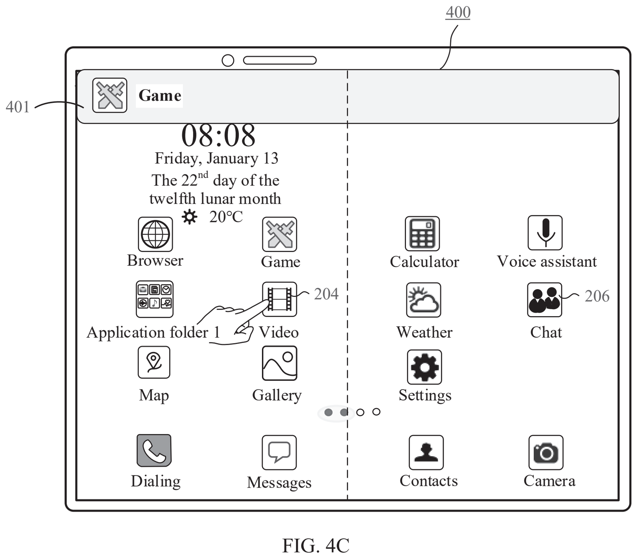

For another example, as shown in FIG. 4C, the electronic device 100 displays a to-be-split-screen interface 400. For specific content on the to-be-split-screen interface 400, refer to related descriptions in the embodiment shown in FIG. 4A. Details are not described herein again.

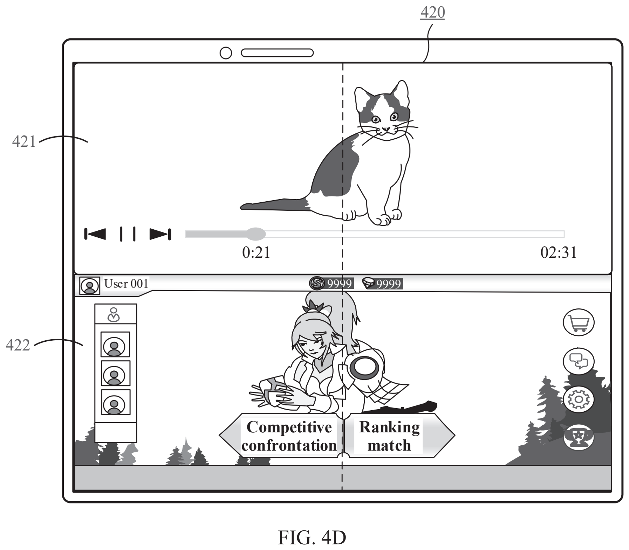

The electronic device 100 may receive an operation of the user for a video application icon 204 in an icon display area 402, and in response to the operation, determine that another split-screen application is a video application, and display, based on a type of a game application and a type of the video application, an up-down split-screen interface 420 shown in FIG. 4D.

As shown in FIG. 4D, the up-down split-screen interface 420 may include an upper split-screen area 421 and a lower split-screen area 422, where the upper split-screen area 421 is an upper area of the display, and the lower split-screen area 422 is a lower area of the display. A display size of the upper split-screen area 421 may be the same as or different from a display size of the lower split-screen area 422. An interface of the video application is displayed in the upper split-screen area 421, and an interface of the game application is displayed in the lower split-screen area 422.

It should be noted that, because the game application is an interactive application, and the video application is a browsing application, after determining that the to-be-executed split-screen mode is the up-down split-screen mode, the electronic device 100 may display, in the upper split-screen area based on a preset mapping relationship between an application type and a screen splitting location, the video application interface corresponding to the browsing application, and display, in the lower split-screen area 422, the game application interface corresponding to the interactive application. The interactive application is automatically placed in the lower split-screen area 422 that is convenient for the user to perform an operation, so that an interaction operation between the user and the application can be facilitated, and user experience is improved.

In some embodiments, if the application 1 is an interactive application, the application 2 is a browsing application, and the to-be-executed split-screen mode is a left-right split-screen mode, during split-screen display, the interface of the application 2 may be displayed in a left area (namely, a left split-screen area) of the display, and the interface of the application 1 may be displayed in a right area (namely, a right split-screen area) of the display. If an application type of the application 1 and an application type of the application 2 are the same, the application 1 is first determined as a split-screen application, and the to-be-executed split-screen mode is a left-right split-screen mode, during split-screen display, the interface of the application 1 may be displayed in a left split-screen area, and the interface of the application 2 may be displayed in a right split-screen area.

It should be noted that a location at which an application of a specific type is placed may be determined based on a user setting, a user habit, a handheld status of a device, or the like. For example, in some embodiments, if the user is accustomed to typing with the left hand, an interactive application may always be automatically displayed in the left split-screen area during left-right screen splitting. It may be understood that the embodiment shown in FIG. 4A to FIG. 4D is merely an example for description. The electronic device 100 may determine, based on types of a plurality of split-screen applications, a location relationship between interfaces of the plurality of split-screen applications during split-screen display. In another embodiment of this application, the types of the applications may further include more types, a mapping relationship between the application type and the screen splitting location may further include another mapping relationship, and a split-screen application may alternatively be an application different from that in the foregoing embodiment. This is not limited in this application.

According to the screen splitting method provided in this embodiment of this application, the location relationship between the interfaces of the plurality of split-screen applications during split-screen display may be determined based on the preset mapping relationship between the application type and the screen splitting location, so that the user can operate an interactive application in screen splitting.

In some application scenarios, the electronic device 100 displays application interfaces of a plurality of split-screen applications (including the application 1 and an application 2) in a split-screen manner. In this case, the electronic device 100 may receive an operation of creating a combination icon by a user, and display, in response to the operation, the combination icon on a home screen based on the plurality of split-screen applications and a current split-screen mode. The combination icon may be used to trigger the electronic device 100 to display the application interfaces of the plurality of split-screen applications in the split-screen manner. In this case, a split-screen mode used by the electronic device 100 is the same as the split-screen mode used by the electronic device 100 when receiving the operation of creating the combination icon, and a location relationship between the application interfaces of the plurality of split-screen applications (namely, a screen splitting location) is the same as a screen splitting location when the combination icon is created.

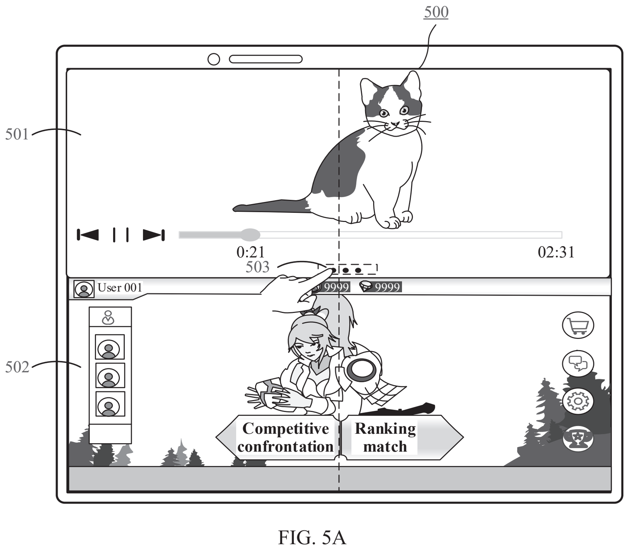

For example, as shown in FIG. 5A, the electronic device 100 displays an up-down split-screen interface 500. The up-down split-screen interface 500 may include an upper split-screen area 501 and a lower split-screen area 502. An interface of a video application is displayed in the upper split-screen area 501, and an interface of a game application is displayed in the lower split-screen area 502. In addition, the up-down split-screen interface 500 further includes a menu control 503, and the menu control 503 may be configured to trigger the electronic device 100 to display a menu bar.

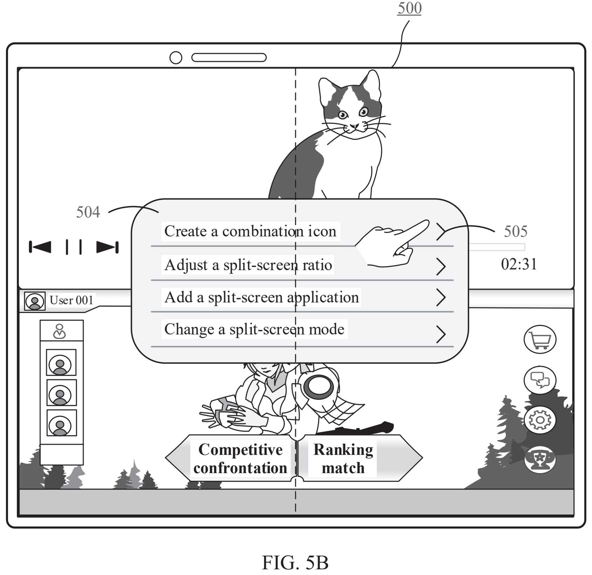

The electronic device 100 may receive an operation of the user for the menu control 503, and display a menu bar 504 on the up-down split-screen interface 500 in response to the operation, as shown in FIG. 5B.

As shown in FIG. 5B, the menu bar 504 may include one or more entries, for example, a "Create a combination icon" entry 505, an "Adjust a split-screen ratio" entry, an "Add a split-screen application" entry, and a "Change a split-screen mode" entry. The "Create a combination icon" entry 505 may be used to trigger the electronic device 100 to create a combination icon based on the current split-screen mode and the plurality of split-screen applications. The another entry may be used to trigger the electronic device 100 to display a corresponding setting option. For example, the "Adjust a split-screen ratio" entry may be used to trigger the electronic device 100 to display a plurality of split-screen ratio options. Herein, only an example is used to describe a case in which the menu bar 504 may include one or more entries. Specific content on the one or more entries is not limited in this application.

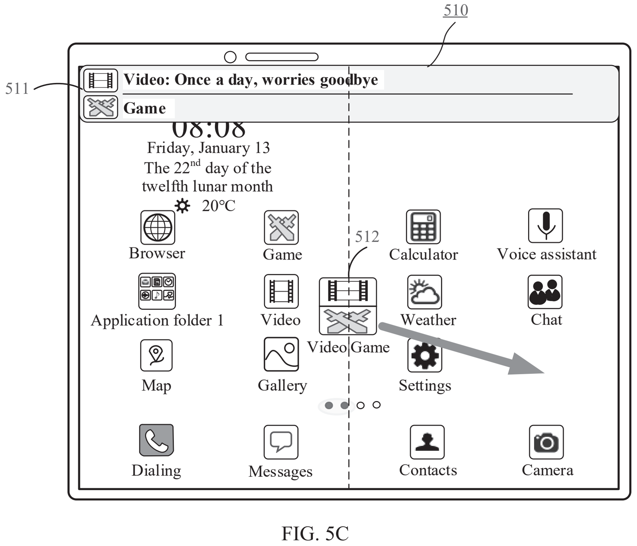

The electronic device 100 may receive an operation of the user for the "Create a combination icon" entry 505, and display, in response to the operation, a combination icon creation interface 510 shown in FIG. 5C.

As shown in FIG. 5C, the home screen may be displayed on the combination icon creation interface 510. For specific content on the home screen, refer to the specific descriptions of the home screen 200 shown in FIG. 2A. Optionally, the combination icon creation interface 510 may further include a temporary waiting bar 511 and a combination icon 512. The temporary waiting bar 511 may indicate, to the user, that the electronic device 100 is currently in a temporary waiting state. After the temporary waiting state ends, the electronic device 100 may redisplay the previous up-down split-screen interface 500. The temporary waiting bar 511 may further indicate, to the user, that the previous split-screen mode is an up-down split-screen mode, and the split-screen applications include the video application, the game application, and the like. The combination icon 512 may be an icon formed by splicing a video application icon and a game application icon vertically. In addition, in the combination icon 512, a location relationship between the video application icon and the game application icon is consistent with a location relationship between the application interfaces on the up-down split-screen interface 500, that is, the video application icon is above the game application icon. The combination icon 512 may further include a combination name, for example, "Video|Game", indicating, to the user, names of a plurality of applications corresponding to the combination icon. It should be noted that a display size of the combination icon 512 may be the same as a display size of another application icon, or may be greater than a display size of another application icon.

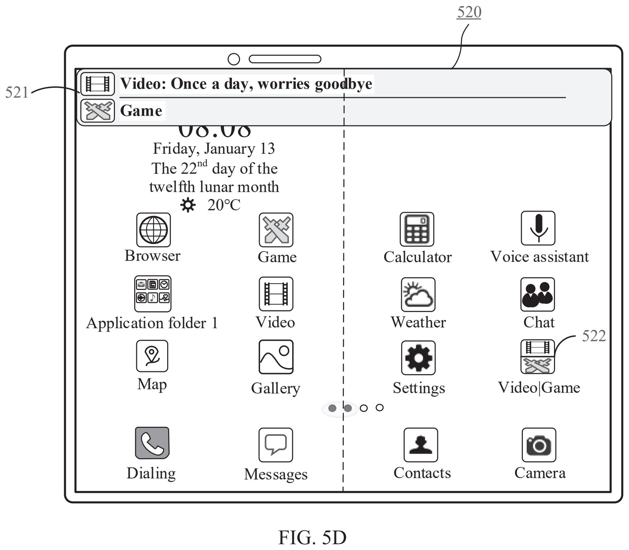

After the combination icon 522 is displayed on the combination icon creation interface 520, as shown in FIG. 5C, the electronic device 100 may move the combination icon 522 to a blank location on the combination icon creation interface 520. When the combination icon 522 is moved to the blank location, as shown in FIG. 5D, the electronic device 100 displays the combination icon 522 at the blank location by using the display size that is the same as the display size of the another application icon. It should be noted that, if the display size of the newly created combination icon 522 is greater than the display size of the another application icon, in a process of moving the combination icon 522 to the blank location on the combination icon creation interface 520, the electronic device 100 may gradually decrease the display size of the combination icon 522 until the display size of the combination icon 522 is the same as the display size of the another application icon.

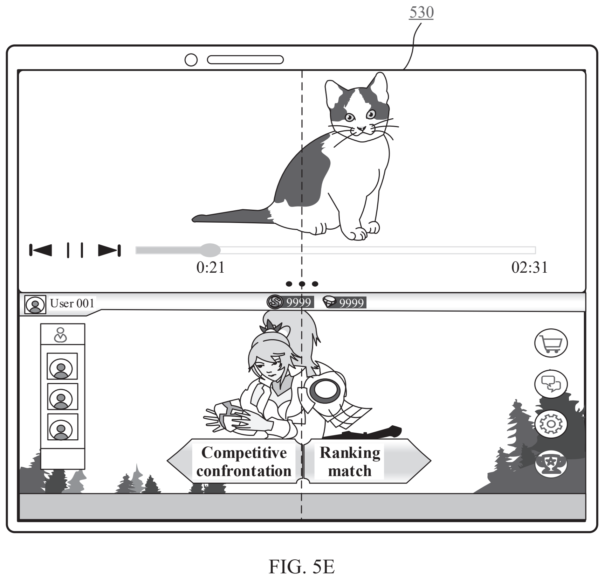

After the combination icon 522 is moved to the blank location on the combination icon creation interface 520, the combination icon is created. In this case, as shown in FIG. 5E, the electronic device 100 may redisplay the up-down split-screen interface 500.

In some other embodiments, the electronic device 100 may alternatively directly create a combination icon in a blank area on the home screen after detecting that the user taps a function of "Create a combination icon" 505.

In some embodiments, when detecting that a current split-screen interface meets a specific condition (for example, detecting that display duration of the split-screen interface is greater than preset duration, or detecting that a quantity of times of using the split-screen interface reaches a preset quantity of times), the electronic device 100 may alternatively automatically create a combination icon based on the current split-screen interface.

It may be understood that the embodiment shown in FIG. 5A to FIG. 5E merely describes an example of a process of creating a combination icon. In this embodiment of this application, the split-screen application may be an application different from that in the foregoing embodiment, and the split-screen applications may include more applications. A split-screen mode used when creation of a combination icon is triggered may alternatively be another split-screen mode. This is not limited in this application.

According to the screen splitting method provided in this embodiment of this application, a combination icon may alternatively be created based on a split-screen application and a current split-screen mode, so that the electronic device 100 efficiently displays interfaces of a plurality of split-screen applications in the split-screen manner based on the split-screen mode and the split-screen application that correspond to the combination icon.

After creating the combination icon, the electronic device 100 may efficiently display the application interfaces of the plurality of split-screen applications in the split-screen manner by using the combination icon.

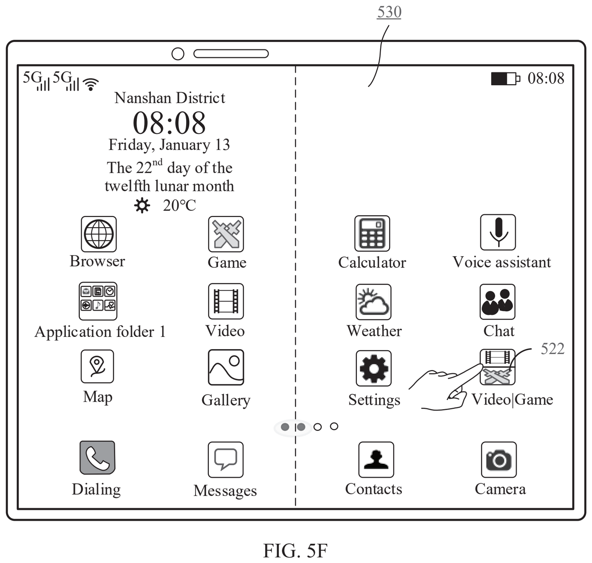

For example, as shown in FIG. 5F, the electronic device 100 may display a home screen 530. One or more application icons and the combination icon 522 may be displayed on the home screen 530. For other content on the home screen 530, refer to related descriptions in the embodiment shown in FIG. 2A.

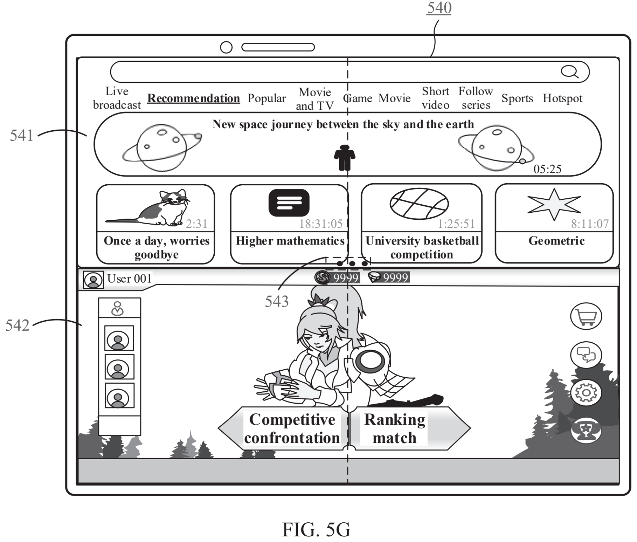

The electronic device 100 may receive an operation of the user for the combination icon 522, and display, in response to the operation, an up-down split-screen interface 540 shown in FIG. 5G.

As shown in FIG. 5G, the up-down split-screen interface 540 may include an upper split-screen area 541, a lower split-screen area 542, and a menu control 543, where the upper split-screen area 541 is an upper area of the display, and the lower split-screen area 542 is a lower area of the display. The interface of the video application is displayed in the upper split-screen area 541, and the interface of the game application is displayed in the lower split-screen area 542. It should be noted that the interface of the video application displayed in the upper split-screen area 541 may be different from the interface of the video application displayed in the upper split-screen area 501 shown in FIG. 5A. For example, as shown in FIG. 5G, the interface of the video application displayed in the upper split-screen area 541 may be a main interface of the video application. In some embodiments, the interface of the video application displayed in the upper split-screen area 541 may alternatively be the same as the interface of the video application displayed in the upper split-screen area 501 shown in FIG. 5A. Similarly, the interface of the game application displayed in the lower split-screen area 542 may also be the same as or different from the interface of the game application displayed in the lower split-screen area 502 shown in FIG. 5A. This is not limited in this application.

It may be understood that the embodiment shown in FIG. 5F to FIG. 5G merely describes an example in which a combination icon may be used to trigger the electronic device 100 to display a split-screen interface corresponding to the combination icon. In this embodiment of this application, the application 1 may alternatively be an application other than the video application, the application 2 may alternatively be an application other than the game application, and the split-screen interface may alternatively be a left-right split-screen interface or another split-screen interface. This is not limited in this application.

In some embodiments, the electronic device 100 displays interfaces of a plurality of split-screen applications in the split-screen manner. If the electronic device detects that a device form changes (for example, the electronic device 100 switches between a landscape mode and a portrait mode, or the display of the electronic device 100 is folded or unfolded), the electronic device 100 may determine, based on a changed device form and an original split-screen mode, a split-screen mode to be executed after the device form changes. Components such as a gyroscope and an acceleration sensor in the electronic device 100 may be configured to detect a change of the device form of the electronic device 100.

In some application scenarios, when the electronic device 100 changes from landscape display to portrait display, and a split-screen mode in the landscape display is an up-down split-screen mode, the electronic device 100 may determine, based on the device form: the portrait display, to maintain a split-screen mode before the change of the device form, that is, determine that the split-screen mode executed in the portrait display is the up-down split-screen mode.

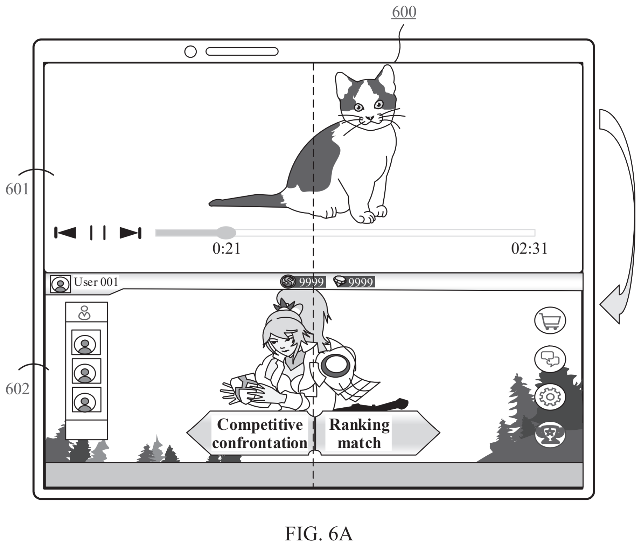

For example, as shown in FIG. 6A, the electronic device 100 is in the landscape display, and the electronic device 100 displays an up-down split-screen interface 600. The up-down split-screen interface 600 may include an upper split-screen area 601 and a lower split-screen area 602, where the upper split-screen area 601 is an upper area of a display, and the lower split-screen area 602 is a lower area of the display. An interface of a video application is displayed in the upper split-screen area 601, and an interface of a game application is displayed in the lower split-screen area 602.

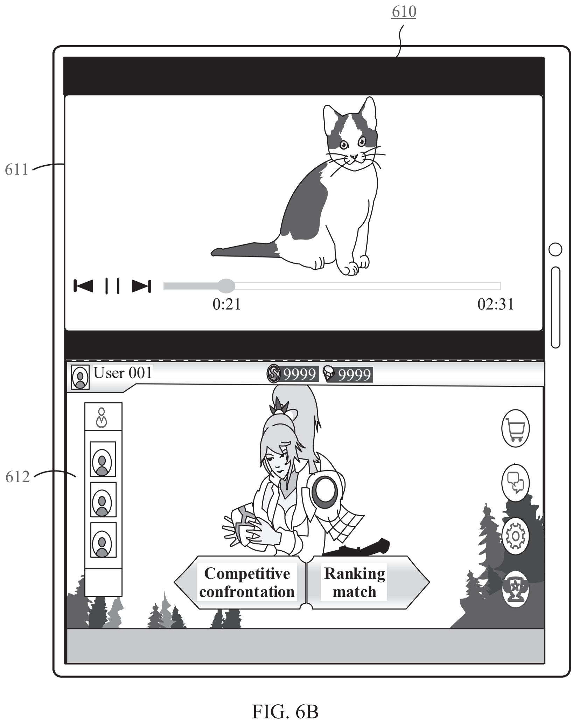

When the electronic device 100 detects that a user rotates the electronic device 100 rightward by 90 degrees, that is, detects an operation of switching the landscape display to the portrait display, in response to the landscape and portrait switching operation, the electronic device 100 may determine, based on a changed device form (namely, the portrait display), that the split-screen mode executed in the portrait display is the same as a split-screen mode before the change of the device form, that is, the split-screen mode is the up-down split-screen mode, and display, based on the up-down split-screen mode, an up-down split-screen interface 610 shown in FIG. 6B.

As shown in FIG. 6B, the electronic device 100 is in the portrait display, and the electronic device 100 displays the up-down split-screen interface 610. The up-down split-screen interface 610 may include an upper split-screen area 611 and a lower split-screen area 612, where the upper split-screen area 611 is an upper area of the display, and the lower split-screen area 612 is a lower area of the display. The interface of the video application is displayed in the upper split-screen area 611, and the interface of the game application is displayed in the lower split-screen area 612.

In some application scenarios, when the electronic device 100 changes from landscape display to a folded state, a horizontal length of the folded display is less than a vertical length, and the split-screen mode in the landscape display is the left-right split-screen mode, the electronic device 100 may determine, based on the device form: the folded state, that a split-screen mode executed in the folded state is the up-down split-screen mode.

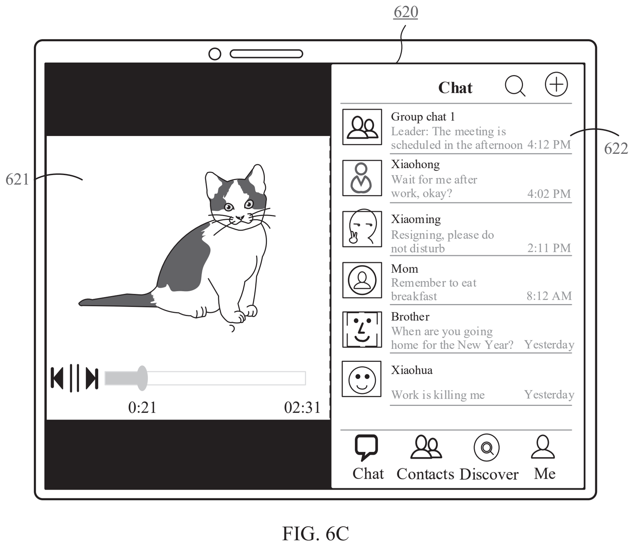

For another example, as shown in FIG. 6C, the electronic device 100 is in the landscape display, and the electronic device 100 displays a left-right split-screen interface 620. The left-right split-screen interface 620 may include a left split-screen area 621 and a right split-screen area 622, where the left split-screen area 621 is a left area of the display, and the right split-screen area 622 is a right area of the display. An interface of a video application is displayed in the left split-screen area 621, and an interface of a chat application is displayed in the right split-screen area 622.

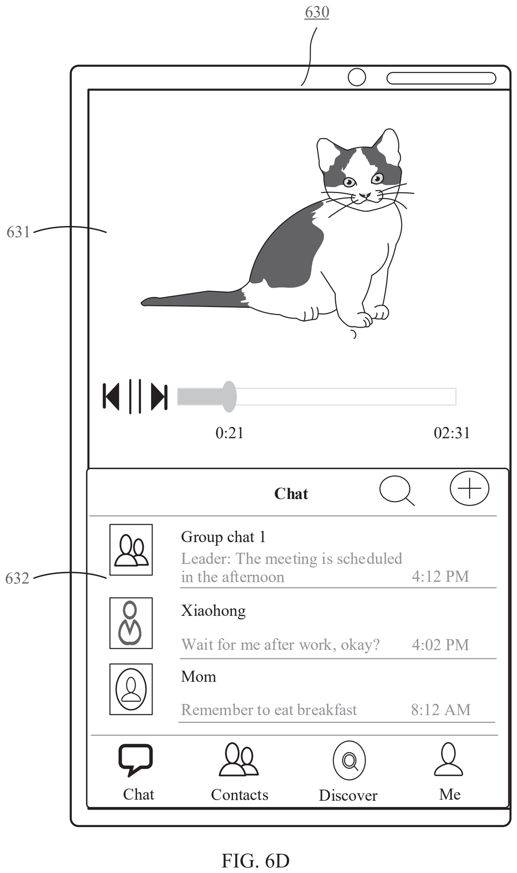

When the electronic device 100 detects an operation of vertically folding the display by the user (namely, an operation of overlapping a left edge and a right edge of the display by using a boundary line of the left split-screen area and the right split-screen area as an axis), the electronic device 100 may determine, based on a current device form (a folded state), that a split-screen mode in the folded state is an up-down split-screen mode, and display an up-down split-screen interface 630 shown in FIG. 6D.

As shown in FIG. 6D, the electronic device 100 is in a form obtained after the display is vertically folded, and the electronic device 100 displays the up-down split-screen interface 630. The up-down split-screen interface 630 may include an upper split-screen area 631 and a lower split-screen area 632, where the upper split-screen area 631 is an upper area of the display, and the lower split-screen area 632 is a lower area of the display. An interface of a video application is displayed in the upper split-screen area 631, and an interface of a chat application is displayed in the lower split-screen area 632.

In some application scenarios, when the electronic device 100 changes from landscape display to a folded state, a horizontal length of a folded display is greater than a vertical length, and the split-screen mode in the landscape display is the up-down split-screen mode, the electronic device 100 may determine, based on the device form: the folded state, that a split-screen mode executed in the folded state is a full-screen and floating window mode.

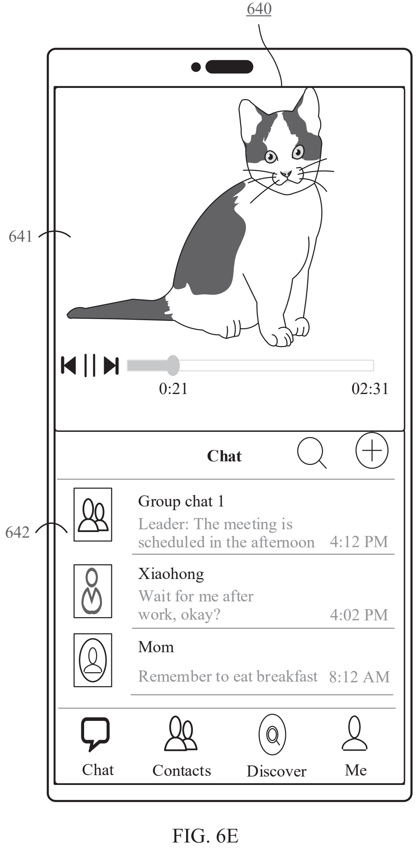

For another example, as shown in FIG. 6E, the electronic device 100 is in the landscape display, and the electronic device 100 displays an up-down split-screen interface 640. The up-down split-screen interface 640 may include an upper split-screen area 641 and a lower split-screen area 642, where the upper split-screen area 641 is an upper area of the display, and the lower split-screen area 642 is a lower area of the display. An interface of a video application is displayed in the upper split-screen area 641, and an interface of a chat application is displayed in the lower split-screen area 642.

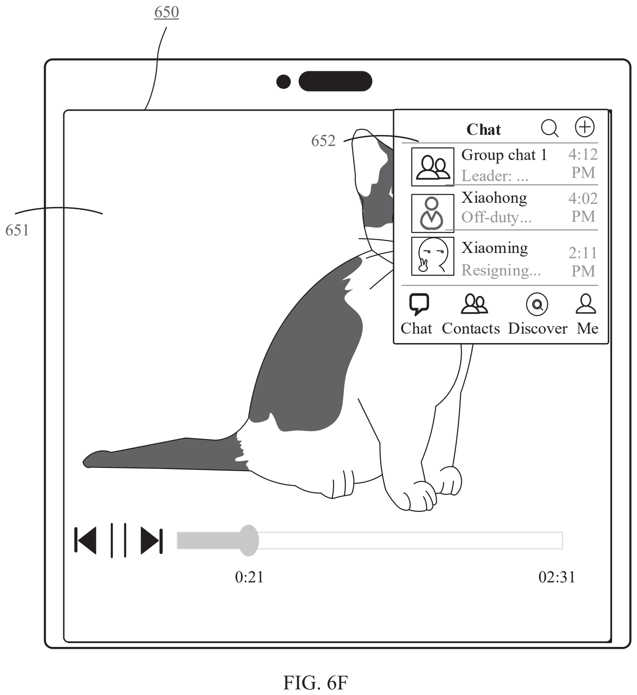

When the electronic device 100 detects an operation of horizontally folding the display by the user (namely, an operation of overlapping an upper edge and a lower edge of the display by using a boundary line of the upper split-screen area and the lower split-screen area as an axis), the electronic device 100 may determine, based on a current device form, that a split-screen mode corresponding to the current folded state is the full-screen and floating window mode, and display a full-screen and floating window interface 650 shown in FIG. 6F.

As shown in FIG. 6F, the electronic device 100 is in a form obtained after the display is horizontally folded, and the electronic device 100 displays the full-screen and floating window interface 650. The full-screen and floating window interface 650 may include a video application area 651 and an application floating window 652. The interface of the video application, for example, a video being played, may be displayed in the video application area 651, and a size of the video application area 651 is the same as a size of the folded display. The interface of the chat application may be displayed in the application floating window 652, and the application floating window 652 is displayed at an upper right corner (or an upper left corner, or the like) of the video application area 651 in an overlay manner.

In some application scenarios, when the electronic device 100 changes from landscape display to a folded state, a horizontal length of a folded display is greater than a vertical length, and a split-screen mode in the landscape display is the left-right split-screen mode, the electronic device 100 may determine, based on the device form: the folded state, that split-screen display is not supported in the folded state, and the electronic device 100 may display an interface of one of split-screen applications, and display a floating bubble. The floating bubble is used to switch a currently displayed interface of the split-screen application to an interface of another split-screen application.

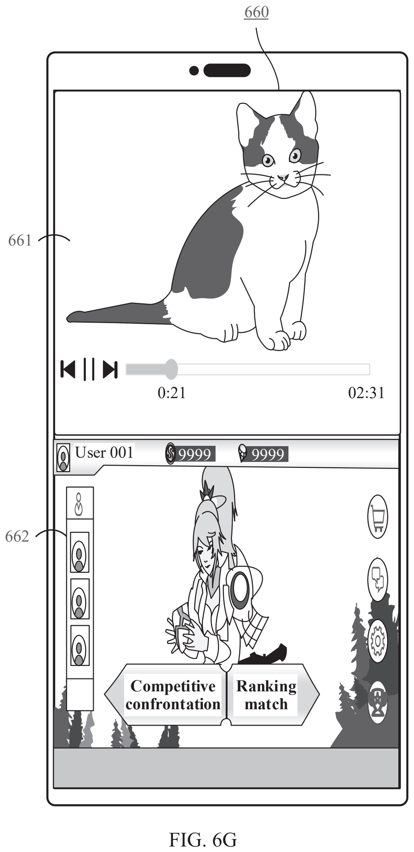

For another example, as shown in FIG. 6G, the electronic device 100 is in the landscape display, and the electronic device 100 displays an up-down split-screen interface 660. The up-down split-screen interface 660 may include an upper split-screen area 661 and a lower split-screen area 662, where the upper split-screen area 661 is an upper area of the display, and the lower split-screen area 662 is a lower area of the display. The interface of the video application is displayed in the upper split-screen area 661, and the interface of the game application is displayed in the lower split-screen area 662.

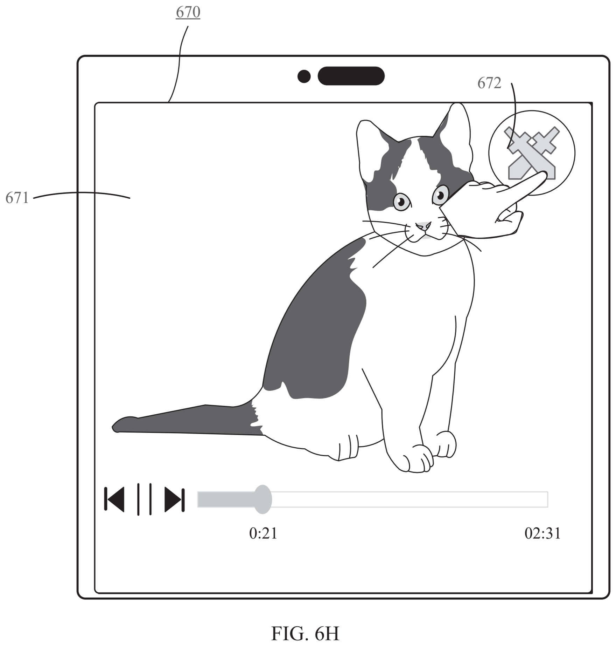

If the electronic device 100 does not support screen splitting in the folded state, when the electronic device 100 detects an operation of horizontally folding the display by the user, the electronic device 100 determines, based on a current device form, that a corresponding split-screen mode does not exist in the folded state. In this case, the electronic device 100 may display a non-split-screen interface 670 shown in FIG. 6H.

As shown in FIG. 6H, the electronic device 100 is in a form obtained after the display is horizontally folded, and the electronic device 100 displays the non-split-screen interface 670. The non-split-screen interface 670 may include a video application area 671 and an application floating bubble 672. The interface of the video application, for example, a video being played, may be displayed in the video application area 671, and a size of the video application area 671 is the same as a size of the folded display. A game application icon is displayed in the application floating bubble 672, to indicate, to the user, that another split-screen application on a split-screen interface displayed before folding is the game application. The application floating bubble 672 may be displayed in an upper right corner (or an upper left corner, or the like) of the video application area 671. The application floating bubble 672 may be further used to trigger the electronic device 100 to display the interface of the game application on the folded display.

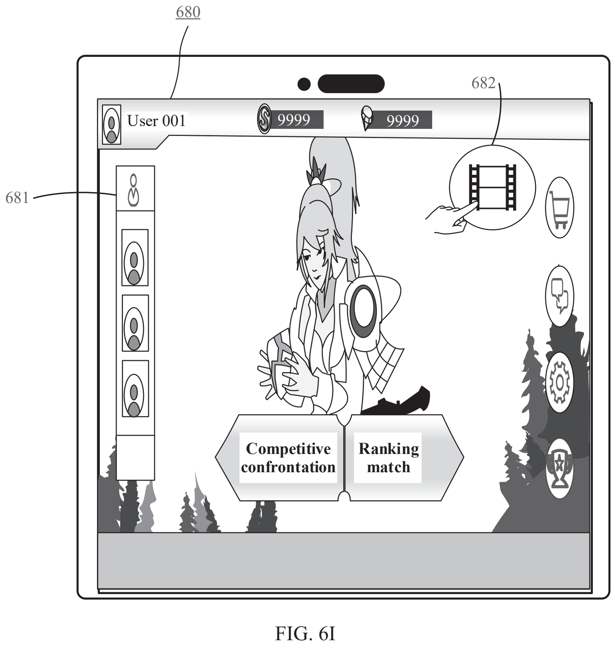

The electronic device 100 may receive an operation of the user for the application floating bubble 672, and display, in response to the operation, a non-split-screen interface 680 shown in FIG. 6I.

As shown in FIG. 6I, the electronic device 100 is in a form obtained after the display is horizontally folded, and the electronic device 100 displays the non-split-screen interface 680. The non-split-screen interface 680 may include a game application area 681 and an application floating bubble 682. The interface of the game application may be displayed in the game application area 681, and a size of the game application area 681 is the same as a size of the folded display. A video application icon is displayed in the application floating bubble 682, to indicate, to the user, that another split-screen application on a split-screen interface displayed before folding is the video application. The application floating bubble 682 may be displayed in an upper right corner (or an upper left corner, or the like) of the game application area 681. The application floating bubble 682 may be further used to trigger the electronic device 100 to display the interface of the video application on the folded display.

It may be understood that the embodiment shown in FIG. 6A to FIG. 6I merely describes an example in which when the device form changes, the electronic device 100 may alternatively adjust the split-screen mode based on a changed device form. In this embodiment of this application, the split-screen application may alternatively be an application different from that in the foregoing embodiment, and a mapping relationship between the changed device form and the split-screen mode may alternatively be a mapping relationship different from that in the foregoing embodiment. This is not limited in this application.

It should be noted that, in some embodiments, the changed device form may correspond to a plurality of split-screen modes. In this case, the electronic device 100 may determine, based on preset priorities of the split-screen modes, a split-screen mode with a highest priority in the plurality of split-screen modes as a split-screen mode after the device form changes. For example, the priorities of the split-screen modes in descending order may be: an up-down split-screen mode, a left-right split-screen mode, a full-screen and floating window mode, and the like. In some embodiments, the priority may alternatively be determined based on a split-screen mode (an original split-screen mode) before the change of the device form. For example, the original split-screen mode is the left-right split-screen mode. The priorities of the split-screen modes in descending order may alternatively be: the left-right split-screen mode, the up-down split-screen mode, the full-screen and floating window mode, and the like. In some other embodiments, the priority of the split-screen mode may alternatively be determined based on the changed device form. For example, in a folded state, the priorities of the split-screen modes in descending order may be: the up-down split-screen mode, the full-screen and floating window mode, the left-right split-screen mode, and the like. This embodiment herein is merely an example. A specific sequence of priorities in different device forms is not limited herein in this application.

In some other embodiments, the electronic device 100 may alternatively determine a scenario in which the electronic device 100 is located after a change of the device form based on the changed device form and an interface displayed by a split-screen application, and determine a to-be-executed split-screen mode based on a mapping relationship between the scenario and a split-screen mode. This is not limited herein in this application.

According to the screen splitting method provided in this embodiment of this application, when detecting that the device form changes, the electronic device 100 may determine, based on a current scenario and the preset priorities, a split-screen mode after the form changes, so that the split-screen mode that better matches the current form can be provided for the user, and good user experience is provided for the user.

In some embodiments, the electronic device 100 displays interfaces of a plurality of split-screen applications in a split-screen manner. The electronic device 100 may receive an operation of a user for a specific control (for example, a full-screen control or a full-screen exit control) on an interface of one of the split-screen applications, and change a split-screen mode (for example, change a left-right split-screen mode to an up-down split-screen mode, or change an up-down split-screen mode to a full-screen and floating window mode) in response to the operation. The specific control may be used to change an interface layout of the interface of the split-screen application.

In some application scenarios, the electronic device 100 may display an interface of an application 1 (for example, a video application) and an interface of an application 2 (for example, a chat application) in the split-screen manner. The interface of the application 1 includes a full-screen control, a split-screen mode is the left-right split-screen mode, and the full-screen control may be used to adjust an interface layout of the application 1. The electronic device 100 may receive an operation of the user for the full-screen control, and in response to the operation, change the interface layout of the application 1, and display the interface of the application 1 and the interface of the application 2 in the split-screen manner in the up-down split-screen mode.

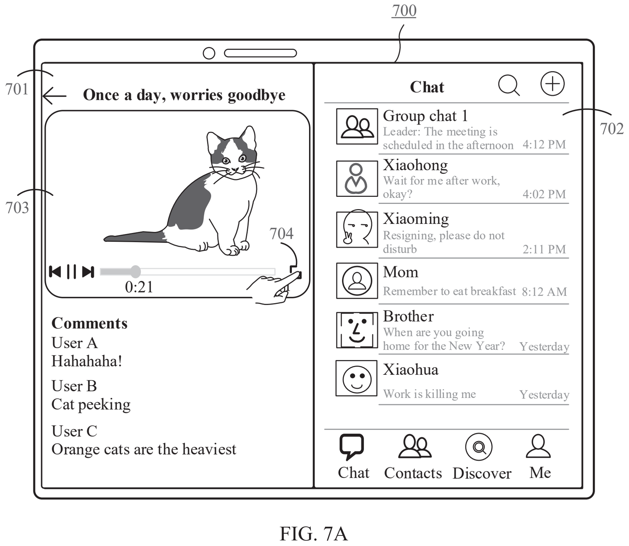

For example, as shown in FIG. 7A, the electronic device 100 displays a left-right split-screen interface 700. The left-right split-screen interface 700 may include a left split-screen area 701 and a right split-screen area 702. The left split-screen area 701 is a left area of a display, and the right split-screen area 702 is a right area of the display. An interface of the video application is displayed in the left split-screen area 701. For specific content on the interface of the video application, refer to the video playing interface 220 shown in FIG. 2C. A video playing window 703 is displayed on the interface of the video application, and the video playing window 703 may be used to play a video. A full-screen control 704 is further displayed on the interface of the video application, and may be used to trigger the electronic device 100 to expand a display size of the video playing window 703 to a maximum display size in an area occupied by the interface of the video application. An interface of the chat application may be displayed in the right split-screen area 702.

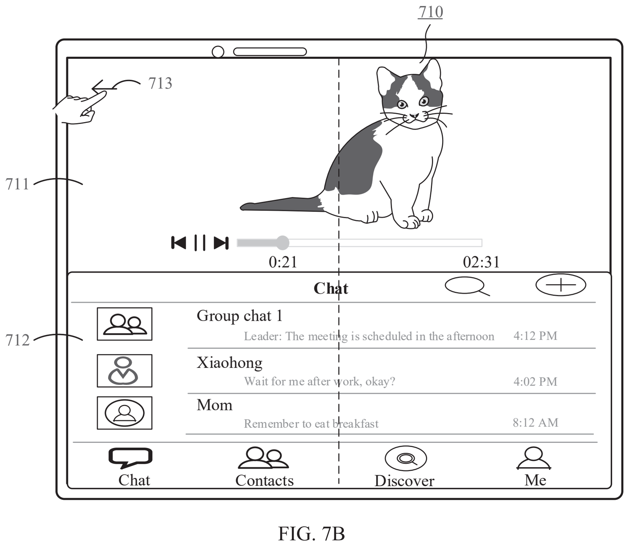

The electronic device 100 may receive an operation of the user for the full-screen control 704, and display, in response to the operation, an up-down split-screen interface 710 shown in FIG. 7B.

As shown in FIG. 7B, the up-down split-screen interface 710 may include an upper split-screen area 711 and a lower split-screen area 712, where the upper split-screen area 711 is an upper area of the display, and the lower split-screen area 712 is a lower area of the display. The interface of the video application is displayed in the upper split-screen area 711. For specific content on the interface of the video application, refer to the full-screen playing interface 230 shown in FIG. 2D. A full-screen exit control 713 is further displayed on the interface of the video application, and may be used to trigger the electronic device 100 to decrease a video playing window in the upper split-screen area 711 from a maximum display size to a preset display size. An interface of the chat application may be displayed in the lower split-screen area 712.

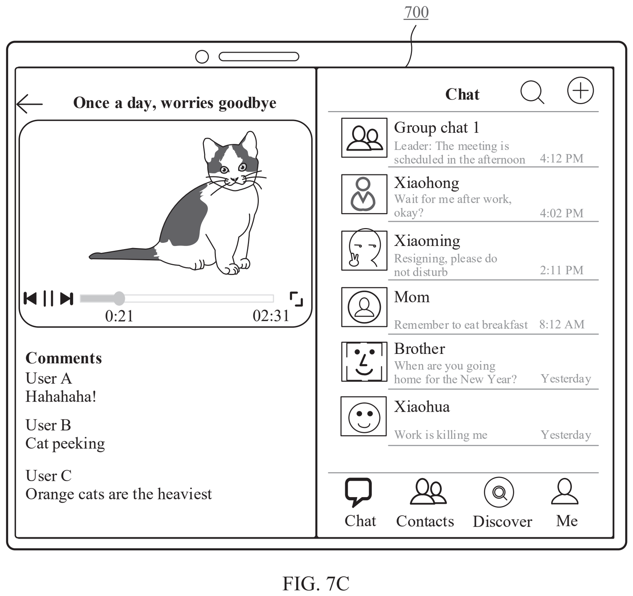

The electronic device 100 may receive a tap operation of the user for the full-screen exit control 713, and in response to the tap operation, the electronic device 100 may redisplay the left-right split-screen interface 700, as shown in FIG. 7C.

In some other application scenarios, the electronic device 100 may display an interface of an application 1 (for example, a video application) and an interface of an application 2 (for example, a chat application) in the split-screen manner. The interface of the application 1 includes a full-screen control, a split-screen mode is the left-right split-screen mode, and the full-screen control may be used to adjust an interface layout of the application 1. The electronic device 100 may receive an operation of the user for the full-screen control, and in response to the operation, change the interface layout of the application 1, and display the interface of the application 1 and the interface of the application 2 in the split-screen manner in the full-screen and floating window mode, where the interface of the application 1 is displayed in a full-screen manner.

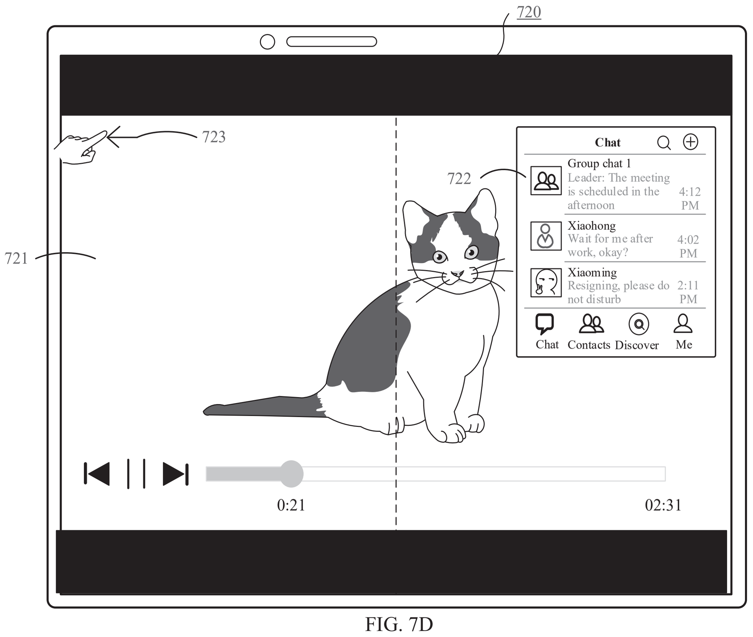

For example, when the electronic device 100 displays the left-right split-screen interface 700 shown in FIG. 7A, the electronic device 100 may receive a tap operation of the user for the full-screen control 704, and display, in response to the tap operation, a full-screen and floating window interface 720 shown in FIG. 7D.

As shown in FIG. 7D, the full-screen and floating window interface 720 may include a video playing area 721, an application floating window 722, and a full-screen exit control 723. The video playing area 721 may occupy an entire display, and may be used to play a video. An application floating window 722 may be displayed at an upper right corner (or an upper left corner, or the like) of the video playing area 721 in an overlay manner, and an interface of the chat application may be displayed in the application floating window 722. The full-screen exit control 723 may be used to trigger the electronic device 100 to decrease the video playing area from a maximum display size to a preset display size.

The electronic device 100 may receive an operation of the user for the full-screen exit control 723, and redisplay, in response to the operation, the left-right split-screen interface shown in FIG. 7C.

It may be understood that the embodiment shown in FIG. 7A to FIG. 7D is merely an example. In this embodiment of this application, the application 1 may be an application other than the video application, and the electronic device 100 may alternatively receive an operation for another control in the application 1, and switch the split-screen mode in response to the operation. This is not limited in this application.

According to the screen splitting method provided in this application, the electronic device 100 may switch the split-screen mode when receiving an operation of the user for a specific control that is in a split-screen application and that has an interface layout change function, to provide screen splitting effect that is more suitable for a current scenario for the user, and provide better experience for the user.

In some embodiments, the electronic device 100 may alternatively display interfaces of three or more split-screen applications in a split-screen manner.

In some application scenarios, when the electronic device 100 displays an interface of an application 1 and an interface of an application 2 in the split-screen manner, the electronic device 100 may alternatively receive a screen splitting operation (for example, an operation of sliding upward from a lower edge of a display) of a user, and in response to the screen splitting operation, determine one or more executable three-split-screen modes based on a current device form and/or interfaces of split-screen applications, and determine, based on a previous split-screen mode and preset priorities, a to-be-executed three-split-screen mode from the one or more executable three-split-screen modes. The three-split-screen mode is a split-screen mode in a scenario in which the split-screen applications include three applications. The three-split-screen mode may include: a one-upper area and two-lower area split-screen mode (also referred to as a 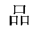 -shaped split-screen mode), a two-upper area and one-lower area split-screen mode (also referred to as an inverted 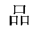 -shaped split-screen mode), a one-left area and two-right area split-screen mode, a two-left area and one-right area split-screen mode, an up-down split-screen and floating window mode, a left-right split-screen and floating window mode, and the like.

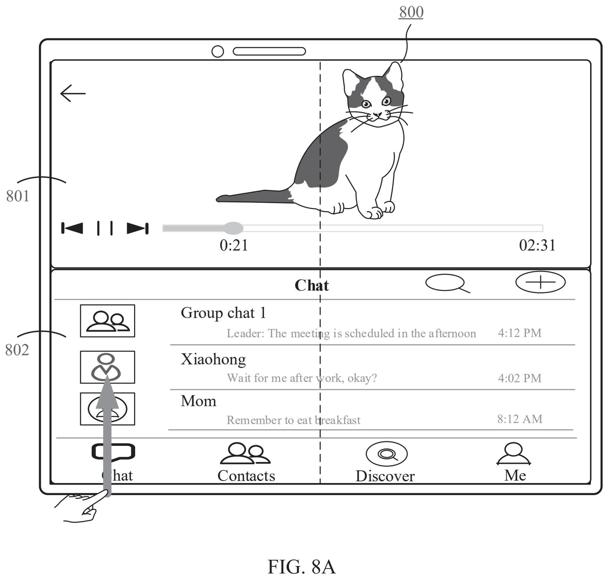

For example, as shown in FIG. 8A, the electronic device 100 displays an up-down split-screen interface 800. The up-down split-screen interface 800 may include an upper split-screen area 801 and a lower split-screen area 802. An interface of a video application may be displayed in the upper split-screen area 801, and an interface of a chat application may be displayed in the lower split-screen area 802. For specific content on the up-down split-screen interface 800, refer to the up-down split-screen interface 710 in the embodiment shown in FIG. 7B. Details are not described herein again.

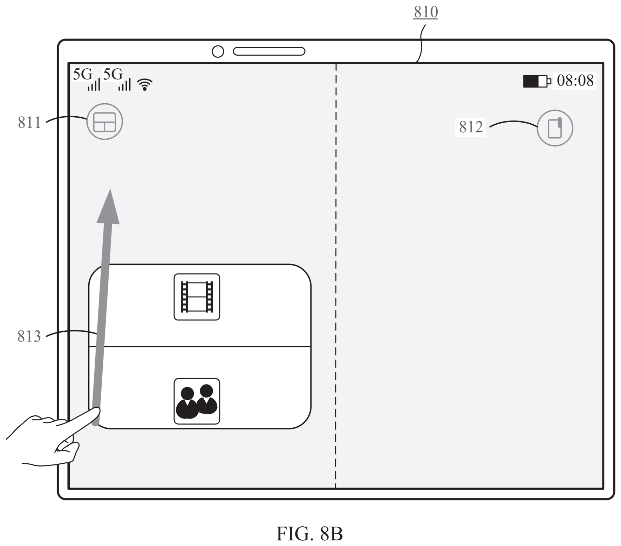

The electronic device 100 may receive an operation of sliding upward from the lower edge of the display by the user, and display, in response to the operation, a three-split-screen mode selection interface 810 shown in FIG. 8B.

As shown in FIG. 8B, the three-split-screen mode selection interface 810 may include an application small window 813 and one or more split-screen mode controls, for example, a 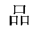 -shaped split-screen mode control 811 and an up-down split-screen and floating window mode control 812. A video application icon and a chat application icon may be displayed in the application small window 813, and a display location of the video application icon is above a display location of the chat application icon. In some other embodiments, the up-down split-screen interface 800 shown in FIG. 8A may also be displayed in the application small window 813. The application small window 813 may move along a track of sliding upward from the lower edge of the display by the user. It should be noted that three-split-screen modes corresponding to the one or more split-screen mode controls displayed on the three-split-screen mode selection interface 810 are three-split-screen modes that can be executed by the electronic device 100 in a current scenario. For example, the current scenario includes landscape display of the electronic device 100, and the split-screen applications include the video application and the chat application. If the electronic device 100 can support the 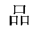 -shaped split-screen mode and the up-down split-screen and floating window mode in the current scenario, the 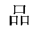 -shaped split-screen mode control 811 and the up-down split-screen and floating window mode control 812 may be displayed on the three-split-screen mode selection interface 810. The one or more split-screen mode controls displayed on the three-split-screen mode selection interface 810 may be used to trigger the electronic device 100 to execute the three-split-screen modes corresponding to the split-screen mode controls. Specifically, the electronic device 100 may determine a to-be-executed split-screen mode based on whether a distance between the application small window 813 and the split-screen mode control is less than a preset distance. In some embodiments, the electronic device 100 may alternatively determine a to-be-executed three-split-screen mode based on a movement direction of the application small window 813.

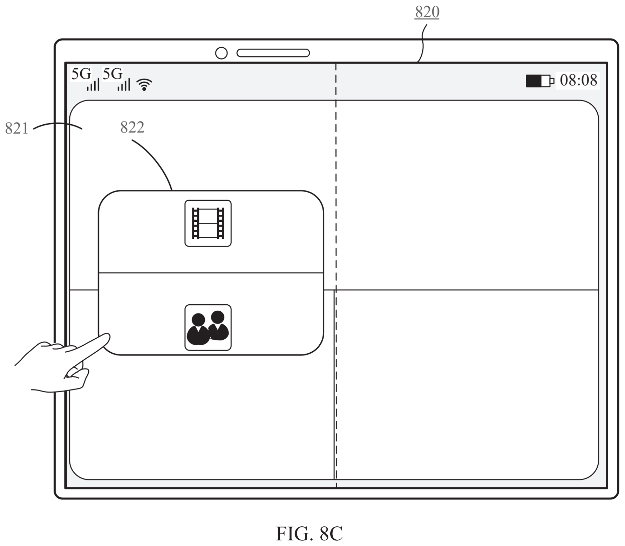

In a process in which the application small window 813 moves along a user operation, when the electronic device 100 detects that a distance between the application small window 813 and the 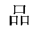 -shaped split-screen mode control 811 is less than the preset distance (for example, 5 cm), the electronic device 100 may display a split-screen mode display interface 820 shown in FIG. 8C.

As shown in FIG. 8C, the split-screen mode display interface 820 may include a split-screen touch target 821 and the application small window 822. The split-screen touch target 821 may be a 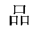 -shaped area shown in FIG. 8C, and indicates that the to-be-executed three-split-screen mode is the 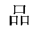 -shaped split-screen mode. It may be understood that, if a three-split-screen mode is different from that in the embodiment shown in FIG. 8C, a split-screen area may alternatively be obtained in a division form different from that of the split-screen touch target 821 shown in FIG. 8C. This is not limited in this application. For specific content on the application small window 822, refer to corresponding content in the embodiment shown in FIG. 8B. Details are not described herein again.

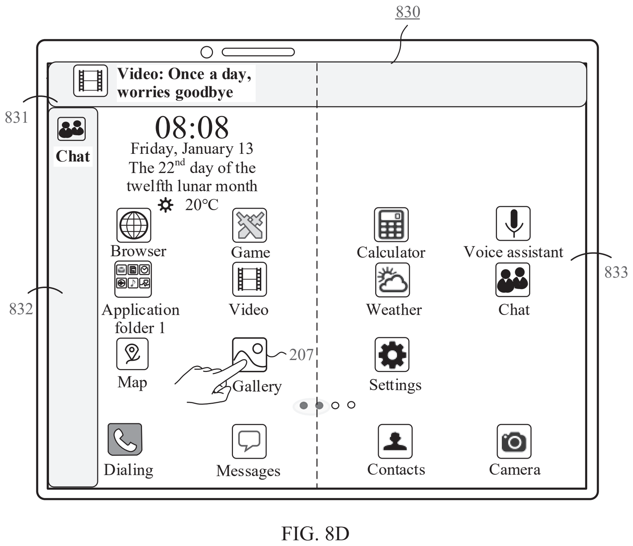

When the electronic device 100 displays the split-screen mode display interface 820, in response to a release operation of the user, the electronic device 100 may display a to-be-split-screen interface 830 shown in FIG. 8D.

As shown in FIG. 8D, the to-be-split-screen interface 830 may include a screen splitting waiting area 831, a screen splitting waiting area 832, and an icon display area 833. The video application icon may be displayed in the screen splitting waiting area 831, and the chat application icon may be displayed in the screen splitting waiting area 832. The screen splitting waiting area 831 may be displayed on the icon display area 833 in an overlay manner, the screen splitting waiting area 832 may be displayed on a left part of the icon display area 833 in the overlay manner, and a display location of the screen splitting waiting area 832 is at a lower left of a display location of the screen splitting waiting area 831. In some embodiments, the display of the electronic device 100 may alternatively be divided into the screen splitting waiting area 831, the screen splitting waiting area 832, and the icon display area 833 based on the split-screen mode. The screen splitting waiting area 831 may be displayed on an upper part of the display, and the screen splitting waiting area 832 may be displayed on a left part of the display. A location relationship among the screen splitting waiting area 831, the screen splitting waiting area 832, and the icon display area 833 may indicate, to the user, that the to-be-executed three-split-screen mode is the 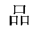 -shaped split-screen mode. A home screen may be displayed in the icon display area 833, and one or more application icons, for example, a gallery application icon 207, are displayed on the home screen.

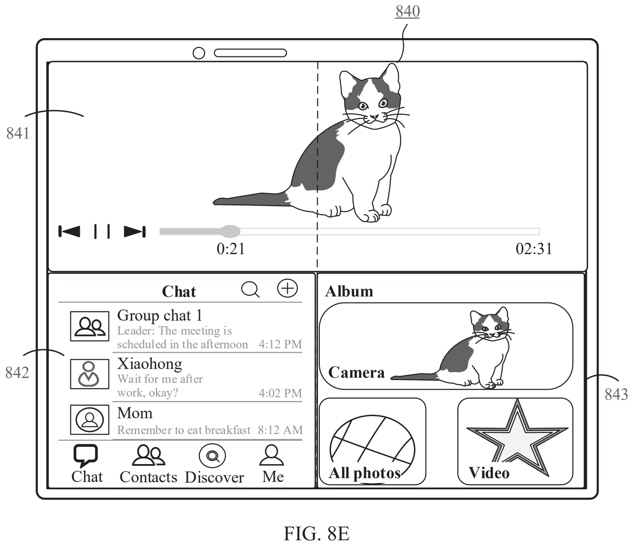

The electronic device 100 may receive an operation of the user for the gallery application icon 207 in the icon display area 833, and display, in response to the operation, the 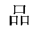 -shaped split-screen interface 840 shown in FIG. 8E.

As shown in FIG. 8E, the 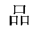 -shaped split-screen interface 840 may include an upper split-screen area 841, a lower left split-screen area 842, and a lower right split-screen area 843. The upper split-screen area 841 is an upper area of the display, the lower left split-screen area 842 is a lower left area of the display, and the lower right split-screen area 843 is a lower right area of the display. The upper split-screen area 841 may be used to display the interface of the video application, the lower left split-screen area 842 may be used to display the interface of the chat application, and the lower right split-screen area 843 may be used to display an interface of a gallery application.

It may be understood that, the embodiment shown in FIG. 8A to FIG. 8E describes, as an example, that the electronic device 100 may alternatively perform screen splitting on three or more split-screen applications by using the screen splitting method provided in this application. In this embodiment of this application, when the split-screen applications include three or more applications, for specific manners of determining a location relationship among interfaces of the split-screen application, switching a split-screen mode, and creating a combination icon, refer to related descriptions in the foregoing embodiment. Details are not described herein again.

According to the screen splitting method provided in this embodiment of this application, screen splitting may be further performed on the three or more split-screen applications. This provides richer screen splitting effect to meet different requirements in different scenarios.

In some application scenarios, the electronic device 100 may alternatively determine a to-be-executed split-screen mode based on a screen splitting operation of a user. That is, if it is detected that an input of the user for the electronic device 100 is an up-down screen splitting operation (for example, an operation of sliding upward from a lower edge of a display), it is determined that the to-be-executed split-screen mode is an up-down split-screen mode. If it is detected that an input of the user for the electronic device 100 is a left-right screen splitting operation (for example, an operation of sliding upper leftward from a lower edge of a display), it is determined that the to-be-executed split-screen mode is a left-right split-screen mode. If it is detected that an input of the user for the electronic device 100 is a full-screen and floating window screen splitting operation (for example, an operation of sliding upper rightward from a lower edge of a display), it is determined that the to-be-executed split-screen mode is a full-screen and floating window mode. After the to-be-executed split-screen mode is determined, a screen splitting waiting area and an icon display area may be displayed based on the to-be-executed split-screen mode. After an input for an icon of an application 2 is received, an interface of an application 1 and an interface of the application 2 are displayed based on the to-be-executed split-screen mode. In this way, when detecting a screen splitting operation of the user, the electronic device 100 can quickly determine the to-be-executed split-screen mode based on the screen splitting operation. This simplifies a screen splitting steps, and improves efficiency.

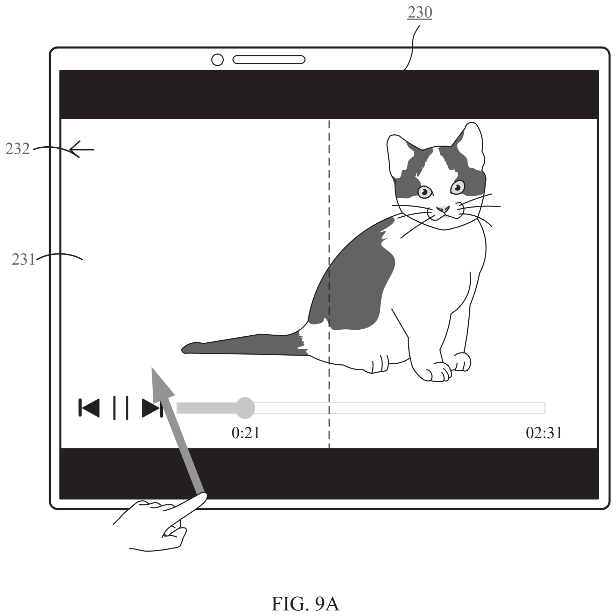

For example, as shown in FIG. 9A, the electronic device 100 displays a full-screen playing interface 230. For specific content on the full-screen playing interface 230, refer to related descriptions in the embodiment shown in FIG. 2D. Details are not described herein again.

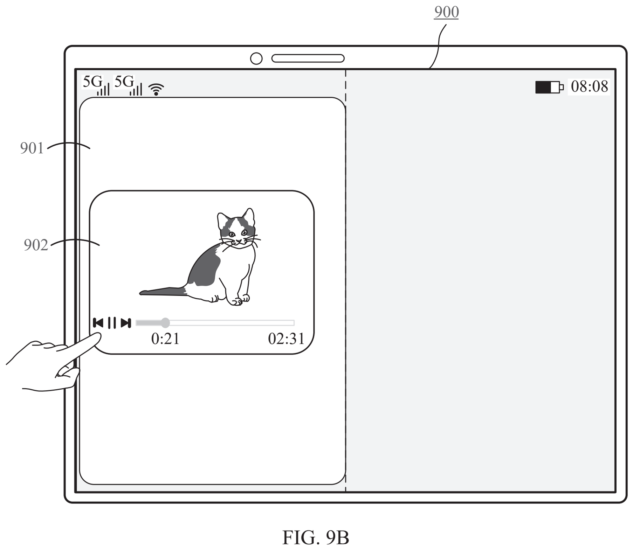

The electronic device 100 may receive an operation of sliding upper leftward from the lower edge of the display, and in response to the operation, determine that the to-be-executed split-screen mode is the left-right split-screen mode, and display a split-screen mode display interface 900 shown in FIG. 9B.

As shown in FIG. 9B, the split-screen mode display interface 900 may include a split-screen touch target 901 and an application small window 902. The split-screen touch target 901 is a left-half area of the display. In this case, the split-screen touch target 901 may indicate that the to-be-executed split-screen mode is the left-right split-screen mode. The application small window 902 may move along a track of sliding upward from the lower edge of the display by the user, and the application small window 902 may further indicate that an application corresponding to the application small window 902 is a video application. For other content on the application small window 902, refer to corresponding content in the embodiment shown in FIG. 2E. Details are not described herein again.

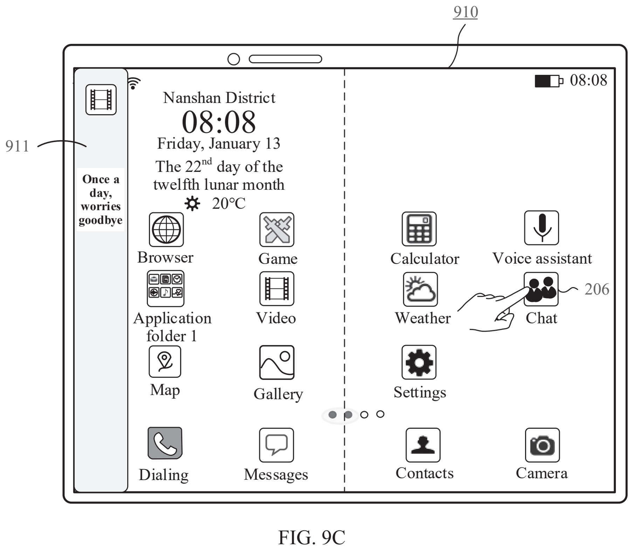

After the application small window 902 moves to the split-screen touch target 901 along a sliding operation of the user, in response to a release operation of the user, the electronic device 100 may display a to-be-split-screen interface 910 shown in FIG. 9C.

As shown in FIG. 9C, the to-be-split-screen interface 910 may include a screen splitting waiting area 911 and an icon display area 912. The screen splitting waiting area 911 may be displayed on a left part of the icon display area 912 in an overlay manner, and indicates that the to-be-executed split-screen mode is the left-right split-screen mode. In some other embodiments, the display of the electronic device 100 may alternatively be divided into a screen splitting waiting area 911 and an icon display area 912 based on the split-screen mode. The screen splitting waiting area 911 may alternatively be displayed on a left part of the display, and indicates that the to-be-executed split-screen mode is the up-down split-screen mode. The screen splitting waiting area 911 indicates, to the user, that a split-screen application includes a video application. A video application icon may be displayed in the screen splitting waiting area 911, and a title of a currently played video, for example, "Once a day, worries goodbye", may be further displayed. The icon display area 912 may be used to display a home screen 200, and one or more application icons, for example, a chat application icon 206, may be displayed on the home screen 200. For other content on the home screen 200, refer to related descriptions in the embodiment shown in FIG. 2A.

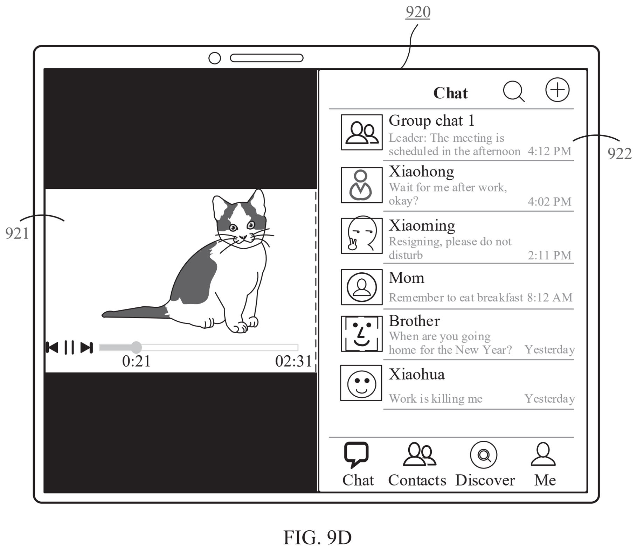

The electronic device 100 may receive an operation of the user for the chat application icon 206 in the icon display area 912, and display, in response to the operation, the left-right split-screen interface 920 shown in FIG. 9D.

In some embodiments, the electronic device 100 may alternatively receive an operation of sliding upper leftward from the lower edge of the display, and after determining that the to-be-executed split-screen mode is the left-right split-screen mode, display, in response to the operation, the left-right split-screen interface 920 shown in FIG. 9D.

As shown in FIG. 9D, the left-right split-screen interface 920 may include a left split-screen area 921 and a right split-screen area 922. The left split-screen area 921 is a left area of the display, and the right split-screen area 922 is a right area of the display. A display size of the left split-screen area 921 may be the same as or different from a display size of the right split-screen area 922. The left split-screen area 921 may be used to display an interface of the video application, for example, display a video that is being played. The right split-screen area 922 may be used to display an interface of the chat application. The user may watch a video by using the left split-screen area 921, and may also chat by using the right split-screen area 922.

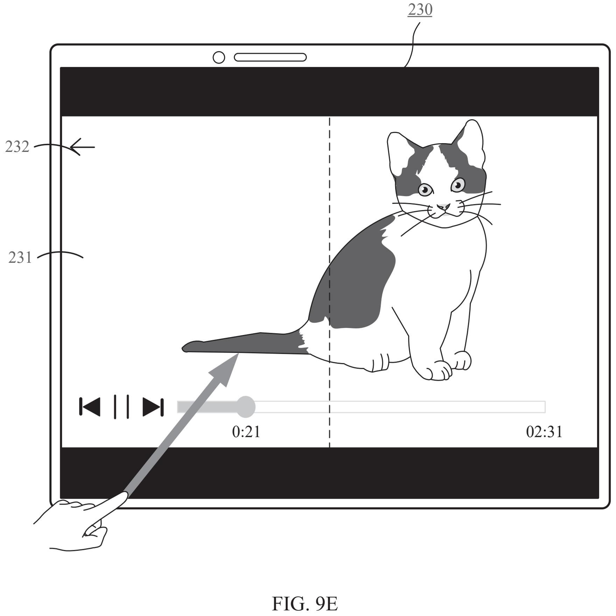

For example, as shown in FIG. 9E, the electronic device 100 displays a full-screen playing interface 230. For specific content on the full-screen playing interface 230, refer to related descriptions in the embodiment shown in FIG. 2D. Details are not described herein again.

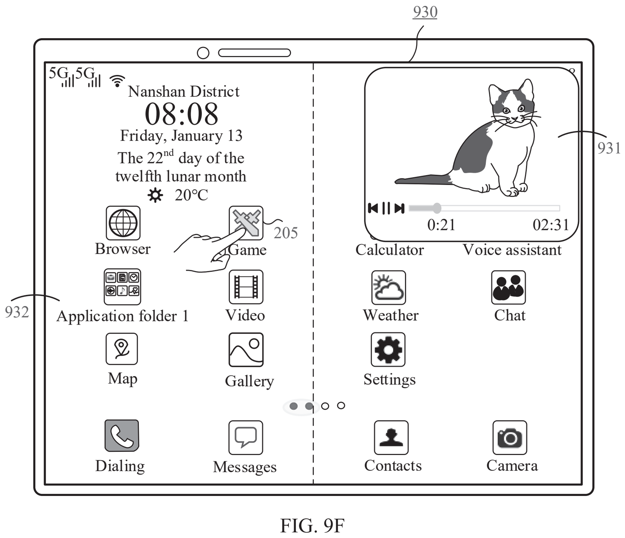

The electronic device 100 may receive an operation of sliding upper rightward from the lower edge of the display, and in response to the operation, determine that the split-screen mode is the full-screen and floating window mode, and display a to-be-split-screen interface 930 shown in FIG. 9F.

As shown in FIG. 9F, the to-be-split-screen interface 930 may include an application floating window 931 and an icon display area 932, and the application floating window 931 is displayed on the icon display area 932 in the overlay manner. The application floating window 931 may be used to play a video. The icon display area 932 may be used to display a home screen 200, and one or more application icons, for example, a game application icon 205, may be displayed on the home screen 200. For other content on the home screen 200, refer to related descriptions in the embodiment shown in FIG. 2A.

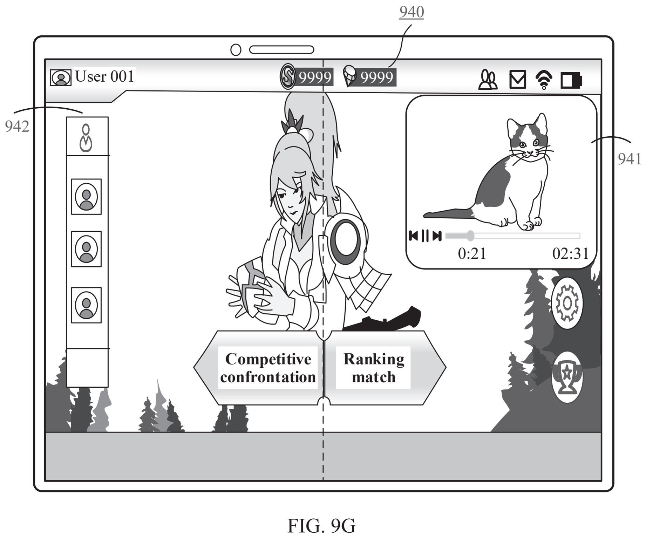

The electronic device 100 may receive an operation of the user for the game application icon 205 in the icon display area 932, and display, in response to the operation, a full-screen and floating window interface 940 shown in FIG. 9G.

As shown in FIG. 9G, the full-screen and floating window interface 940 may include a full-screen display area 942 and an application floating window 941. The full-screen display area 942 occupies an entire area of the display, and is used to display an interface of a game application. The application floating window 941 is displayed on the full-screen display area 942 in the overlay manner. For other content on the application floating window 941, refer to related descriptions in the foregoing embodiment. Details are not described herein again. When the electronic device 100 displays the full-screen and floating window interface 940, the user may play a game by using the full-screen display area 942, or may watch a video by using the application floating window 941.

It may be understood that the embodiment shown in FIG. 9A to FIG. 9G merely describes an example in which the to-be-executed split-screen mode may be determined based on different screen splitting operations. In this embodiment of this application, a screen splitting operation like an up-down screen splitting operation or a left-right screen splitting operation may be an operation different from that described in the foregoing embodiment, or may be a user-defined operation. This is not limited in this application.

According to the screen splitting method provided in this embodiment of this application, the split-screen mode can be determined based on a mapping relationship between a screen splitting operation of the user and a split-screen mode. This simplifies a screen splitting step, and improves efficiency.

In some application scenarios, the electronic device 100 has determined that split-screen applications include an application 1, and a screen splitting waiting area and an icon display area (including an icon of an application 2) are displayed based on a to-be-executed split-screen mode. When the electronic device 100 receives a tap operation of a user for an icon of the application 2 on a to-be-split-screen interface, and detects that the application 2 does not support the to-be-executed split-screen mode, in response to the tap operation of the user for the icon of the application 2, the electronic device 100 may re-determine the to-be-executed split-screen mode, and display an interface of the application 1 and an interface of the application 2 in a split-screen manner based on a new to-be-executed split-screen mode. The re-determined to-be-executed split-screen mode is different from the original to-be-executed split-screen mode.

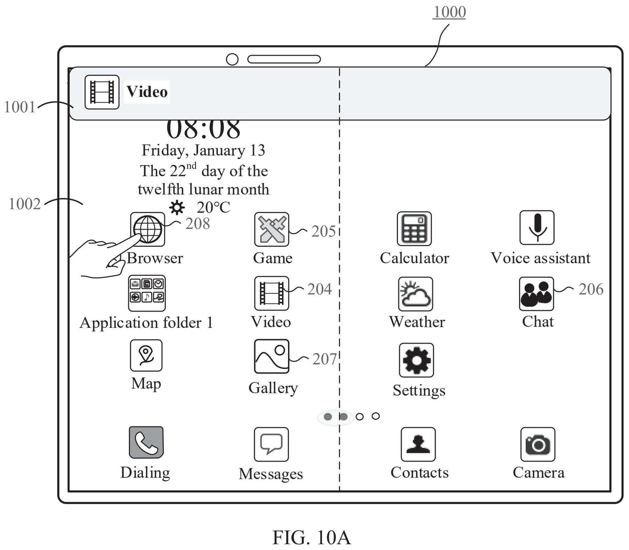

For example, as shown in FIG. 10A, the electronic device 100 displays an up-down to-be-split-screen interface 1000, and the up-down to-be-split-screen interface 1000 may include a screen splitting waiting area 1001 and an icon display area 1002. The screen splitting waiting area 1001 is displayed in an upper area of a display of the electronic device 100. An icon and a name of a video application may be displayed in the screen splitting waiting area 1001, to indicate, to the user, that the split-screen application includes the video application and that a split-screen mode is an up-down split-screen mode. One or more application icons, for example, a browser application icon 208, may be displayed in the icon display area 1002.

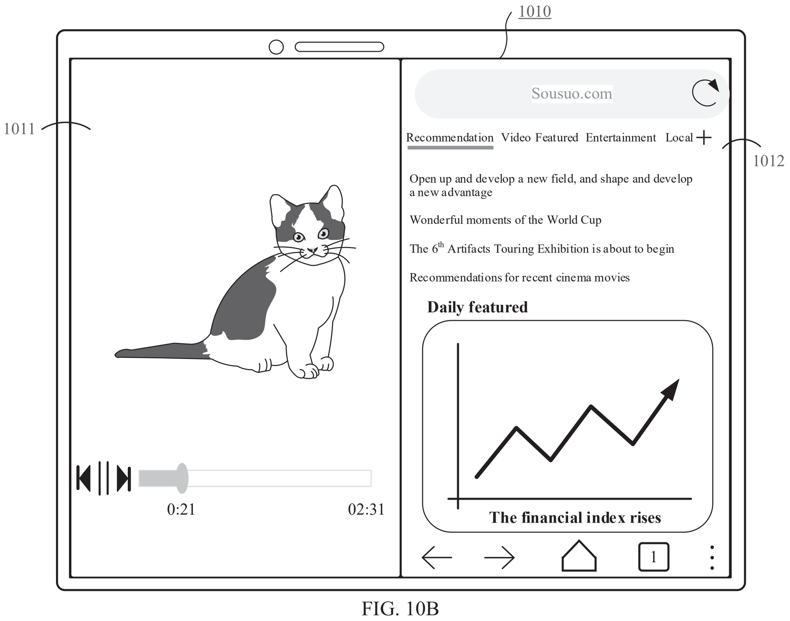

The electronic device 100 may receive a tap operation of the user for the browser application icon 208, and if the electronic device 100 detects that a browser application does not support the up-down split-screen mode, the electronic device 100 may display, in response to the tap operation, a left-right split-screen interface 1010 shown in FIG. 10B.

As shown in FIG. 10B, the electronic device 100 displays the left-right split-screen interface 1010. The left-right split-screen interface 1010 may include a left split-screen area 1011 and a right split-screen area 1012. The left split-screen area 1011 is a left area of the display, and the right split-screen area 1012 is a right area of the display. An interface of the video application is displayed in the left split-screen area 1011. An interface of the browser application may be displayed in the right split-screen area 1012.

It may be understood that FIG. 10A and FIG. 10B are merely examples. In this embodiment of this application, the to-be-executed split-screen mode of the electronic device 100 may alternatively be another split-screen mode. This is not limited in this application. For example, if the electronic device 100 determines that the to-be-executed split-screen mode is the left-right split-screen mode, and a left-right to-be-split-screen interface is displayed, when the electronic device 100 receives a tap operation for the icon of the application 2, and determines that the application 2 does not support the left-right split-screen mode, the electronic device 100 may alternatively re-determine that the to-be-executed split-screen mode is the up-down split-screen mode, the full-screen and floating window mode, or the like. This is not limited in this application.

According to the screen splitting method provided in this embodiment of this application, when it is detected that a newly determined split-screen application does not support the to-be-executed split-screen mode, the to-be-executed split-screen mode can be re-determined. This avoids a time loss caused by an invalid operation, and improves screen splitting efficiency.

The following describes a procedure of the screen splitting method provided in embodiments of this application.

FIG. 11 is a schematic flowchart of a screen splitting method according to an embodiment of this application.

It should be noted that, in this embodiment of this application, an application 1 may also be referred to as a first application, and an application 2 may be referred to as a second application; an interface 1 of the application 1 may be referred to as a first interface, an interface 2 of the application 1 may be referred to as a second interface, and an interface 3 of the application 2 may be referred to as a third interface; a screen splitting operation of a user for the interface 1 may be referred to as a first operation, a screen splitting waiting area may be referred to as a first area, and an icon display area may be referred to as a second area; an area 1 may be referred to as a third area, and an area 2 may be referred to as a fourth area; an operation of the user for an icon of the application 2 may be referred to as a second operation; and if the interface 1 includes a core element, the core element may be referred to as a first element.

As shown in FIG. 11, a specific procedure of the screen splitting method according to this embodiment of this application may include the following steps.

S1101: When displaying the interface 1 of the application 1, the electronic device 100 receives a screen splitting operation of the user for the interface 1, and determine a device form of the electronic device 100 and/or a display form of the core element on the interface 1 in response to the screen splitting operation.

For example, the screen splitting operation of the user for the interface 1 may be the operation of sliding upward from the lower edge of the display of the electronic device 100 in the embodiment shown in FIG. 2D. For another example, the screen splitting operation of the user for the application 1 may alternatively be the operation of sliding upper leftward from the lower edge of the display of the electronic device 100 in the embodiment shown in FIG. 9A, or the operation of sliding upper rightward from the lower edge of the display of the electronic device 100 in the embodiment shown in FIG. 9E.

After receiving the screen splitting operation of the user for the interface 1, the electronic device 100 may determine that split-screen applications include the application 1, and the split-screen applications include applications corresponding to a plurality of application interfaces subsequently displayed by the electronic device 100 in a split-screen manner.

In response to the screen splitting operation of the user, the electronic device 100 may determine the device form of the electronic device 100 and/or determine whether the interface 1 includes the core element.

The device form of the electronic device 100 may include any one of the following: landscape display, portrait display, an unfolded state, and a folded state. For details, refer to related descriptions in the embodiments shown in FIG. 1B to FIG. 1F.

The core element includes any one or more of the following: a video, a conference, a slide, a game, image shooting (for example, a viewfinder frame on an image shooting interface), a video call (for example, a video display window in a video call interface), and the like. The electronic device 100 may determine, based on the interface 1 displayed by the application 1, whether the interface 1 includes the core element.

The display form of the core element may include horizontal display and vertical display. A basis for determining the display form of the core element may include any one or more of the following: an aspect ratio (namely, a ratio of a horizontal length to a vertical length) of the core element, a trustlist, an invoked landscape/portrait display interface, a location relationship between black borders on two sides of the core element and the core element, a location relationship between blank areas on two sides of the core element and the core element, and the like.

For example, the display form of the core element is determined based on the aspect ratio of the core element. When the aspect ratio of the core element on the interface of the application 1 is greater than a preset value (for example, 1), the display form of the core element is the horizontal display. When the aspect ratio of the core element on the interface of the application 1 is less than a preset value, the display form of the core element is the vertical display. For another example, the display form of the core element is determined based on the trustlist. The electronic device 100 may store an application trustlist (also referred to as a first list). When the application 1 is in the trustlist, the electronic device 100 may determine that the display form of the core element is the horizontal display. When the application 1 is not in the trustlist (or when the application 1 is in another list different from the trustlist, for example, a second list), the electronic device 100 may determine that the display form of the core element is the vertical display. For another example, the location relationship between the black borders on the two sides of the core element and the core element is used as the determining basis. When the black borders are displayed on a left side and a right side of the core element, the electronic device 100 may determine that the display form of the core element is the vertical display. When the black borders are displayed on an upper side and a lower side of the core element, the electronic device 100 may determine that the display form of the core element is the horizontal display.

S1102: The electronic device 100 determines, based on the device form and/or the display form of the core element on the interface 1, a scenario in which the electronic device 100 is located.

The scenario in which the electronic device 100 is located may include a landscape display scenario, a horizontal immersive scenario, a vertical immersive scenario, and the like. In some embodiments, the scenario may further include one or more of a portrait non-immersive scenario and a non-split-screen scenario. This is not limited in this application.

In some embodiments, the electronic device 100 may determine, based on the device form or based on an element on the interface 1, the scenario in which the electronic device 100 is located. For example, if the device form is the landscape display, the electronic device 100 may determine, based on the landscape display, that a current scenario is the landscape display scenario. If the electronic device 100 detects that a current form does not support screen splitting, the electronic device 100 may determine that a current scenario is the non-split-screen scenario. If the device form is the folded state, the electronic device 100 may determine that a current scenario is a folding scenario.

In some embodiments, if the interface 1 includes the core element, the electronic device 100 may determine the scenario in which the electronic device 100 is located based on the display form of the core element on the interface 1.

When the display form of the core element is the horizontal display, the electronic device 100 is in the horizontal immersive scenario. When the display form of the core element is the vertical display, the electronic device 100 is in the vertical immersive scenario.

In some other embodiments, the electronic device 100 may determine, based on the device form and the element on the interface 1, the scenario in which the electronic device 100 is located. In this case, the electronic device 100 may store a correspondence among a device form, an element on the interface 1, and a scenario in which the electronic device 100 is located. For example, Table 1 shows a mapping relationship between a device form, an element on the interface 1, and a scenario.

**Table 1**

| | | |
|---|---|---|
| Device form | Element on the interface 1 | Scenario |
| Landscape display | Excluding the core element | Landscape display scenario |
| Portrait display/Landscape display | Horizontal core element | Horizontal immersive scenario |
| Landscape display/Portrait display | Vertical core element | Vertical immersive scenario |
| Portrait display | Excluding the core element | Portrait non-immersive scenario |

As shown in Table 1, Table 1 includes the device form, the element on the interface 1, and the corresponding scenario. As shown in Table 1, when the device form is the landscape display and the interface 1 does not include the core element, the scenario in which the electronic device 100 is located is the landscape display scenario. When the device form is the portrait display or the landscape display and the interface 1 includes the horizontal core element, the scenario in which the electronic device 100 is located is the horizontal immersive scenario. When the device form is the landscape display or the portrait display and the interface 1 includes the vertical core element, the scenario in which the electronic device 100 is located is the vertical immersive scenario. When the device form is the portrait display and the interface 1 does not include the core element, the scenario in which the electronic device 100 is located is the portrait non-immersive scenario. The horizontal core element is a core element whose aspect ratio is greater than the preset value, and the vertical core element is a core element whose aspect ratio is less than the preset value.

It may be understood that Table 1 is merely an example. In this embodiment of this application, the correspondence that is among a device form, an element on the interface 1, and a scenario and that is stored on the electronic device 100 may include more or less content than that in Table 1, or may be a mapping relationship different from that in the embodiment shown in Table 1. This is not limited in this application.

It should be noted that, in some other embodiments, the electronic device 100 may alternatively store a table of a mapping relationship between a device form and a scenario, or a table of a mapping relationship between an element on the interface 1 and a scenario.

S1103: The electronic device 100 determines a to-be-executed split-screen mode from a mapping relationship between a scenario and a split-screen mode based on the scenario in which the electronic device 100 is located.

The split-screen mode may include any one or more of the following: an up-down split-screen mode, a left-right split-screen mode, and a full-screen and floating window mode.

The electronic device 100 may store the mapping relationship between a scenario and a split-screen mode.

For example, Table 2 shows a table of the mapping relationship between a scenario and a split-screen mode.

**Table 2**

| | |
|---|---|
| Scenario | Split-screen mode |
| Landscape display scenario | Up-down split-screen mode and full-screen and floating window mode |
| Horizontal immersive scenario | Up-down split-screen mode |
| Vertical immersive scenario | Left-right split-screen mode |
| Portrait non-immersive scenario | Left-right split-screen mode and full-screen and floating window mode |
| Non-split-screen scenario | None |
| Folding scenario | Full-screen and floating window scenario |

As shown in Table 2, Table 2 includes the scenarios and the split-screen modes, and each scenario may correspond to one or more split-screen modes. As shown in Table 2, when the scenario is the landscape display scenario, the split-screen mode corresponding to the scenario may include the up-down split-screen mode and the full-screen and floating window mode. When the scenario is the horizontal immersive scenario, the split-screen mode corresponding to the scenario may include the up-down split-screen mode. When the scenario is the vertical immersive scenario, the split-screen mode corresponding to the scenario may include the left-right split-screen mode. When the scenario is the portrait non-immersive scenario, the split-screen mode corresponding to the scenario may include the left-right split-screen mode and the full-screen and floating window mode. When the scenario is the non-split-screen scenario, the scenario has no corresponding split-screen mode. When the scenario is the folding scenario, the split-screen mode corresponding to the scenario may include the full-screen and floating window mode.

It may be understood that Table 2 is merely an example. In this embodiment of this application, the mapping relationship that is between a scenario and a split-screen mode and that is stored on the electronic device 100 may include more or less content than that in Table 2, or may be a mapping relationship different from that in the embodiment shown in Table 2. This is not limited in this application.

After determining the one or more split-screen modes corresponding to the current scenario, the electronic device 100 may determine the to-be-executed split-screen mode from the one or more split-screen modes.

If only one split-screen mode corresponds to the current scenario, the split-screen mode is the to-be-executed split-screen mode.

If a plurality of split-screen modes correspond to the current scenario, in some embodiments, the electronic device 100 may determine, based on preset priorities, a split-screen mode with a highest priority in the plurality of split-screen modes as the to-be-executed split-screen mode. In some other embodiments, the electronic device 100 may alternatively determine the to-be-executed split-screen mode from the plurality of split-screen modes based on a screen splitting operation (for example, a movement direction of the screen splitting operation) of the user. For example, as shown in FIG. 2E, when the electronic device 100 determines that the split-screen mode corresponding to the current scenario (where the current scenario is the landscape display, and the application 1 is a video application) includes the up-down split-screen mode and the full-screen and floating window mode, the electronic device 100 may display the up-down split-screen mode control 241 and the full-screen and floating window mode control 242 shown in FIG. 2E, and determine, based on a sliding operation of the user toward the up-down split-screen mode control 241, that the to-be-executed split-screen mode is the up-down split-screen mode.

In some embodiments, the electronic device 100 may alternatively determine a corresponding split-screen mode based on the current device form and/or the element on the interface 1. In this case, the electronic device 100 may store a mapping relationship between a device form and/or a display interface, and a split-screen mode. For the mapping relationship between a device form and/or the interface 1, and a split-screen mode, refer to content in the embodiments described in Table 1 and Table 2.

In some embodiments, before performing the following step S1104, the electronic device 100 may further display a split-screen mode selection interface and a split-screen mode display interface. One or more split-screen mode controls (for example, an up-down split-screen mode control and a left-right split-screen mode control) may be displayed on the split-screen mode selection interface, to indicate one or more split-screen modes that can be executed in the scenario in which the electronic device 100 is located. A split-screen touch target may be displayed on the split-screen mode display interface, and the split-screen touch target may indicate the to-be-executed split-screen mode to the user. For example, the split-screen mode selection interface may be the split-screen mode selection interface 240 shown in FIG. 2E, or may be the interface in the embodiment shown in FIG. 3B or FIG. 3G. The split-screen mode display interface may be the split-screen mode selection interface 240 shown in FIG. 2F, or may be the interface in the embodiment shown in FIG. 3C or FIG. 3H.

S1104: Based on the to-be-executed split-screen mode, the electronic device 100 displays information about the application 1 in a screen splitting waiting area, and displays one or more application icons, including the icon of the application 2, in an icon display area.

The information about the application 1 may include any one or more of the following: the interface 1, a partial picture or element of the interface 1, an icon of the application 1, a name of the application, or the like.

The screen splitting waiting area may indicate, to the user, that the split-screen applications include the application 1. In some embodiments, an interface of the application 1 may be displayed in the screen splitting waiting area, and the interface may be an interface of the application 1 that is displayed when the electronic device 100 receives a screen splitting operation of the user. In some other embodiments, the application icon of the application 1 may alternatively be displayed in the screen splitting waiting area. Optionally, the application name of the application 1 and the like may be further displayed in the screen splitting waiting area. The icon display area may be used to display a home screen, and one or more application icons may be displayed on the home screen. The one or more application icons include the icon of the application 2. In some embodiments, an application icon may not be displayed in the icon display area, but interfaces (or interface thumbnails) of one or more applications may be displayed in the icon display area, and the interfaces of the one or more applications include an interface of the application 2. The interface of the application 2 may be used to trigger the electronic device 100 to display the interface of the application 2 and the interface 1 of the application 1 in the split-screen manner.

The electronic device 100 may determine a location relationship between the screen splitting waiting area and the icon display area on a to-be-split-screen interface based on the to-be-executed split-screen mode. In some embodiments, when it is determined to execute the up-down split-screen mode, the screen splitting waiting area may be located on an upper part or a lower part of the display. Specifically, the screen splitting waiting area may be displayed on the icon display area in an overlay manner, or the screen splitting waiting area and the icon display area may be vertically arranged on the display. In some embodiments, when it is determined to execute the left-right split-screen mode, the screen splitting waiting area may be located on a left part or a right part of the display. Specifically, the screen splitting waiting area may be displayed on the icon display area in an overlay manner, or the screen splitting waiting area and the icon display area may be horizontally arranged on the display.

For example, when the to-be-executed split-screen mode is the up-down split-screen mode, the to-be-split-screen interface may be the to-be-split-screen interface 260 shown in FIG. 2G, or may be the to-be-split-screen interface 280 shown in FIG. 2I. When the to-be-executed split-screen mode is the left-right split-screen mode, the to-be-split-screen interface may be the to-be-split-screen interface 910 shown in FIG. 9C. When the to-be-executed split-screen mode is the full-screen and floating window mode, the to-be-split-screen interface may be the to-be-split-screen interface 930 shown in FIG. 9F.

The screen splitting waiting area may be displayed on the icon display area in the overlay manner. For example, refer to the to-be-split-screen interface 260 shown in FIG. 2G. In this case, a display location of the screen splitting waiting area on the icon display area may indicate the to-be-executed split-screen mode. In some embodiments, the screen splitting waiting area and the icon display area may alternatively be areas that do not overlap each other on the display. For example, refer to the to-be-split-screen interface 280 shown in FIG. 2I. In this case, relative locations of the screen splitting waiting area and the icon display area may also indicate the to-be-executed split-screen mode.

S1105: The electronic device 100 receives an operation of the user for the icon of the application 2, and in response to the operation, divides the display into an area 1 and an area 2 based on the to-be-executed split-screen mode, displays the interface 2 of the application 1 in the area 1, and displays the interface 3 of the application 2 in the area 2.

The electronic device 100 may determine, in response to the operation of the user for the icon of the application 2, that the split-screen applications include the application 1 and the application 2. The operation of the user for the icon of the application 2 may be a tap operation for the icon of the application 2. For example, when the application 2 is a game application, the operation of the user for the icon of the application 2 may be the tap operation for the game application icon 205 in the embodiment shown in FIG. 2G. When the application 2 is a chat application, the operation of the user for the icon of the application 2 may be the tap operation for the chat application icon 206 in the embodiment shown in FIG. 4A.

In some embodiments, a location relationship between the area 1 and the area 2 on the display is the same as the location relationship between the screen splitting waiting area and the icon display area of the display. If the to-be-executed split-screen mode is the up-down split-screen mode, the area 1 and the area 2 may be respectively an upper split-screen area and a lower split-screen area. For example, the area 1 may be the upper split-screen area 271 in the embodiment shown in FIG. 2H, and the area 2 may be the lower split-screen area 272. If the to-be-executed split-screen mode is the left-right split-screen mode, the area 1 and the area 2 may be respectively a left split-screen area and a right split-screen area. For example, the area 1 may be the left split-screen area 921 in the embodiment shown in FIG. 9D, and the area 2 may be the right split-screen area 922. If the to-be-executed split-screen mode is the full-screen and floating window mode, the area 1 and the area 2 may be respectively a full-screen area and an application floating window area. For example, the area 1 may be the full-screen display area 942 in the embodiment shown in FIG. 9G, and the area 2 may be the application floating window 941.

In some other embodiments, a location relationship between the area 1 and the area 2 on the display may alternatively be different from the location relationship between the screen splitting waiting area and the icon display area of the display. For example, if the application 2 does not support the to-be-executed split-screen mode, the electronic device 100 may re-determine a to-be-executed split-screen mode based on the application 1, the application 2, and the device form of the electronic device 100. The re-determined to-be-executed split-screen mode is different from the original to-be-executed split-screen mode. In this case, a location relationship between the area 1 and the area 2 on the display may alternatively be different from the location relationship between the screen splitting waiting area and the icon display area of the display. For a specific diagram of an interface, refer to related content in the embodiment shown in FIG. 10A and FIG. 10B. Details are not described herein again.

The interface 2 of the application 1 may be an interface the same as the interface 1 of the application 1. In some embodiments, the interface 2 may alternatively be an interface different from the interface 1. For example, when the interface 1 includes the core element, and the core element is not displayed in a full-screen mode, the interface 2 of the application 1 may alternatively be an interface different from the application 1. In this case, when displaying the interface 2 of the application 1 in the split-screen manner, the electronic device 100 may display the core element in the area 1 in the full-screen mode. For a definition of the full-screen mode of the core element, refer to related descriptions before the embodiment shown in FIG. 3K. Details are not described herein again. For example, for an interface diagram in which the interface 1 is different from the interface 2, refer to related descriptions in the embodiments shown in FIG. 3K to FIG. 3M, FIG. 3N to FIG. 3P, or FIG. 3Q to FIG. 3S.

According to the screen splitting method provided in this embodiment of this application, a screen splitting step can be simplified, and screen splitting efficiency can be improved. In addition, one or more executable split-screen modes can be further determined based on the current scenario in which the electronic device 100 is located, so that an appropriate split-screen mode can be matched for the current scenario, and the user can be prevented from selecting a split-screen mode that cannot be executed in the current scenario. This reduces time consumption and improves efficiency. In addition, the screen splitting operation in the screen splitting method provided in this embodiment of this application may be implemented through a single-finger operation, to avoid an accidental touch problem caused by a multi-finger operation.

In some embodiments, when the to-be-executed split-screen mode is determined, during split-screen display, a location relationship (namely, a screen splitting location) between the plurality of split-screen application interfaces may be determined based on a determining order of the split-screen applications. Specifically, in the up-down split-screen mode, the interface 2 of the application 1 may be displayed in the upper split-screen area, and the interface 3 of the application 2 may be displayed in the lower split-screen area. In the left-right split-screen mode, the interface 2 of the application 1 may be displayed in the left split-screen area, and the interface 3 of the application 2 may be displayed in the right split-screen area. In the full-screen and floating window mode, the interface 2 of the application 1 may be displayed in the full-screen area, and the interface 3 of the application 2 may be displayed in the application floating window. It may be understood that, this is merely an example to describe a case in which the screen splitting location may be determined based on the determining order of the split-screen applications. In this embodiment of this application, a mapping relationship between the determining order of the split-screen applications and the screen splitting location may alternatively be a mapping relationship different from that in this embodiment. This is not limited in this application.

In some other embodiments, when the to-be-executed split-screen mode is determined, during split-screen display, the screen splitting location may alternatively be determined based on a type of the split-screen application. For example, the split-screen applications include the application 1 and the application 2. A specific procedure of determining the screen splitting location based on the type of the split-screen application may include the following steps.
1: The electronic device 100 determines identifiers of the split-screen applications (the application 1 and the application 2).
   The electronic device 100 may determine the identifier of the application 1 in step S1102. The electronic device 100 may determine the identifier of the application 2 when receiving an operation of the user for the icon of the application 2.
2: The electronic device 100 determines the type of the split-screen application based on the identifier of the split-screen application.

After determining the identifier of the split-screen application, the electronic device 100 may determine the type of the split-screen application based on the identifier of the split-screen application.

Types of applications may include an interactive type and a browsing type. A type of an application may be determined based on a frequency of interaction between the user and the application. Specifically, if a frequency of interaction between the user and an application is greater than a preset frequency (for example, 5 times/minute, or 10 times/minute), a type of the application is the interactive type. If a frequency of interaction between the user and an application is less than a preset frequency, a type of the application is the browsing type.

The electronic device 100 may store a mapping relationship between an identifier of an application and a type of the application.

For example, Table 3 shows a table of the mapping relationship between an identifier and a type of an application.

**Table 3**

| Identifier of an application | Type of the application |
|---|---|
| Video application | Browsing type |
| Game application | Interactive type |
| Chat application | Interactive type |

As shown in Table 3, the table of the mapping relationship between an identifier and a type of an application may include identifiers of one or more applications and types of the one or more applications, and an identifier of each application has a corresponding type of the application. It can be learned from Table 3 that a type of the video application is the browsing type, a type of the game application is the interactive type, and a type of the chat application is also the interactive type.

It may be understood that Table 3 is merely an example. In this embodiment of this application, the electronic device 100 may store identifiers of more or fewer applications and corresponding types of the applications, or may store a mapping relationship different from that in Table 3. This is not limited in this application.

The electronic device 100 may determine a type of the application 1 based on the identifier of the application 1, and determine a type of the application 2 based on the identifier of the application 2.

3: The electronic device 100 determines a screen splitting location based on application types of the split-screen applications and the to-be-executed split-screen mode.

For example, Table 4 shows a table of a mapping relationship that is among a to-be-executed split-screen mode, a type of a split-screen application, and a screen splitting location and that is stored on the electronic device 100.

**Table 4**

| To-be-executed split-screen mode | Type of a split-screen application | | Screen splitting location | |
|---|---|---|---|---|
| | Type of the application 1 | Type of the application 2 | Interface display area of the application 1 | Interface display area of the area 2 |
| Up-down split-screen mode | Browsing type | Browsing type | Upper split-screen area | Lower split-screen area |
| Up-down split-screen mode | Interactive type | Browsing type | Lower split-screen area | Upper split-screen area |
| Up-down split-screen mode | Browsing type | Interactive type | Upper split-screen area | Lower split-screen area |
| Up-down split-screen mode | Interactive type | Interactive type | Upper split-screen area | Lower split-screen area |
| Left-right split-screen mode | Interactive type | Browsing type | Right split-screen area | Left split-screen area |
| Full-screen and floating window mode | Browsing type | Interactive type | Application floating window | Full-screen area |
| Full-screen and floating window mode | Browsing type | Browsing type | Full-screen area | Application floating window |

As shown in Table 4, the table of the mapping relationship among a to-be-executed split-screen mode, a type of a split-screen application, and a screen splitting location may include the to-be-executed split-screen modes, the types of the split-screen applications, and the corresponding screen splitting locations. It can be learned from Table 4 that, when the to-be-executed split-screen mode is the up-down split-screen mode, the application 1 is a browsing application, and the application 2 is a browsing application, the interface display area of the application 1 is the upper split-screen area on the up-down split-screen interface, and the interface display area of the application 2 is the lower split-screen area. When the to-be-executed split-screen mode is the up-down split-screen mode, the application 1 is an interactive application, and the application 2 is a browsing application, the interface display area of the application 1 is the lower split-screen area on the up-down split-screen interface, and the interface display area of the application 2 is the upper split-screen area. When the to-be-executed split-screen mode is the up-down split-screen mode, the application 1 is a browsing application, and the application 2 is an interactive application, the interface display area of the application 1 is the upper split-screen area on the up-down split-screen interface, and the interface display area of the application 2 is the lower split-screen area. When the to-be-executed split-screen mode is the up-down split-screen mode, the application 1 is an interactive application, and the application 2 is an interactive application, the interface display area of the application 1 is the upper split-screen area on the up-down split-screen interface, and the interface display area of the application 2 is the lower split-screen area. When the to-be-executed split-screen mode is the left-right split-screen mode, the application 1 is an interactive application, and the application 2 is a browsing application, the interface display area of the application 1 is the right split-screen area on the left-right split-screen interface, and the interface display area of the application 2 is the left split-screen area. When the to-be-executed split-screen mode is the full-screen and floating window mode, the application 1 is a browsing application, and the application 2 is an interactive application, the interface display area of the application 1 is the application floating window on the full-screen and floating window interface, and the interface display area of the application 2 is the full-screen area. When the to-be-executed split-screen mode is the full-screen and floating window mode, the application 1 is a browsing application, and the application 2 is a browsing application, the interface display area of the application 1 is the full-screen area on the full-screen and floating window interface, and the interface display area of the application 2 is the application floating window.

It may be understood that the embodiment shown in Table 4 is merely an example. In this embodiment of this application, the electronic device 100 may alternatively store more or less content than that in Table 4, or store a mapping relationship different from that in the embodiment shown in Table 4. This is not limited in this application.

The electronic device 100 may determine the screen splitting location based on the table of the mapping relationship among a to-be-executed split-screen mode, a type of a split-screen application, and a screen splitting location.

For example, when the to-be-executed split-screen mode is determined, for a diagram of an interface for determining the screen splitting location based on the type of the split-screen application by the electronic device 100, refer to related content in the embodiment shown in FIG. 4A to FIG. 4D.

According to the screen splitting method provided in this embodiment of this application, when the to-be-executed split-screen mode is determined, the electronic device 100 may determine the screen splitting location based on a mapping relationship between a type of a split-screen application and a screen splitting location, so that the user operates an interactive application in a split-screen case.

In some embodiments, the electronic device 100 may alternatively determine the to-be-executed split-screen mode based on a screen splitting operation of the user. If it is detected that an input of the user for the electronic device 100 is an up-down screen splitting operation (for example, an operation of sliding upward from a lower edge of the display), it is determined that the split-screen mode is the up-down split-screen mode. If it is detected that an input of the user for the electronic device 100 is a left-right screen splitting operation (for example, an operation of sliding upper leftward from a lower edge of the display), it is determined that the split-screen mode is the left-right split-screen mode. If it is detected that an input of the user for the electronic device 100 is a full-screen and floating window screen splitting operation (for example, an operation of sliding upper rightward from a lower edge of the display), it is determined that the split-screen mode is the full-screen and floating window mode.

For example, the input that is of the user for the electronic device 100 and that is the left-right screen splitting operation may be the operation of sliding upper leftward from the lower edge of the display shown in FIG. 9A, and the input that is of the user for the electronic device 100 and that is the full-screen and floating window screen splitting operation may be the operation of sliding upper rightward from the lower edge of the display shown in FIG. 9E, or the like.

In this way, when detecting a screen splitting operation of the user, the electronic device 100 can quickly determine the split-screen mode based on the screen splitting operation. This simplifies a screen splitting step, and improves efficiency.

In some embodiments, the electronic device 100 displays application interfaces of a plurality of split-screen applications in the split-screen manner. In this case, the electronic device 100 may receive an operation of creating a combination icon by the user (also referred to as a third operation), and in response to the operation, create the combination icon based on the plurality of split-screen applications and the current split-screen mode, and display the created combination icon on the home screen. The electronic device 100 may receive an operation of the user for the combination icon (also referred to as a fourth operation), and display the application interfaces of the plurality of split-screen applications in the split-screen manner in response to the operation. In this case, a split-screen mode used by the electronic device 100 is the same as the split-screen mode used when the combination icon is created, and a location relationship between the application interfaces of the plurality of split-screen applications is the same as a location relationship between the application interfaces of the plurality of split-screen applications when the combination icon is created.

For example, the electronic device 100 displays the interface 2 of the application 1 in the area 1, and displays the interface 3 of the application 2 in the area 2. The electronic device 100 may receive an operation of creating a combination icon by the user, and display a combination icon of the application 1 and the application 2 on the home screen in response to the operation. For a diagram of an interface for creating the combination icon by the electronic device 100, refer to the embodiment shown in FIG. 5A to FIG. 5G. After creating the combined icon, the electronic device 100 may receive a tap operation of the user for the combination icon, and in response to the tap operation, display an interface 4 of the application 1 (also referred to as a fourth interface) in the area 1, and display an interface 5 of the application 2 (also referred to as a fifth interface) in the area 2. The interface 4 may be the same as the interface 2, and the interface 3 may be the same as the interface 5. In some embodiments, the interface 4 may alternatively be different from the interface 2. For example, the interface 4 may be a home page of the application 1. In some embodiments, the interface 5 may alternatively be different from the interface 3. For example, the interface 5 may also be a home page of the application 2. This is not limited in this application.

In some other embodiments, when detecting that a currently displayed split-screen interface meets a specific condition (for example, detecting that display duration of the split-screen interface is greater than preset duration, or detecting that a quantity of times of using the split-screen interface reaches a preset quantity of times), the electronic device 100 may alternatively display the combination icon on the home screen based on the split-screen interface.

According to the screen splitting method provided in this embodiment of this application, a combination icon may be further created based on a split-screen interface, so that the split-screen interface corresponding to the combination icon is quickly displayed.

In some embodiments, when the electronic device 100 displays the application interfaces of the plurality of split-screen applications in the split-screen manner, when detecting that the device form changes, the electronic device 100 may determine whether to switch the split-screen mode. When the electronic device 100 displays the interface 2 of the application 1 in the area 1, and displays the interface 3 of the application 2 in the area 2, after detecting the device form change, the electronic device 100 may display the interface 2 of the application 1 in an area 3, and display the interface 3 of the application 2 in an area 4. In this embodiment of this application, the area 3 may also be referred to as a seventh area, and the area 4 may also be referred to as an eighth area.

For example, a specific procedure in which the electronic device 100 determines, based on the change of the device form, whether to switch the split-screen mode may include the following steps.
1: The electronic device 100 detects that the device form changes, and determines a changed device form.
   The device form may include the landscape display, the portrait display, and the folded state. For specific content on the device form, refer to related descriptions in the embodiments shown in FIG. 1B to FIG. 1D. Details are not described herein again.
   The electronic device 100 may detect whether the device form changes. For example, the electronic device 100 may detect, by using a device like a gyroscope sensor and/or an acceleration sensor, that the device form of the electronic device 100 changes, and determine the changed device form.
2: The electronic device 100 determines a split-screen mode 2 based on a split-screen mode 1 executed before the change and the changed device form.

For example, Table 5 shows a table of a mapping relationship that is among a split-screen mode before a change, a changed device form, and an executable split-screen mode and that is stored on the electronic device 100.

**Table 5**

| Unchanged device form | Split-screen mode before a change | Changed device form | Executable split-screen mode |
|---|---|---|---|
| Landscape display | Up-down split-screen mode | Portrait display | Up-down split-screen mode and full-screen and floating window mode |
| Portrait display | Up-down split-screen mode | Folded state | Full-screen and floating window mode |
| Landscape display | Left-right split-screen mode | Folded state | Up-down split-screen mode |

As shown in Table 5, the table of the mapping relationship among a split-screen mode before a change, a changed device form, and an executable split-screen mode may include the unchanged device forms, the split-screen modes before the change, the changed device forms, and the corresponding executable split-screen modes. It can be learned from Table 5 that, when the electronic device 100 is switched from the landscape display to the portrait display, and the split-screen mode before the change is the up-down split-screen mode, the split-screen modes that can be executed after the change may include the up-down split-screen mode and the full-screen and floating window mode. When the electronic device 100 is switched from the portrait display to the folded state, and the split-screen mode before the change is the up-down split-screen mode, the split-screen mode that can be executed after the change may include the full-screen and floating window mode. When the electronic device 100 is switched from the landscape display to the folded state, and the split-screen mode before the change is the left-right split-screen mode, the split-screen mode that can be executed after the change may include the up-down split-screen mode.

It may be understood that Table 5 is merely an example. In this embodiment of this application, the table of the mapping relationship that is between a split-screen mode before a change, a changed device form, and an executable split-screen mode and that is stored on the electronic device 100 may further include more, less, or different content than or from that in the embodiment shown in Table 5. This is not limited in this application.

In some embodiments, the table of the mapping relationship between a split-screen mode before a change, a changed device form, and an executable split-screen mode may further include identifiers of split-screen applications (the application 1 and the application 2). In other words, the electronic device 100 may further determine the executable split-screen mode based on the split-screen application.

The electronic device 100 may determine, based on the table of the mapping relationship between a split-screen mode before a change, a changed device form, and an executable split-screen mode, one or more executable split-screen modes after the change of the device form, and determine the split-screen mode 2 from the one or more executable split-screen modes.

It should be noted that when the executable split-screen modes include a plurality of split-screen modes, the electronic device 100 may determine the split-screen mode 2 based on preset priorities. For example, the priorities of the split-screen modes in descending order may be: the up-down split-screen mode, the left-right split-screen mode, the full-screen and floating window mode, and the like. In some embodiments, the priority may alternatively be determined based on a split-screen mode (an original split-screen mode) before the change of the device form. For example, the original split-screen mode is the left-right split-screen mode. The priorities of the split-screen modes in descending order may alternatively be: the left-right split-screen mode, the up-down split-screen mode, the full-screen and floating window mode, and the like. In some other embodiments, the priority of the split-screen mode may alternatively be determined based on the changed device form. For example, in the folded state, the priorities of the split-screen modes in descending order may be: the up-down split-screen mode, the full-screen and floating window mode, the left-right split-screen mode, and the like. This embodiment herein is merely an example. A specific sequence of priorities in different device forms is not limited herein in this application.

For example, for a diagram of an interface for determining, by the electronic device 100 based on the change of the device form, whether to switch the split-screen mode, refer to the embodiment shown in FIG. 6A to FIG. 6I.

According to the screen splitting method provided in this embodiment of this application, when detecting that the device form changes, the electronic device 100 may determine, based on the changed device form and the preset priorities, the split-screen mode after the change of the form, so that the split-screen mode that better matches the current device form can be provided for the user, and good user experience is provided for the user.

In some embodiments, the electronic device 100 may receive an operation of the user for a specific control that has an interface layout change function on the split-screen interface, and switch the split-screen mode in response to the operation. Specifically, the electronic device 100 may alternatively determine a switched split-screen mode based on a preset mapping relationship between a specific control and a split-screen mode, or determine the switched split-screen mode based on a mapping relationship between a change of an interface layout by the specific control and a split-screen mode, or the like.

For example, the operation of the user for the specific control on the split-screen interface may be the tap operation for the full-screen control 704 in the embodiment shown in FIG. 7A, or may be the tap operation for the full-screen exit control 713 in the embodiment shown in FIG. 7B, or the like. For a diagram of an interface on which the electronic device 100 receives the operation of the user for the specific control on the split-screen interface, and switches the split-screen mode in response to the operation, refer to the embodiment shown in FIG. 7A to FIG. 7D.

According to the screen splitting method provided in this application, the electronic device 100 may switch the split-screen mode when receiving an operation of the user for a specific control in a split-screen application, to provide screen splitting effect that is more suitable for a current scenario for the user, and provide better experience for the user.

In some embodiments, the split-screen applications may alternatively include three or more applications. In this case, the electronic device 100 may alternatively receive a screen splitting operation of the user, and in response to the screen splitting operation, determine the to-be-executed split-screen mode based on the scenario in which the electronic device 100 is currently located, and after determining all split-screen applications, display a split-screen interface based on the to-be-executed split-screen mode. The split-screen interface may include a plurality of areas, and each area corresponds to one of the split-screen applications, and is used to display an interface of the split-screen application.

For example, the split-screen applications include three applications. For a process in which the electronic device 100 displays a three-split-screen interface based on the screen splitting operation of the user, refer to the embodiment shown in FIG. 8A to FIG. 8E.

It should be noted that, when the split-screen applications include three or more applications, for a manner in which the electronic device 100 determines the to-be-executed split-screen mode, a manner in which the electronic device 100 determines a location relationship between the plurality of areas on the split-screen interface, a manner in which the electronic device 100 switches the split-screen mode when detecting that the device form changes, and the like, refer to related descriptions in the foregoing embodiments. Details are not described herein again.

According to the screen splitting method provided in this embodiment of this application, screen splitting may be further performed on the three or more split-screen applications. This provides richer screen splitting effect to meet different requirements in different scenarios.

The following describes functional modules of the electronic device 100 provided in an embodiment of this application.

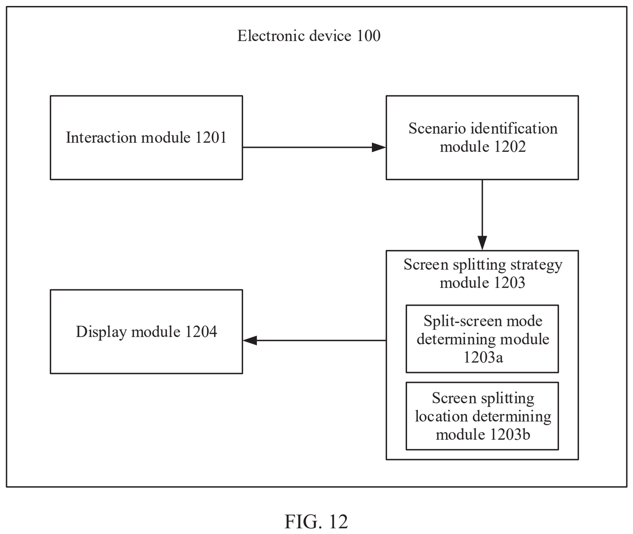

FIG. 12 is a diagram of functional modules of the electronic device 100 according to an embodiment of this application.

As shown in FIG. 12, the electronic device 100 may include an interaction module 1201, a scenario identification module 1202, a screen splitting strategy module 1203, and a display module 1204.

The interaction module 1201 is configured to receive an operation of a user for the electronic device 100, for example, a screen splitting operation, a tap operation for an application icon, or an operation of creating a combination icon. The interaction module 1201 may send an identification instruction to the scenario identification module 1202 in response to the screen splitting operation of the user, where the identification instruction indicates the scenario identification module 1202 to determine a scenario in which the electronic device 100 is located.

When an interface 1 of an application 1 is displayed, the scenario identification module 1202 may receive the identification instruction sent by the interaction module 1201, and in response to the identification instruction, determine a device form of the electronic device 100, and/or determine a display form of a core element on the interface 1 of the application 1, and determine the current scenario based on the current device form and/or the display form of the core element on the interface 1. The scenario may include one or more of scenarios such as a landscape display scenario, a horizontal immersive scenario, a vertical immersive scenario, and a portrait non-immersive scenario. The scenario identification module 1202 may send the current scenario to the screen splitting strategy module 1203. In some embodiments, the scenario identification module 1202 may further detect a change of the device form of the electronic device 100, and send a changed device form to the screen splitting strategy module 1203.

The screen splitting strategy module 1203 may include a split-screen mode determining module 1203a and a screen splitting location determining module 1203b. The split-screen mode determining module 1203a may store a mapping relationship between a scenario and a split-screen mode. After receiving the scenario in which the electronic device 100 is currently located, the split-screen mode determining module 1203a may determine, based on the current scenario, a to-be-executed split-screen mode from the mapping relationship between a scenario and a split-screen mode. After determining the to-be-executed split-screen mode, the screen splitting location determining module 1203b may determine a screen splitting location (namely, a location relationship between interfaces of split-screen applications) based on a determining order of the split-screen applications, or may obtain a type of a split-screen application, and determine a screen splitting location based on a mapping relationship that is between a type of a split-screen application and a screen splitting location and that is stored on the screen splitting location determining module 1203b. In some embodiments, after receiving the changed device form sent by the scenario identification module 1202, the screen splitting strategy module 1203 may alternatively determine a split-screen mode after the change of the device form by using the split-screen mode determining module 1203a, and determine a screen splitting location after the change of the device form by using the screen splitting location determining module 1203b.

After determining the to-be-executed split-screen mode and screen splitting location, the screen splitting strategy module 1203 may send the to-be-executed split-screen mode and screen splitting location to the display module 1204.

The display module 1204 may display a split-screen interface based on the to-be-executed split-screen mode and the screen splitting that are sent by the screen splitting strategy module 1203.

It may be understood that the embodiment shown in FIG. 12 is merely an example. In this embodiment of this application, the electronic device 100 may alternatively include more or fewer modules than those in the embodiment shown in FIG. 12, or include functional modules different from those in the embodiment shown in FIG. 12. This is not limited in this application.

Implementations of this application may be randomly combined to achieve different technical effect.

All or some of the foregoing embodiments may be implemented by using software, hardware, firmware, or any combination thereof. When software is used to implement embodiments, all or some of embodiments may be implemented in a form of computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored on a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. A computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state disk, SSD)), or the like.

A person of ordinary skill in the art may understand that all or some of the processes of the methods in embodiments may be implemented by a computer program instructing related hardware. The program may be stored on a computer-readable storage medium. When the program runs, the processes of the methods in embodiments may be performed. The foregoing storage medium includes any medium that can store program code, such as a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made in accordance with the disclosure of the present invention shall be included in the protection scope of the present invention.

## Claims

1. A screen splitting method, applied to an electronic device, and comprising:
displaying a first interface of a first application;
receiving a first operation of a user for the first interface;
in response to the first operation, displaying information about the first application in a first area of a display, and displaying icons of a plurality of applications in a second area of the display, wherein the icons of the plurality of applications comprise an icon of a second application, and the information about the first application comprises any one or more of the following: the first interface, a partial picture of the first interface, an icon of the first application, and a name of the first application;
receiving a second operation of the user for the icon of the second application; and
in response to the second operation, displaying a second interface of the first application in a third area of the display, and displaying a third interface of the second application in a fourth area of the display, wherein
if the first interface comprises a first element, and a display form of the first element is horizontal display, the third area and the fourth area are vertically arranged on the display, and the first element comprises any one or more of the following: a video, a game, a conference, a slide, image shooting, and a video call.

2. The method according to claim 1, wherein a basis for determining that the display form of the first element is the horizontal display is any one of the following:
a ratio of a horizontal length to a vertical length of the first element is greater than a preset value, the first application is an application in a plurality of preset applications, black borders or blank areas are displayed on an upper side and a lower side of the first element, or the first interface invokes a landscape interface for display.

3. The method according to claim 1 or 2, wherein the method further comprises:
if the first interface comprises the first element, and the display form of the first element is the horizontal display, displaying an up-down split-screen mode control on the display in response to the first operation.

4. The method according to any one of claims 1 to 3, wherein
if the first interface comprises the first element, and the display form of the first element is the horizontal display, the first area is located on an upper part or a lower part of the display.

5. The method according to any one of claims 1 to 4, wherein the method further comprises:
if the first interface comprises the first element, and the display form of the first element is vertical display, the third area and the fourth area are horizontally arranged on the display.

6. The method according to claim 5, wherein a basis for determining that the display form of the first element is the vertical display is any one of the following:
the ratio of the horizontal length to the vertical length of the first element is less than the preset value, the first application is an application in the plurality of preset applications, black borders or blank areas are displayed on a left side and a right side of the first element, or the first interface invokes a portrait interface for display.

7. The method according to any one of claims 1 to 6, wherein the method further comprises:
if the first interface comprises the first element, and the display form of the first element is the vertical display, displaying a left-right split-screen mode control on the display in response to the first operation.

8. The method according to any one of claims 1 to 7, wherein
if the first interface comprises the first element, and the display form of the first element is the vertical display, the first area is located on a left part or a right part of the display.

9. The method according to any one of claims 1 to 8, wherein the method further comprises: displaying an application small window on the display in response to the first operation, wherein the first interface is displayed in the application small window, and the application small window moves along a track of the first operation on the display.

10. The method according to any one of claims 1 to 9, wherein the method further comprises:
if the third area and the fourth area are vertically arranged on the display, the first application is an interactive application, and the second application is a browsing application, the third area is below the fourth area.

11. The method according to any one of claims 1 to 10, wherein the method further comprises:
if the third area and the fourth area are vertically arranged on the display, the first application is a browsing application, and the second application is an interactive application, the third area is above the fourth area.

12. The method according to any one of claims 1 to 11, wherein the method further comprises:
if the third area and the fourth area are vertically arranged on the display, and a type of the first application is the same as a type of the second application, the third area is above the fourth area.

13. The method according to any one of claims 1 to 12, wherein the method further comprises:
if the first area is located on the upper part or the lower part of the display, and the second application does not support up-down screen splitting, the third area and the fourth area are horizontally arranged on the display.

14. The method according to any one of claims 1 to 12, wherein the method further comprises:
if the first area is located on the upper part or the lower part of the display, and the second application does not support up-down screen splitting, the third area is an entire area of the display, and the fourth area is an area in which a floating window is located.

15. The method according to any one of claims 1 to 14, wherein the method further comprises:
if the first area is located on the left part or the right part of the display, and the second application does not support left-right screen splitting, the third area and the fourth area are vertically arranged on the display.

16. The method according to any one of claims 1 to 14, wherein the method further comprises:
if the first area is located on the left part or the right part of the display, and the second application does not support left-right screen splitting, the third area is the entire area of the display, and the fourth area is the area in which the floating window is located.

17. The method according to any one of claims 1 to 16, wherein the second interface is the same as the first interface.

18. The method according to any one of claims 1 to 16, wherein the method further comprises:
if the first element on the first interface is not displayed in a full-screen mode, displaying the first element on the second interface in the third area in the full-screen mode.

19. The method according to any one of claims 1 to 18, wherein after displaying the second interface of the first application in the third area of the display, the method further comprises:
displaying a home screen in response to a third operation of the user, and displaying a first combination icon on the home screen; and
in response to a fourth operation for the first combination icon, displaying a fourth interface of the first application in the third area of the display, and displaying a fifth interface of the second application in the fourth area of the display.

20. The method according to claim 19, wherein the fourth interface is the same as the second interface, and the fifth interface is the same as the third interface.

21. The method according to claim 19, wherein the fourth interface is different from the second interface, and/or the fifth interface is different from the third interface.

22. An electronic device, comprising one or more processors, one or more memories, and one or more displays, wherein the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 21.

23. A computer-readable storage medium, comprising computer instructions, wherein when the computer instructions are run on an electronic device, the electronic device is enabled to perform the method according to any one of claims 1 to 21.
